# EUROPEAN PATENT APPLICATION

(11) **EP 4 718 827 A1**
(43) Date of publication of application: **01.04.2026**
(21) Application number: 24855510.4
(22) Date of filing: 09.07.2024
(51) Int. Cl.: H04M 1/72403

(54) **PROCESSING METHOD AND ELECTRONIC DEVICE**

(30) Priority: 23.08.2023 CN 202311070336
(71) Applicant: Huawei Technologies Co., Ltd., Shenzhen, Guangdong 518129 (CN)
(72) Inventor: LIU, Min, Shenzhen, Guangdong 518129 (CN); XIONG, Zhangliang, Shenzhen, Guangdong 518129 (CN); DING, Ning, Shenzhen, Guangdong 518129 (CN); ZHANG, Teng, Shenzhen, Guangdong 518129 (CN); MAO, Feng, Shenzhen, Guangdong 518129 (CN)
(74) Representative: Isarpatent
(86) International application number: PCT/CN2024/104443
(87) International publication number: WO 2025/039781

(57) **Abstract**

Embodiments of this application provide a processing method and an electronic device, and relate to the field of terminal device technologies. The method includes: A user may perform an operation on a movable control of interest, and the electronic device may generate, in response to the operation, a first service widget with structured first widget information based on control content of the control in which the user is interested. Because the user knows a role and a function of the control and the displayed content of the control in advance, before the first service widget related to the control is generated, the user can predict the function and the role of the first service widget, so that the generated service widget meets a user requirement.

## Description

This application claims priority to Chinese Patent Application No. 202311070336.0, filed with the China National Intellectual Property Administration on August 23, 2023 and entitled "PROCESSING METHOD AND ELECTRONIC DEVICE", which is incorporated herein by reference in its entirety.

### TECHNICAL FIELD

Embodiments of this application relate to the field of terminal device technologies, and in particular, to a processing method and an electronic device.

### BACKGROUND

With the development of electronic devices, the electronic devices may provide service widgets of applications, so that users can conveniently use the applications.

Currently, an electronic device provides a service widget for a user in a manner of providing a preset service widget, and the user may select, from the preset service widget, a service widget that needs to be added. However, a function of the preset service widget is fixed, and before the service widget is added and used by the user, a role and a function of the service widget are unpredictable.

As a result, a service widget generated in the conventional technology usually does not meet a user requirement.

### SUMMARY

To resolve the foregoing technical problem, this application provides a processing method and an electronic device. In the method, the electronic device may generate a related service widget by using a movable control of interest operated by a user, so that the generated service widget meets a user requirement.

According to a first aspect, an embodiment of this application provides a processing method, applied to an electronic device. The method includes: in response to a received first user operation on a first control, generating a first service widget based on the first control, where the first control is a movable control, and the first service widget includes first widget information related to control content of the first control; and displaying the first service widget.

The first user operation may include but is not limited to a drag operation, a press operation, a slide operation, a pull-down operation, and the like.

The control content of the first control may include information displayed on the first control and/or information that is related to the first control and that is not displayed.

For example, if the first control is a notification message, the control content may include the information displayed on the first control, for example, message content of the notification message, an application to which the notification message belongs, and reminder time of the notification message.

For another example, if the first control is a floating bubble, the control content may include interface content of an application interface minimized to the floating bubble, and the interface content is not displayed on the floating bubble. In this case, the interface content herein is the information that is related to the first control and that is not displayed.

For example, the electronic device is a mobile phone. In an example, when generating the first service widget based on the first control, the mobile phone may determine service information based on the control content of the first control, and then generate the first service widget based on the service information. The first widget information included in the first service widget may be related to the service information.

In an example, when the mobile phone displays the generated first service widget, the mobile phone may temporarily display the first service widget on a display interface when a user operates the first control through the first user operation. For example, the first service widget is displayed for a period of time and then displaying is canceled.

In an example, when the mobile phone displays the generated first service widget, the mobile phone may display the first service widget on a home screen interface (which is also expressed as being pinned to a home screen), so that the user can view the first service widget when browsing the home screen interface next time.

In embodiments of this application, the user may perform an operation on a movable control of interest, and the electronic device may generate, in response to the operation, the first service widget with the structured first widget information based on control content of the control in which the user is interested. Because the user knows a role and a function of the control and the displayed content of the control in advance, before the first service widget related to the control is generated, the user can predict the function and the role of the first service widget. In this way, the user performs an operation on a control in which the user is interested, so that the mobile phone can generate a service widget related to the control. The service widget generated in this manner is more likely to meet a widget adding requirement of the user. In addition, the user may browse widget information in the service widget, to achieve an effect that the user browses control content related to the control. In this case, in comparison with the control content, the widget information displayed in the service widget is more intuitive and concise, and the information is more readable. In addition, regardless of whether a related service widget is preset in an application or a system, the electronic device may generate a service widget related to a movable control provided that the user performs an operation on the movable control, so that diversity of the service widget is improved. In addition, in a process of adding the service widget, the user only needs to perform an operation on a related control, so that a process of generating and adding the service widget is simplified, and complexity is reduced.

According to the first aspect, displaying the first service widget includes: refreshing the displayed first control to the first service widget.

In embodiments of this application, the electronic device may convert the movable control operated by the user into the corresponding first service widget, so that the control content of the movable control may be displayed through the first service widget. In comparison with the control content of the movable control, widget information of the first service widget is more structured, so that the user can browse the control content of the first control by browsing the first service widget, and readability of the first widget information is higher than readability of the control content.

According to the first aspect or any one of the foregoing implementations of the first aspect, the method further includes: displaying the first service widget on the home screen interface in response to a received second user operation on the first service widget.

This implementation may be a detailed implementation of displaying the first service widget in the first aspect, or may be an additional implementation after displaying the first service widget in the first aspect. This is not limited herein.

For example, if the first service widget generated by the mobile phone is temporarily displayed on a corresponding interface, the user may continue to perform the second user operation on the temporarily displayed first service widget. An operation type of the second user operation is not limited, and may be a pull-down operation, a slide operation, a drag operation, or the like. The mobile phone may pin, in response to the second user operation, the first service widget to the home screen for display. In this way, an operation of pinning the service widget to the home screen for display is simpler, faster, and smoother.

According to the first aspect or any one of the foregoing implementations of the first aspect, the first widget information is further related to at least one of a user profile and a user habit.

For example, if the first control is a floating window of a video play interface of a video application, the user profile may be a user age, a user gender, a type of a video that the user likes to watch, and the like, the user habit may be information about a video that the user recently collects or recently browses in the video application, and scenario information may include information about several currently popular movies in the video application.

In this embodiment, when generating the first service widget for the first control operated by the user, the electronic device may not only generate the first widget information of the first service widget by referring to the control content of the first control, but also generate the first widget information of the first service widget with reference to the user profile, the scenario information, the user habit, and the like, to generate the first service widget with the first widget information, so that the generated service widget can be not only related to the control content of the control operated by the user, but also related to the user profile, a scenario, the user habit, and the like.

According to the first aspect or any one of the foregoing implementations of the first aspect, a control type of the first control includes one of the following: a notification message, a floating control, and a relay station control.

The notification message may be a notification message currently displayed by the mobile phone, or may be a notification message displayed on a notification bar interface, or may be a notification message displayed on a lock screen interface.

The floating control may be a floating window, a floating bubble, or the like. The floating bubble is a minimized floating window.

The relay station control may be a control placed in a relay station.

Any type of the foregoing control is a movable control.

According to the first aspect or any one of the foregoing implementations of the first aspect, the control type of the first control is the notification message, and the first user operation includes at least one of the following: a pull-down operation, a touch and hold operation, and a slide operation.

In embodiments of this application, the user may perform at least one operation like the pull-down operation, the touch and hold operation, or the slide operation on the notification message, so that the mobile phone may generate, for the notification message operated by the user, a service widget related to the notification message.

According to the first aspect or any one of the foregoing implementations of the first aspect, displaying the first service widget includes: displaying the first service widget in a floating manner above a second control, where a control type of the second control is the same as the control type of the first control.

An example in which the first control is a notification message is used for description, and another type of first control is also applicable to the method in this implementation.

For example, a plurality of notification messages are displayed on the notification bar interface. The user may perform a touch and hold operation on a notification message in which the user is interested. The mobile phone may generate a service widget related to the notification message, and may display the service widget in a floating manner above another notification message that does not receive a touch and hold operation. In this way, when the user selects, from a plurality of controls of a same type, the first control in which the user is interested to request to generate the service widget, the mobile phone may display the generated service widget in a floating manner above another control in which the user is not interested, to highlight information in which the user is interested.

According to the first aspect or any one of the foregoing implementations of the first aspect, the control type of the first control is the floating control or the relay station control, the first user operation includes an operation of dragging the first control to a first location on the home screen interface, and the method further includes: displaying a first area on the home screen interface in response to the first user operation, where the first area is an area in which the first service widget is to be displayed, and the first area includes the first location. Displaying the first service widget includes: displaying the first service widget in the first area, and canceling display of the first area.

For example, the first area may be displayed by using a dashed box or an area of a specific color. This is not limited herein.

In embodiments of this application, after the user drags the floating control or the relay station control to a location on the home screen interface, the electronic device may display, on the home screen interface, an area that can accommodate the corresponding service widget and that includes the location. Then, the electronic device may display, in the first area, the generated first service widget related to the floating control or the relay station control, and cancel display of the first area, so that the generated service widget is displayed at a location in which the user is interested on the home screen interface.

According to the first aspect or any one of the foregoing implementations of the first aspect, after displaying the first service widget, the method further includes: switching a display interface to a first interface in response to a received third user operation, where the first interface is an application interface in which the first user operation performed on the first control is received.

Similar to the first user operation, a specific operation of the third user operation is not limited in this application.

For example, the third user operation may be an operation on the displayed first service widget (for example, touching and holding a control on the widget), or a touch input on a screen of the mobile phone, or an input on a physical button, or a user operation that requests to perform source tracing on the first service widget, for example, a voice input or a text input of the user.

In response to the third user operation, the electronic device may switch the display interface of the electronic device to an application interface in which the user previously performs the first user operation on the first control to generate the first service widget, so that the electronic device can locate the display interface in which the first service widget is generated previously and a corresponding location in the interface, to implement source tracing on the first service widget.

According to the first aspect or any one of the foregoing implementations of the first aspect, the method further includes: in response to a received fourth user operation, separately generating respective second service widgets based on a plurality of third controls, where the fourth user operation includes an operation performed on the plurality of third controls of a same control type, at least one of the third controls is a movable control, and each second service widget includes second widget information related to control content of a corresponding third control; and displaying the plurality of second service widgets.

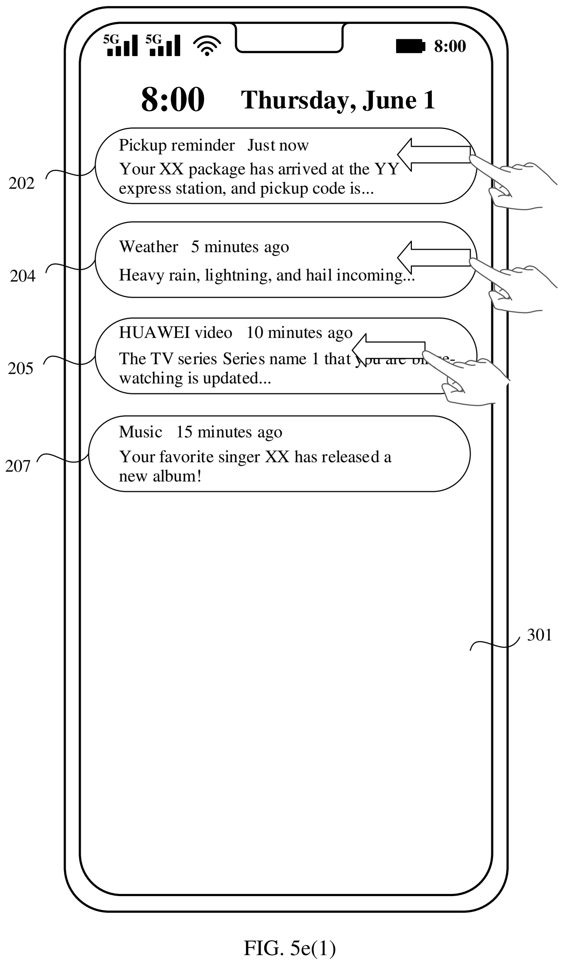

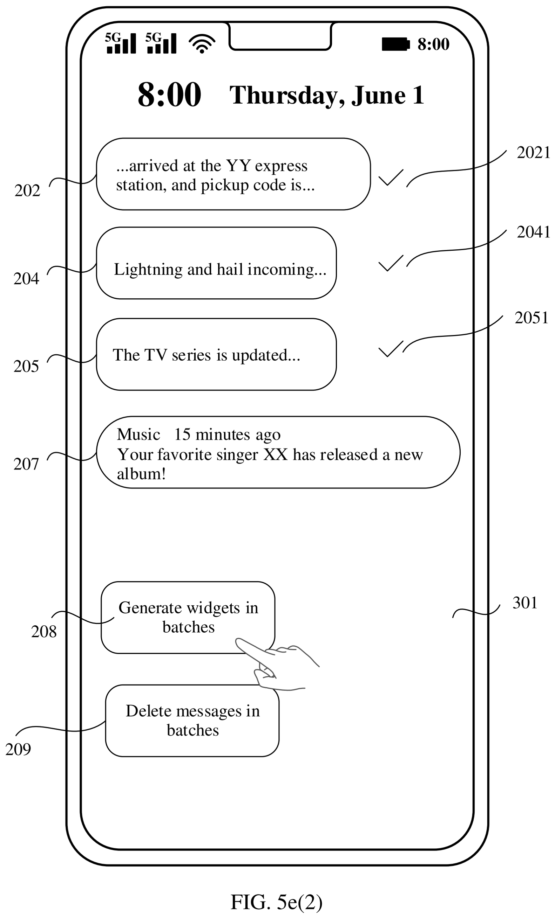

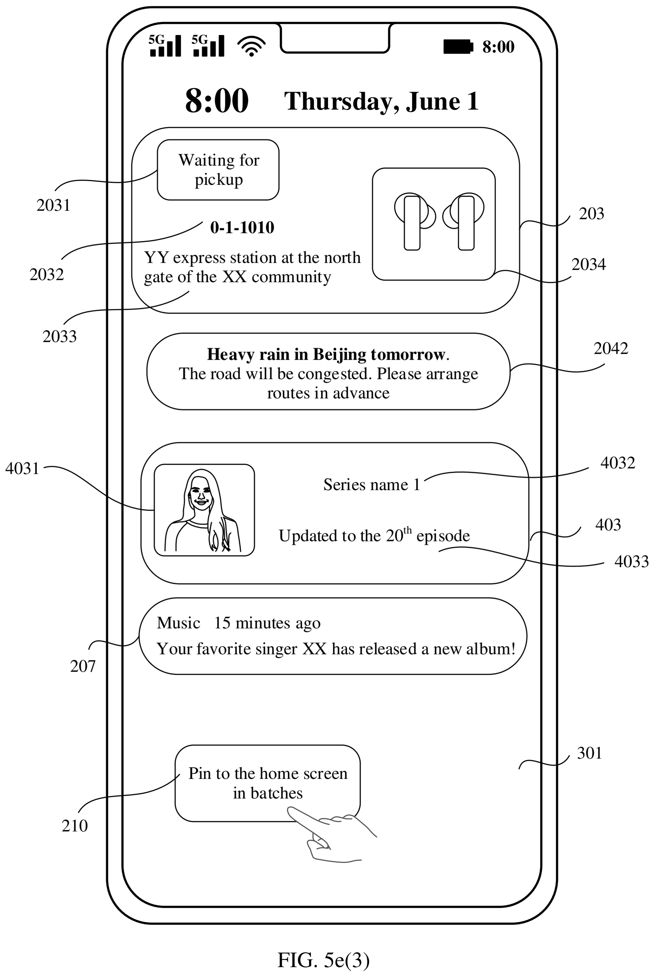

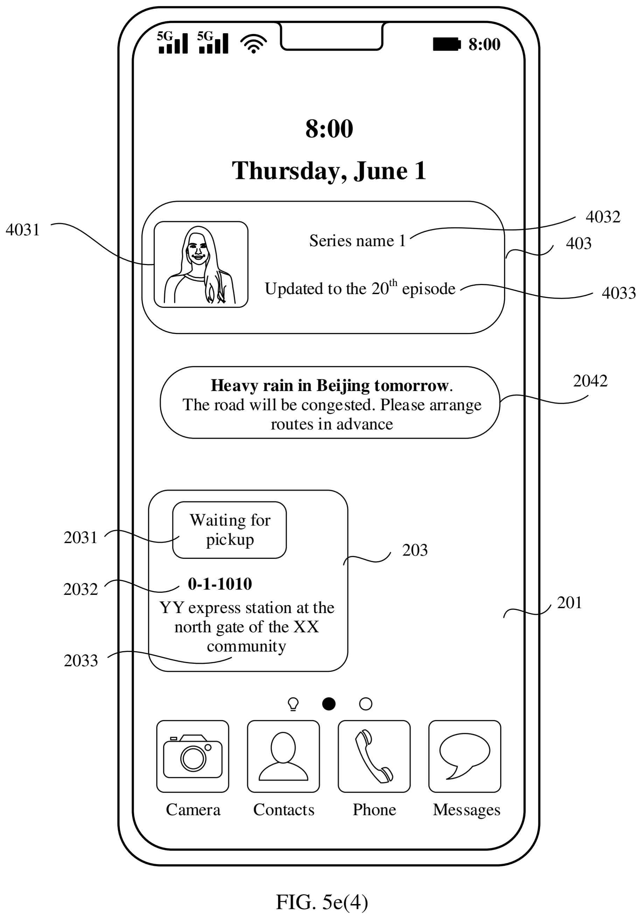

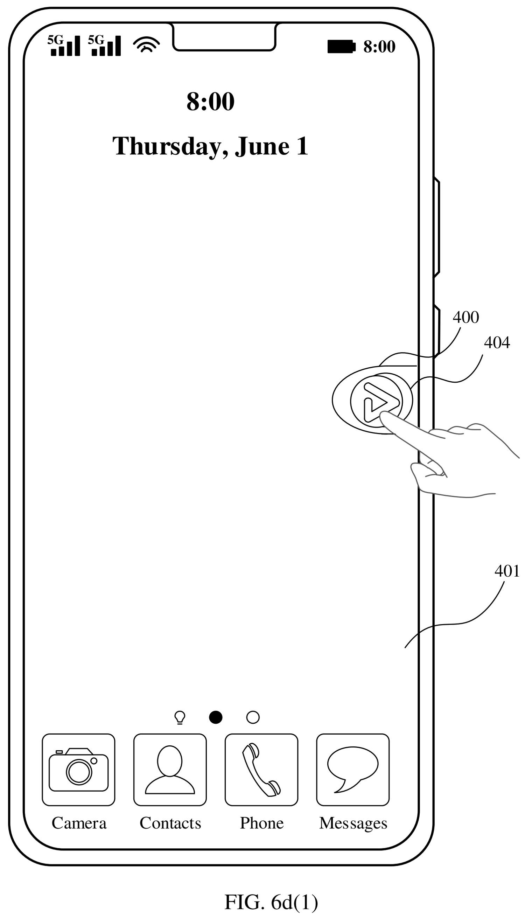

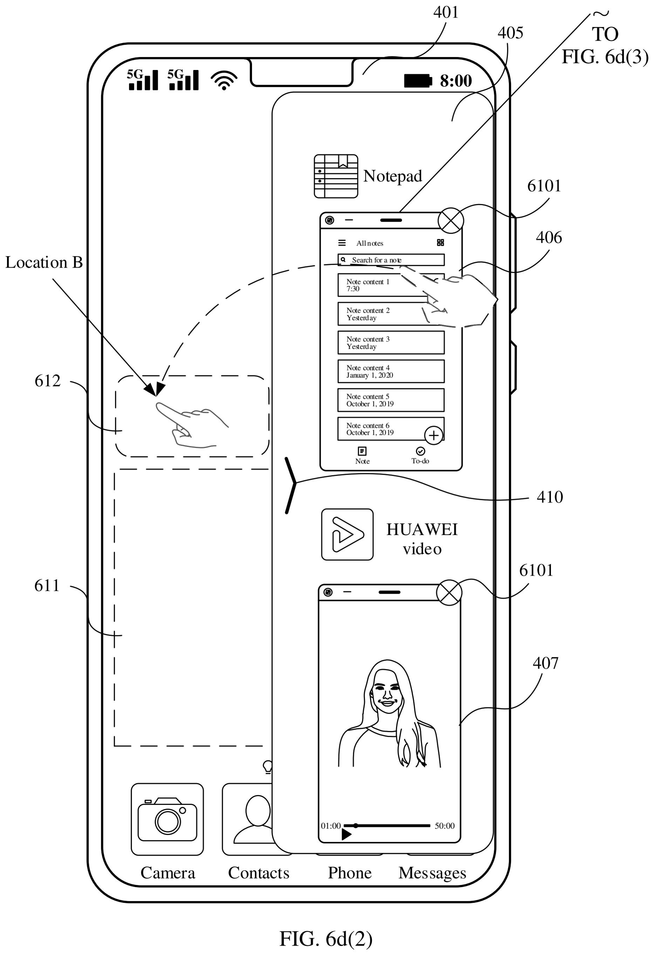

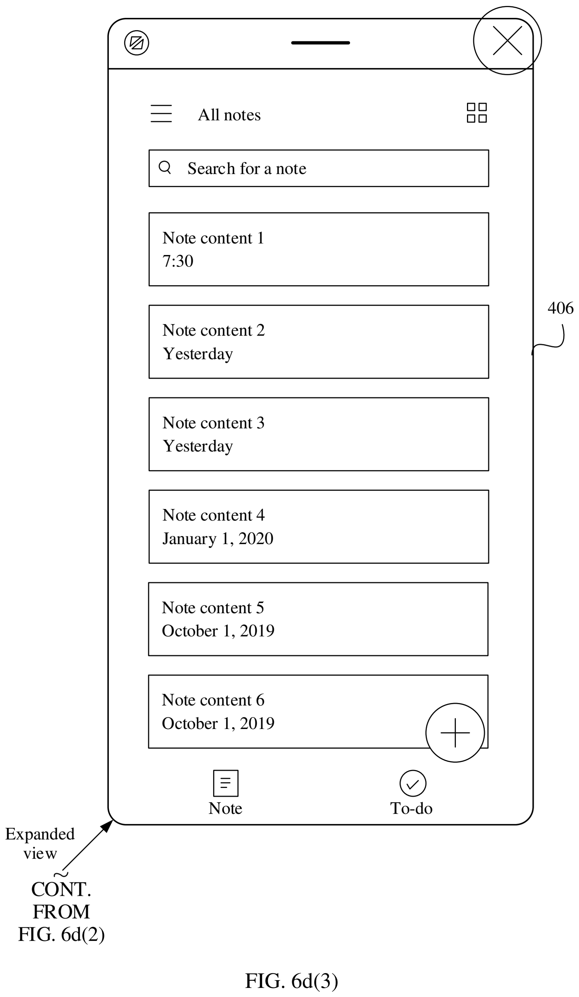

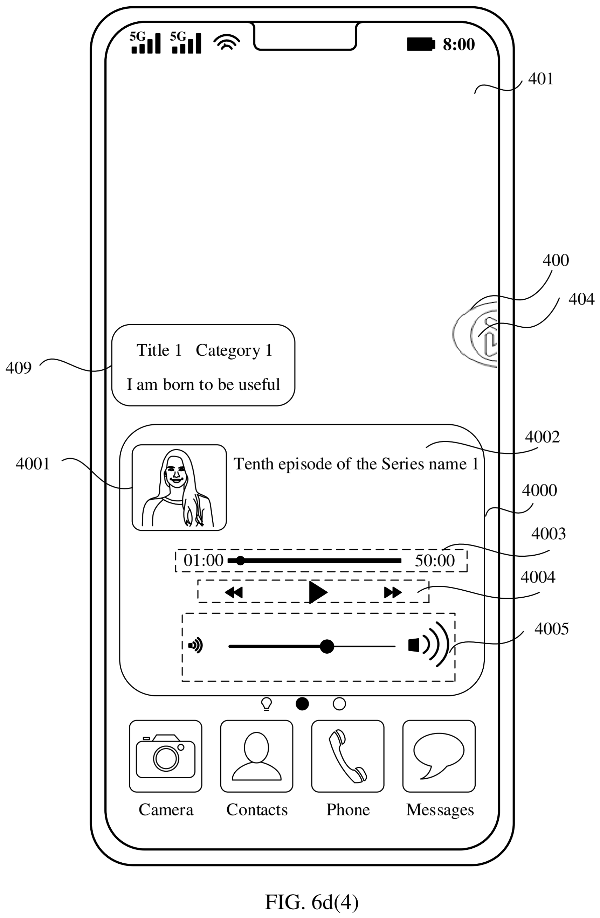

In this embodiment, the user may select the plurality of third controls, where at least one of the third controls is a movable control. The mobile phone may generate the respective second service widgets in batches for the plurality of third controls selected by the user. For example, in FIG. 5e(1) to FIG. 5e(4), a plurality of notification messages are selected, to generate respective service widgets in batches for the selected notification messages. Alternatively, the user may select one third control from a plurality of controls of a same type, to generate respective service widgets for the third control and a third control related to the third control. For example, in an interface shown in FIG. 6d (2), the user drags a control 406, and the mobile phone may convert both the control 406 and a control 407 into corresponding service widgets. In this way, the user can perform one operation on a plurality of controls of a same type to generate, in batches, respective service widgets related to the plurality of controls of the same type for the plurality of controls.

Other implementations of each second service widget are the same as the implementation principles of the foregoing implementations of the single first service widget. Details are not described herein again.

According to the first aspect or any one of the foregoing implementations of the first aspect, the method further includes: in response to a received fifth user operation on the display interface, generating a third service widget based on a context of the display interface, where the third service widget includes third widget information related to the context; and displaying the third service widget.

In embodiments of this application, the mobile phone may generate a corresponding service widget based on a context of a display interface of a user operation. Widget information of the service widget is related to the context. A manner of displaying the third service widget may be temporarily displaying or pinning to the home screen for display. This is not limited.

According to the first aspect or any one of the foregoing implementations of the first aspect, the context of the display interface includes at least one of the following: a session message, a selected text segment indicated by the fifth user operation, an application interface, an image, a video, and the like.

The image may be a screenshot, a picture in a session, a picture in a gallery, or the like. This is not limited.

In embodiments of this application, the user may perform the fifth user operation on any object like the session message, the text segment, the application interface, the image, or the video, so that the mobile phone may generate a third service widget related to the object. An operation type of the fifth user operation is not limited, and may be a touch input, a voice input, a text input, or the like.

According to the first aspect or any one of the foregoing implementations of the first aspect, the third widget information is further related to at least one of the user profile and the user habit.

In this embodiment, when generating the third service widget based on the context of the display interface of the user operation, the electronic device may refer to the context of the display interface, and may generate the third widget information of the third service widget with reference to the user profile, scenario information, the user habit, or the like, to generate the third service widget with the third widget information, so that the generated service widget is related to the context of the display interface, and is related to the user profile, the scenario, the user habit, or the like.

According to the first aspect or any one of the foregoing implementations of the first aspect, the method further includes: generating a fourth service widget in response to a received first user input, where the first user input includes information indicating to search for a same object in a plurality of first applications, the fourth service widget includes fourth widget information related to a plurality of first search results, and the plurality of first search results are respective search results of the plurality of first applications for the same object; and displaying the fourth service widget.

The first user input may be a voice input or a text input.

In embodiments of this application, the mobile phone may generate a fourth service widget based on a user input that the user searches for a same object in a plurality of applications. The fourth service widget is a comparison widget, and the comparison widget may include information related to respective search results of the plurality of applications for the same object, for example, comparison information of the search results, so that the comparison widget can be generated based on a user requirement.

According to the first aspect or any one of the foregoing implementations of the first aspect, after displaying the fourth service widget, the method further includes: in response to a received second user input, refreshing the fourth widget information displayed on the fourth service widget, where the second user input includes information indicating to search for the same object in the plurality of first applications and a second application, refreshed fourth widget information further includes information related to a second search result, and the second search result is a search result of the second application for the same object.

The first applications are different from the second application.

In embodiments of this application, after the mobile phone displays the generated comparison widget, when the user wants to continue to search for the same object in another application (for example, the second application), the mobile phone may continue to invoke the second application added by the user to search for the object, to update the fourth widget information in the generated fourth service widget by referring to the information related to the search result.

According to the first aspect or any one of the foregoing implementations of the first aspect, the method further includes: generating a fifth service widget in response to a received third user input, where the third user input includes information indicating to perform a first setting on a third application or the system, and the fifth service widget includes fifth widget information related to the first setting; and displaying the fifth service widget.

The third application may be the same as or different from the first applications, and the third application may be the same as or different from the second application. This is not limited.

The information indicating to perform the first setting on the third application or the system may be information about a user-defined rule of the application or the system, for example, a personalized alarm.

In embodiments of this application, based on a personalized setting requirement for the application or the mobile phone system, the user may perform user-defining on a rule based on the third user input (for example, a voice or a text), so that the mobile phone may generate, based on the third user input, a service widget that meets a personalized setting of the user-defined rule.

According to the first aspect or any one of the foregoing implementations of the first aspect, after displaying the fifth service widget, the method further includes: configuring the first setting for the third application or the system.

In embodiments of this application, the mobile phone may configure, in the corresponding application or the mobile phone system, a personalized setting that is for the application or the system and that is related to the generated personalized service widget, to implement a personalized setting that is not originally available in the application or the mobile phone.

According to a second aspect, an embodiment of this application provides a processing apparatus. The apparatus includes: a first generation module, configured to: in response to a received first user operation on a first control, generate a first service widget based on the first control, where the first control is a movable control, and the first service widget includes first widget information related to control content of the first control; and a first display module, configured to display the first service widget.

According to the second aspect, the first display module is specifically configured to refresh the displayed first control to the first service widget.

According to the second aspect or any one of the foregoing implementations of the second aspect, the apparatus further includes a second display module, configured to display the first service widget on a home screen interface in response to a received second user operation on the first service widget.

According to the second aspect or any one of the foregoing implementations of the second aspect, the first widget information is further related to at least one of a user profile and a user habit.

According to the second aspect or any one of the foregoing implementations of the second aspect, a control type of the first control includes one of the following: a notification message, a floating control, and a relay station control.

According to the second aspect or any one of the foregoing implementations of the second aspect, the control type of the first control is the notification message, and the first user operation includes at least one of the following: a pull-down operation, a touch and hold operation, and a slide operation.

According to the second aspect or any one of the foregoing implementations of the second aspect, the first display module is further configured to display the first service widget in a floating manner above a second control, where a control type of the second control is the same as the control type of the first control.

According to the second aspect or any one of the foregoing implementations of the second aspect, the control type of the first control is the floating control or the relay station control, the first user operation includes an operation of dragging the first control to a first location on the home screen interface, and the apparatus further includes a third display module, configured to display a first area on the home screen interface in response to the first user operation, where the first area is an area in which the first service widget is to be displayed, and the first area includes the first location. The first display module is specifically configured to: display the first service widget in the first area, and cancel display of the first area.

According to the second aspect or any one of the foregoing implementations of the second aspect, the apparatus further includes a switching module, configured to switch a display interface to a first interface in response to a received third user operation, where the first interface is an application interface in which the first user operation performed on the first control is received.

According to the second aspect or any one of the foregoing implementations of the second aspect, the apparatus further includes: a second generation module, configured to separately generate, in response to a received fourth user operation, respective second service widgets based on a plurality of third controls, where the fourth user operation includes an operation performed on the plurality of third controls of a same control type, at least one of the third controls is a movable control, and each second service widget includes second widget information related to control content of a corresponding third control; and a fourth display module, configured to display the plurality of second service widgets.

According to the second aspect or any one of the foregoing implementations of the second aspect, the apparatus further includes: a third generation module, configured to generate, in response to a received fifth user operation on the display interface, a third service widget based on a context of the display interface, where the third service widget includes third widget information related to the context; and a fifth display module, configured to display the third service widget.

According to the second aspect or any one of the foregoing implementations of the second aspect, the context of the display interface includes at least one of the following: a session message, a selected text segment indicated by the fifth user operation, an application interface, an image, a video, and the like.

According to the second aspect or any one of the foregoing implementations of the second aspect, the third widget information is further related to at least one of the user profile and the user habit.

According to the second aspect or any one of the foregoing implementations of the second aspect, the apparatus further includes: a fourth generation module, configured to generate a fourth service widget in response to a received first user input, where the first user input includes information indicating to search for a same object in a plurality of first applications, the fourth service widget includes fourth widget information related to a plurality of first search results, and the plurality of first search results are respective search results of the plurality of first applications for the same object; and a sixth display module, configured to display the fourth service widget.

According to the second aspect or any one of the foregoing implementations of the second aspect, the apparatus further includes: a refreshing module, configured to refresh, in response to a received second user input, the fourth widget information displayed on the fourth service widget, where the second user input includes information indicating to search for the same object in the plurality of first applications and a second application, refreshed fourth widget information further includes information related to a second search result, and the second search result is a search result of the second application for the same object.

According to the second aspect or any one of the foregoing implementations of the second aspect, the apparatus further includes: a fifth generation module, configured to generate a fifth service widget in response to a received third user input, where the third user input includes information indicating to perform a first setting on a third application or the system, and the fifth service widget includes fifth widget information related to the first setting; and a seventh display module, configured to display the fifth service widget.

According to the second aspect or any one of the foregoing implementations of the second aspect, the apparatus further includes a configuration module, configured to configure the first setting for the third application or the system.

The second aspect and any one of the implementations of the second aspect respectively correspond to the first aspect and any one of the implementations of the first aspect. For technical effects corresponding to the second aspect and any one of the implementations of the second aspect, refer to technical effects corresponding to the first aspect and any one of the implementations of the first aspect. Details are not described herein again.

According to a third aspect, an embodiment of this application provides an electronic device. The electronic device includes a memory and a processor, where the memory is coupled to the processor, the memory stores program instructions, and when the program instructions are executed by the processor, the electronic device is enabled to perform the method according to the first aspect and any one of the implementations of the first aspect.

For technical effects corresponding to the third aspect, refer to technical effects corresponding to the first aspect and any one of the implementations of the first aspect. Details are not described herein again.

According to a fourth aspect, an embodiment of this application provides a computer-readable medium. The computer-readable medium is configured to store a computer program. When the computer program is run on an electronic device, the electronic device is enabled to perform the method according to the first aspect and any one of the implementations of the first aspect.

For technical effects corresponding to the fourth aspect, refer to technical effects corresponding to the first aspect and any one of the implementations of the first aspect. Details are not described herein again.

According to a fifth aspect, an embodiment of this application provides a computer program product including instructions. When the computer program product runs on a computer, the computer is enabled to perform the method according to the first aspect and any one of the implementations of the first aspect.

For technical effects corresponding to the fifth aspect, refer to technical effects corresponding to the first aspect and any one of the implementations of the first aspect. Details are not described herein again.

According to a sixth aspect, an embodiment of this application provides a chip. The chip includes one or more interface circuits and one or more processors. The interface circuit is configured to: receive a signal from a memory of a first electronic device, and send the signal to the processor. The signal includes computer instructions stored in the memory. When the processor executes the computer instructions, the first electronic device is enabled to perform the method according to the first aspect and any one of the implementations of the first aspect.

For technical effects corresponding to the sixth aspect, refer to technical effects corresponding to the first aspect and any one of the implementations of the first aspect. Details are not described herein again.

### BRIEF DESCRIPTION OF DRAWINGS

FIG. 1 is a diagram 1 of an example of a structure of an electronic device;
FIG. 2 is a diagram of an example of a software structure of an electronic device;
FIG. 3(1) to FIG. 3(4) are diagrams of an example of an implementation process in the conventional technology;
FIG. 4 is a diagram of an example of a process of a processing method;
FIG. 5a(1) to FIG. 5a(4) are diagrams of an example of an application scenario;
FIG. 5b is a diagram of an example of an application scenario;
FIG. 5c(1) to FIG. 5c(3) are diagrams of an example of an application scenario;
FIG. 5d(1) and FIG. 5d(2) are diagrams of an example of an application scenario;
FIG. 5e(1) to FIG. 5e(4) are diagrams of an example of an application scenario;
FIG. 6a(1) to FIG. 6a(4) are diagrams of an example of an application scenario;
FIG. 6b is a diagram of an example of an application scenario;
FIG. 6c(1) and FIG. 6c(2) are diagrams of an example of an application scenario;
FIG. 6d is a diagram of an example of an application scenario;
FIG. 7a(1) to FIG. 7a(4) are diagrams of an example of an application scenario;
FIG. 7b(1) to FIG. 7b(3) are diagrams of an example of an application scenario;
FIG. 7c is a diagram of an example of an application scenario;
FIG. 7d(1) to FIG. 7d(3) are diagrams of an example of an application scenario;
FIG. 8(1) to FIG. 8(4) are diagrams of an example of an application scenario;
FIG. 9 is a diagram of an example of an application scenario;
FIG. 10(1) to FIG. 10(3) are diagrams of an example of an application scenario;
FIG. 11a is a diagram of an example of an application scenario;
FIG. 11b(1) and FIG. 11b(2) are diagrams of an example of an application scenario;
FIG. 12(1) to FIG. 12(3) are diagrams of an example of an application scenario; and
FIG. 13 is a diagram of a structure of an apparatus according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a particular order of the objects. For example, a first target object and a second target object are used to distinguish between different target objects, but are not used to describe a particular order of the target objects.

In embodiments of this application, the word "example", "for example" or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In descriptions of embodiments of this application, unless otherwise stated, "a plurality of" means two or more than two. For example, a plurality of processing units are two or more processing units, and a plurality of systems are two or more systems.

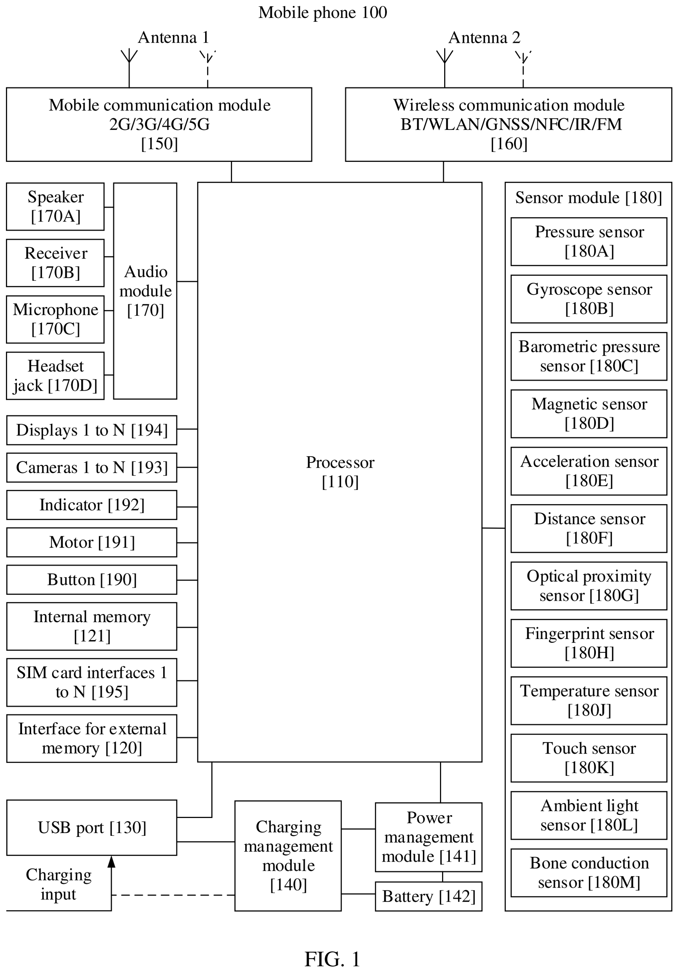

FIG. 1 is a diagram of a structure of an electronic device 100. It should be understood that the electronic device 100 shown in FIG. 1 is only an example of the electronic device. Optionally, the electronic device 100 may be a terminal, or may be referred to as a terminal device. The terminal may be a device like a cellular phone (cellular phone), a tablet computer (pad), a wearable device, or an Internet of Things device. This is not limited in this application. It should be further noted that the electronic device 100 may have more or fewer components than those shown in the figure, two or more components may be combined, or there may be different component configurations. Components shown in FIG. 1 may be implemented by hardware that includes one or more signal processing and/or application-specific integrated circuits, software, or a combination of hardware and software.

The electronic device 100 may include a processor 110, an interface 120 for external memory, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The USB port 130 is an interface that conforms to a USB standard specification, and may be specifically a mini USB port, a micro USB port, a USB type-C port, or the like. The USB port 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device like an AR device.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The camera 193 is configured to capture a static image or a video. An optical image of an object is generated through a lens, and is projected onto a photosensitive element.

The interface 120 for external memory may be used to connect to an external storage card, for example, a micro SD card, to extend a storage capability of the electronic device 100. The external storage card communicates with the processor 110 through the interface 120 for external memory, to implement a data storage function. For example, files such as music and videos are stored in the external storage card.

The internal memory 121 may be configured to store computer-executable program code. The executable program code includes instructions. The processor 110 runs the instructions stored in the internal memory 121, so that the electronic device 100 performs the method in embodiments of this application. The internal memory 121 may include a program storage area and a data storage area. The program storage area may store an operating system, an application required by at least one function (for example, a sound playing function or an image playing function), and the like. The data storage area may store data (for example, audio data and an address book) and the like created when the electronic device 100 is used. In addition, the internal memory 121 may include a high-speed random access memory, or may include a non-volatile memory, for example, at least one magnetic disk storage device, a flash memory device, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an electrical audio signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or a voice message is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, identify a sound source, implement a directional recording function, and the like.

The headset jack 170D is configured to connect to a wired headset. The headset jack 170D may be the USB port 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a Messages application icon, an instruction for viewing an SMS message is performed. When a touch operation whose touch operation intensity is greater than or equal to the first pressure threshold is performed on the Messages application icon, an instruction for creating an SMS message is performed.

The gyroscope sensor 180B may be configured to determine a moving posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during image shooting. For example, when a shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a flip phone, the electronic device 100 may detect opening and closing of a flip cover based on the magnetic sensor 180D. Further, a feature like automatic unlocking upon opening of the flip cover is set based on a detected opening or closing state of the flip cover.

The acceleration sensor 180E may detect accelerations of the electronic device 100 in various directions (usually on three axes). The acceleration sensor may detect a magnitude and a direction of gravity when the electronic device 100 is still. The acceleration sensor may be further configured to identify a posture of the electronic device, and is used in an application, for example, switching between a landscape mode and a portrait mode or a pedometer.

The distance sensor 180F is configured to measure a distance. The electronic device 100 may measure the distance in an infrared manner or a laser manner. In some embodiments, in an image shooting scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a flip cover mode or a pocket mode to automatically perform screen unlocking or locking.

The ambient light sensor 180L is configured to sense ambient light brightness. The fingerprint sensor 180H is configured to collect a fingerprint. The temperature sensor 180J is configured to detect a temperature. The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. The display 194 may provide a visual output related to the touch operation. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may alternatively be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, image shooting and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. The touch vibration feedback effect may be further user-defined.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may also be compatible with different types of SIM cards. The SIM card interface 195 may also be compatible with an external storage card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

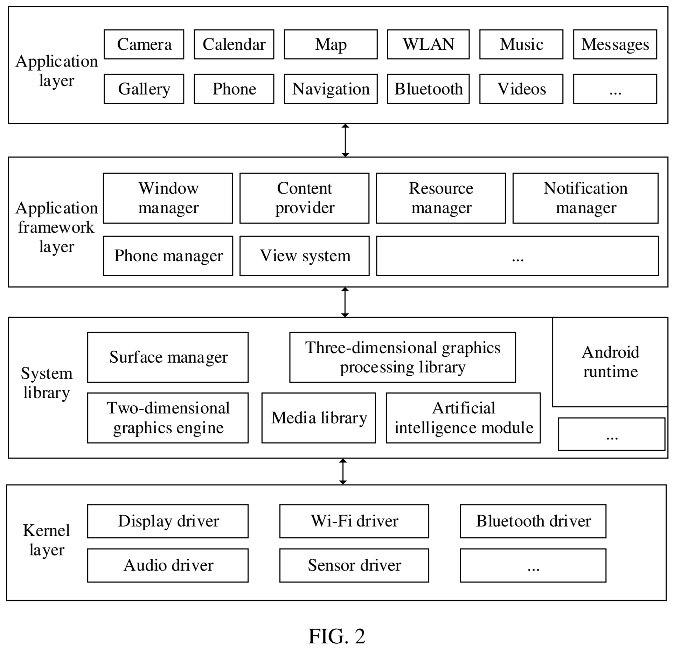

FIG. 2 is a block diagram of the software structure of the electronic device 100 according to an embodiment of this application.

In a layered architecture of the electronic device 100, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying a picture. The view system may be configured to establish an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The displayed notification information may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is prompted in the status bar, an alert tone is made, the electronic device vibrates, or an indicator blinks.

A system library and runtime layer includes the system library and Android runtime (Android Runtime). The system library may include a plurality of functional modules, for example, a surface manager (surface manager), a media library (Media Library), a three-dimensional graphics processing library (for example, OpenGL ES), a 2D graphics engine (for example, SGL), and an artificial intelligence (Artificial Intelligence, AI) module. The 3D graphics library is configured to implement three-dimensional graphics drawing, image rendering, synthesis, layer processing, and the like. The Android runtime includes a core library and a virtual machine. The Android runtime is responsible for scheduling and management of an Android system. The core library includes two parts: a function that needs to be invoked in Java language and a core library of Android. The application layer and the application framework layer run on the virtual machine. The virtual machine executes Java files of the application layer and the application framework layer as binary files. The virtual machine is configured to perform functions such as object lifecycle management, stack management, thread management, security and exception management, and garbage collection.

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The AI module may be configured to: in response to a received target input indicating to perform AI identification, determine a to-be-processed object, generate service information based on the to-be-processed object, and generate a service widget based on the service information.

For an implementation of a specific function of the AI module and other functions, refer to specific descriptions in subsequent embodiments. Details are not described herein.

It should be understood that the AI module for implementing the method in this application may also be configured at the application framework layer for an application to invoke, or may be configured at the application layer. This is not limited herein.

The kernel layer is a layer between hardware and software. The kernel layer includes at least a display driver, a camera driver, an audio driver, and a sensor driver.

It may be understood that the components included in the system framework layer, and the system library and runtime layer that are shown in FIG. 2 do not constitute a specific limitation on the electronic device 100. In some other embodiments of this application, the electronic device 100 may include more or fewer components than those shown in the figure, or some components may be combined, or some components may be split, or different component arrangements may be used.

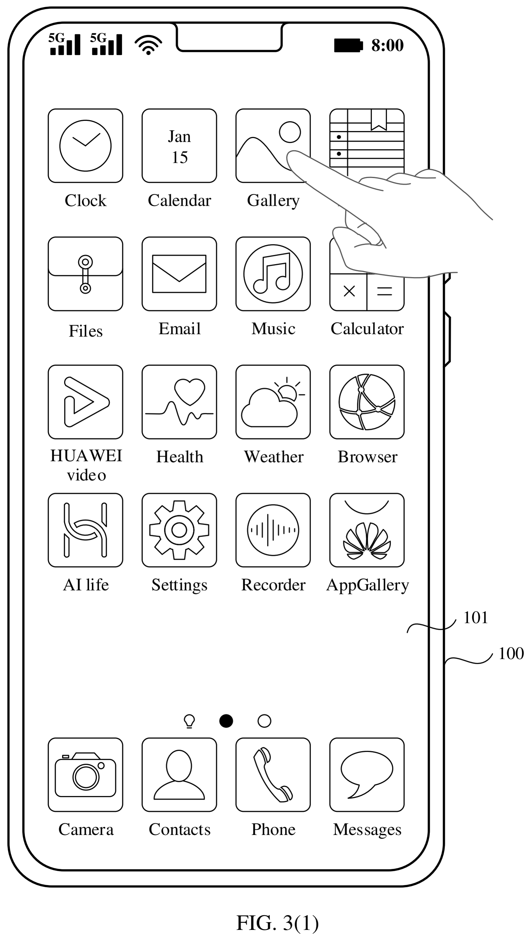

With the development of electronic devices, the electronic devices may provide service widgets of applications, so that users can conveniently use the applications. A service widget of a Gallery application is used as an example. FIG. 3(1) to FIG. 3(4) are diagrams of an example of an application scenario of a service widget in the conventional technology.

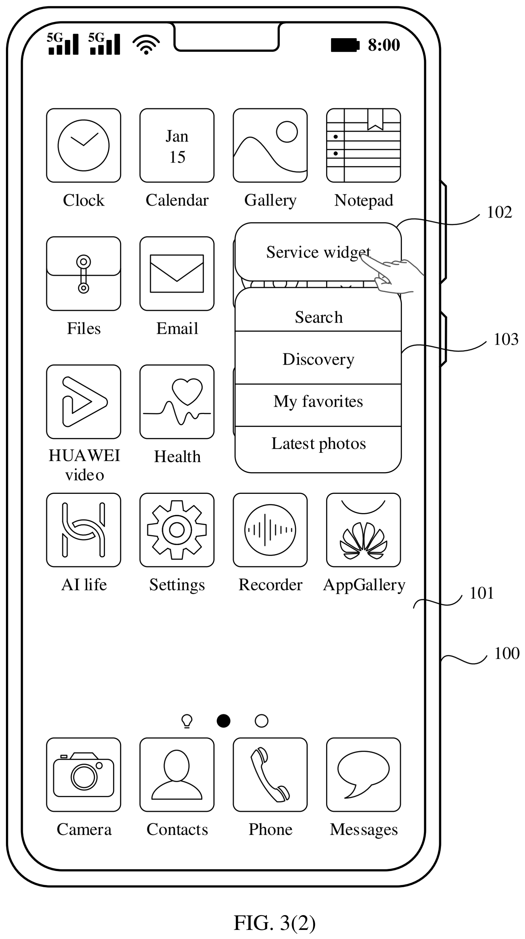

As shown in FIG. 3(1), a display interface 101 of a mobile phone 100 is a home screen application interface, and the display interface 101 includes a plurality of application icons, for example, a Gallery application icon and a Calendar application icon. As shown in FIG. 3(1), a user touches and holds the Gallery application icon. As shown in FIG. 3(2), the mobile phone 100 may display a control 102 and a control 103 below the Gallery application icon in response to the touch and hold operation of the user.

The control 102 is an option used to add a service widget of the Gallery application, and the control 103 may include an option of another function of the Gallery application, for example, search, discovery, my favorites, and latest photos.

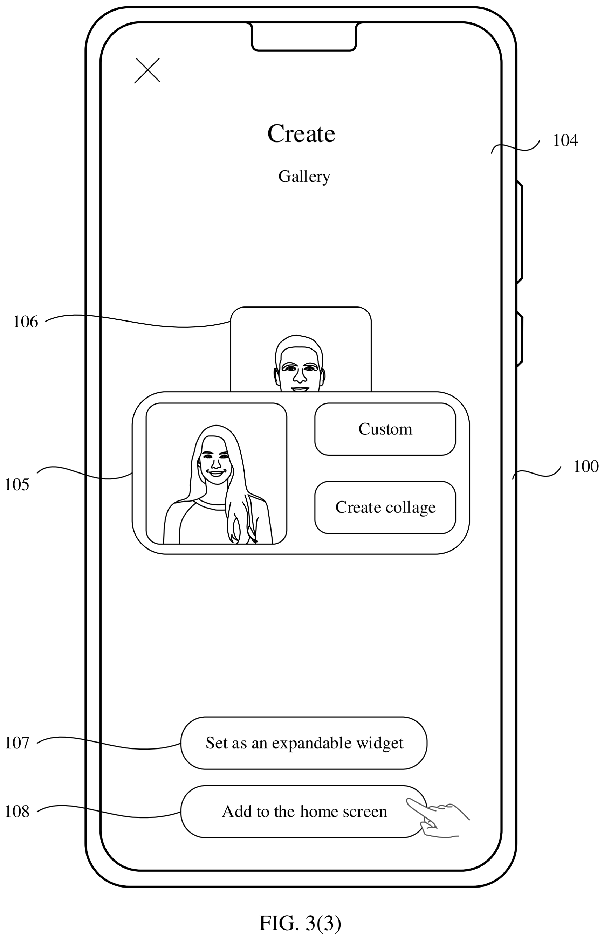

As shown in FIG. 3(2), the user taps the control 102, and the mobile phone 100 may switch, in response to the user operation, the display interface 101 to a display interface 104 shown in FIG. 3(3). The display interface 104 includes a widget list of the Gallery application. Herein, widgets of a plurality of styles are shown, which are respectively a widget 105 and a widget 106. Widget functions of widgets of different styles may be different. However, before the user adds and uses a widget (for example, the widget 105 or the widget 106), a specific function of the widget may not be determined, and a function of the to-be-added widget is difficult to predict.

As shown in FIG. 3(3), the mobile phone 100 uses, by default as a widget selected by the user, the widget 105 that is placed in a plurality of widgets and displayed at the top. The display interface 104 further includes a control 107 and a control 108, which are respectively configured to set the selected widget as an expandable widget or add the selected widget to a home screen.

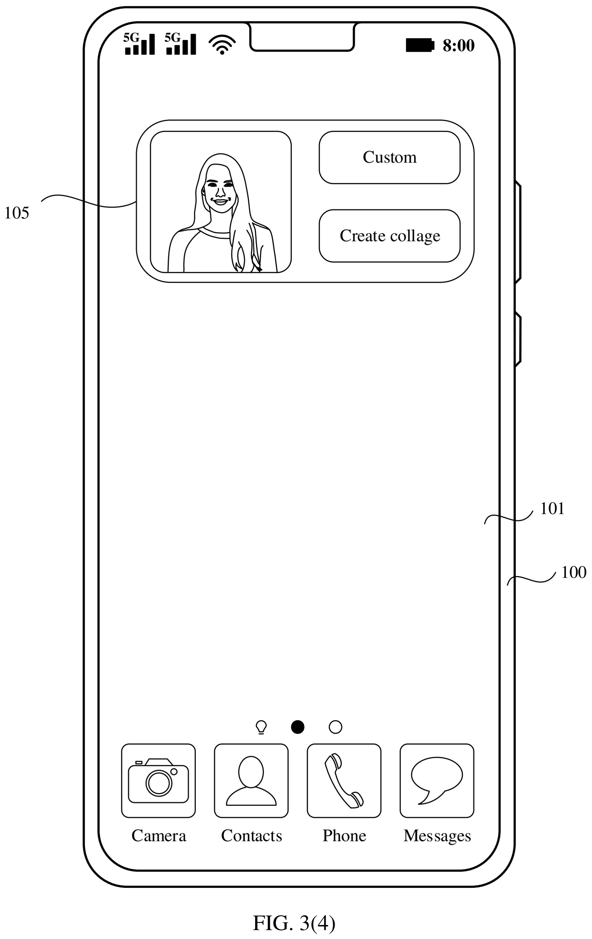

As shown in FIG. 3(3), after the mobile phone 100 receives an operation of tapping the control 108 by the user, the mobile phone 100 may switch, in response to the user operation, the display interface of the mobile phone 100 from the display interface 104 shown in FIG. 3(3) to the display interface 101 shown in FIG. 3(4), to add the widget 105 selected by the user to the home screen interface. The home screen interface herein is the display interface 101 shown in FIG. 3(4).

As shown in FIG. 3(3), both the widget 105 and the widget 106 are service widgets that are preconfigured by the mobile phone 100 and that are about a fixed style, a fixed size, and a fixed function of the Gallery application. A fixed function of the widget 105 is to perform creative operations on a picture in the Gallery application, for example, video creation or photo collage. A fixed function of the widget 106 is to browse and view a picture in the Gallery application. However, a specific function of the widget may be difficult to predict before the user adds and uses the widget. For the user, a purpose and a function of the previewed widget are unpredictable. In addition, sizes and styles of the widget 105 and the widget 106 are preset, and cannot be automatically adjusted.

In addition, although functions of the widget 105 and the widget 106 are different, a type of a service widget provided by the mobile phone 100 for the Gallery application is limited. Consequently, a function of the service widget of the Gallery application for use by the user is also limited.

In addition, when adding a widget, the user needs to perform three operation steps shown in FIG. 3(1) to FIG. 3(3) to generate the widget 105 shown in FIG. 3(4). Therefore, a process of generating a service widget in the conventional technology is complex, and steps are cumbersome.

With reference to the example of the widget generation process in the conventional technology shown in FIG. 3(1) to FIG. 3(4), it can be clearly learned that the method for generating a service widget in the conventional technology has the following technical problems: (1) service widgets provided by an electronic device are all system preset widgets, and specific functions of the preset widgets are preset. However, before a user adds and uses a preset widget, it is difficult to determine a function supported by the widget. Therefore, before the user adds the service widget, a purpose and a function of the service widget are unpredictable, and the user may need to repeatedly add widgets to finally determine a widget that needs to be used. (2) Widget functions, widget sizes, and widget styles of service widgets provided by the electronic device are fixed, and functions that can be provided by preset widgets are limited. Consequently, it is difficult for an existing service widget to meet a personalized use requirement of a user for the service widget. (3) A process of generating a service widget provided by the electronic device is complex, steps are cumbersome, and user interaction experience is poor.

Therefore, this application provides a data processing method. In the method, a service widget may be generated based on content, for example, any content such as a natural language, dialog content, a text segment, an application interface, and a notification message, so that a function or a purpose supported by the service widget is related to the foregoing content known to a user. In this way, the user can flexibly determine, based on a personal requirement, whether to add the service widget when the user can determine a function or a use of the to-be-added service widget, so that the user can predict a purpose and the function of the service widget before adding the service widget.

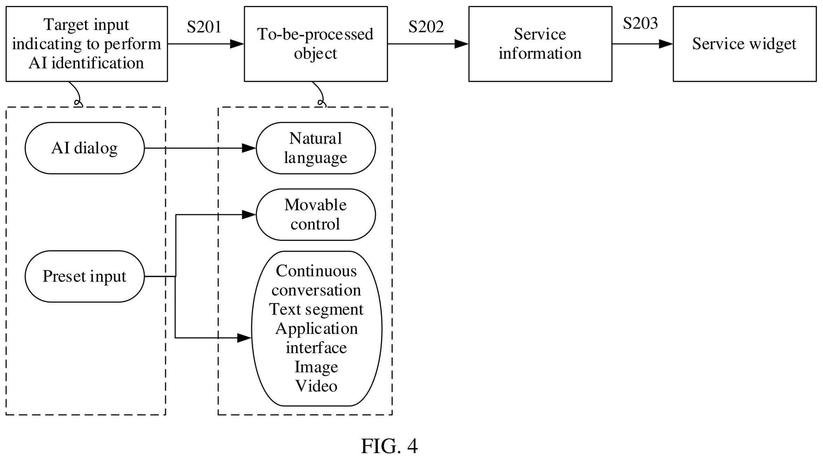

FIG. 4 is a diagram of an example of a processing process of a method according to this application.

As shown in FIG. 4, the process may include the following steps.

S201: An electronic device may determine a to-be-processed object in response to a received target input indicating to perform AI identification.

S202: The electronic device may generate service information based on the to-be-processed object.

S203: The electronic device may generate a service widget based on the service information.

As shown in FIG. 4, the target input indicating to perform AI identification may be an AI dialog, or may be a preset input, or may be a combination of an AI dialog and a preset input.

The AI dialog may be content of interaction between a user and the electronic device through AI, for example, a text or a voice.

In some embodiments, as shown in FIG. 4, when the target input includes the AI dialog, the to-be-processed object may include dialog content (specifically, a natural language) in the AI dialog, and the natural language may be a text or a voice.

For example, the user wakes up (for example, starts) an AI identification service (for example, the AI module shown in FIG. 2) of the electronic device by using a gesture or a voice, and performs an AI dialog. For example, if a text corresponding to dialog content entered by the user is "set a wake-up alarm clock for the last Saturday of a month", the AI module may use the received dialog content "set a wake-up alarm clock for the last Saturday of a month" as the to-be-processed object in S202. In addition, the AI module may perform AI identification on the to-be-processed object, to generate structured service information. For example, the service information includes: An alarm date is the last Saturday of the month (for example, the last Saturday of the month is June 24), and alarm time is previously set alarm time of a workday (for example, 7:30). Finally, the electronic device may generate, based on the structured service information, an alarm clock widget (for example, a widget 905 shown in FIG. 12a (2)) that meets a personalized requirement of the user, and apply the alarm clock that the user requests to set to an alarm clock application, for example, add the alarm clock at 7:30 on June 24 to the alarm clock application.

In some embodiments, as shown in FIG. 4, when the target input includes the preset input, the to-be-processed object may be a movable control (for example, a notification message), or may be any one or more of a continuous conversation (for example, a plurality of continuous conversations in a session interface), a text segment, an application interface, an image, a video, and the like.

The preset input is an input that can indicate to perform AI identification. In other words, the user may trigger the preset input to start an AI identification service of the electronic device, to perform AI identification on the related to-be-processed object, to obtain the service information.

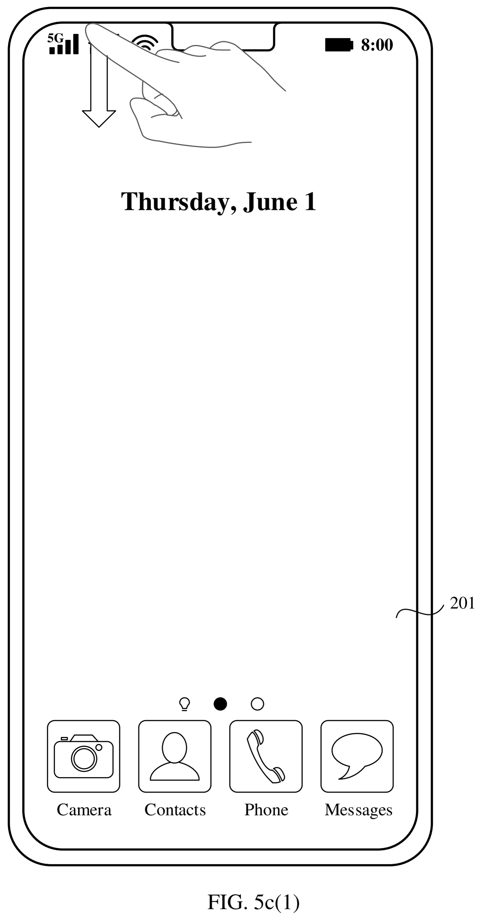

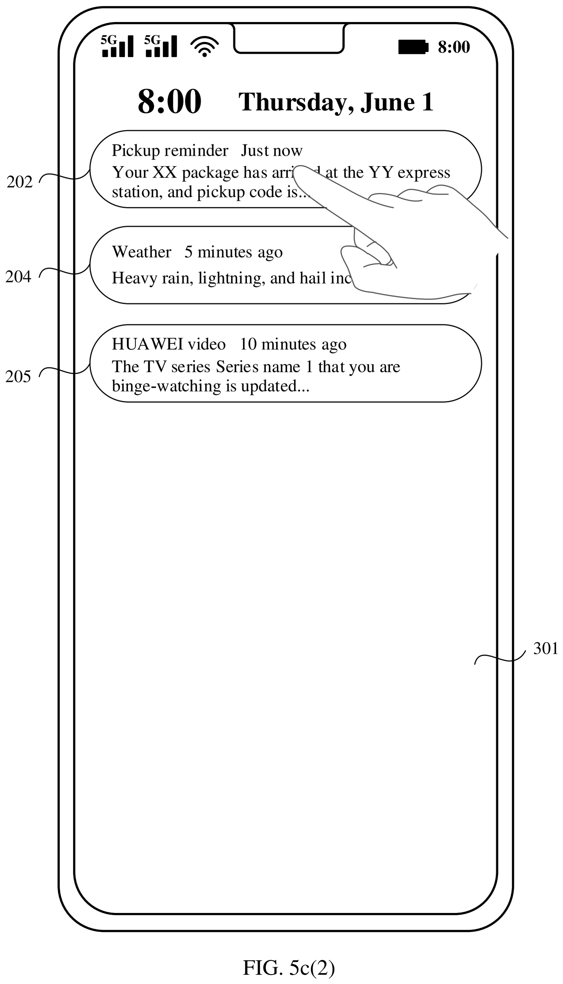

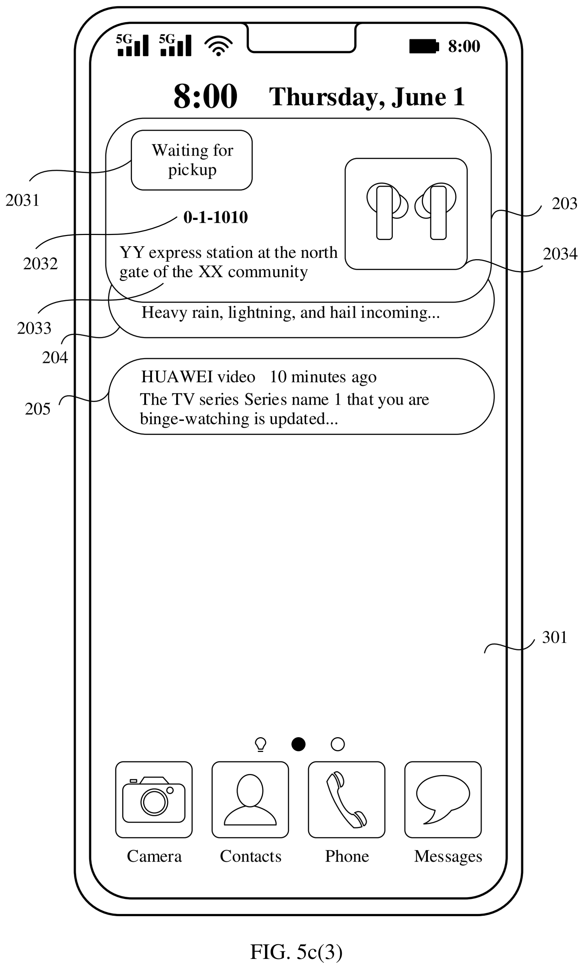

The preset input may include but is not limited to at least one of the following: a slide input, a drag input, a press input (for example, a short press input or a long press input), a screenshot input, an input for starting the AI identification service (for example, tapping an AI control 605 shown in FIG. 5c(1) to FIG. 5c(3)), and the like.

In some embodiments, the electronic device may perform AI identification on a natural language in the AI dialog shown in FIG. 4, and/or at least one of the movable control, the continuous conversation, the text segment, the application interface, the image, and the video that receive the preset input, to recognize a user intention, and obtain service information (for example, structured service information) with reference to the user intention, to generate a service widget that meets a personalized requirement of the user based on the service information.

In embodiments of this application, the user may perform preset input on the natural language (a voice, a text, or the like) and/or some data objects (for example, at least one of the movable control, the continuous conversation, the text segment, the application interface, the image, and the video), to send a service widget generation request to the electronic device. The electronic device may invoke the AI module to perform AI identification on the natural language and/or the data object entered by the user, to understand a user intention, so as to convert user input data into service information, and generate a corresponding service widget. The service widget generated in this application is not a preset widget, but a service widget that meets the personalized requirement of the user and that is generated with reference to a requirement of the user for some content (for example, the natural language or the foregoing data object). In this way, before adding the service widget, the user already knows a function, content, and a role of the service widget, so that the added service widget is consistent with an expectation of the user for the service widget.

In addition, even if some applications are not configured with preset widgets, service widgets related to the applications can be generated by using the method in this application, to improve richness of the service widgets.

In addition, a widget function of the service widget generated in this application is not a fixed function preset by a system, but a function (for example, a personalized alarm clock) that matches a content requirement of the user. In this way, the service widget generated in this application can support more diversified functions, and a specific function depends on a user requirement, thereby meeting a personalized use requirement of the user for the service widget.

In addition, in a process of generating the service widget, the user only needs to perform an AI dialog and/or perform preset input, to generate and add the service widget. This makes the process of generating the service widget simpler, and improves interaction experience of the user.

In addition, the service widget generated in this application is a service widget that meets a personalized requirement of the user and that is generated with reference to a requirement of the user for some content (for example, the natural language or the foregoing data object). Therefore, when content is different, sizes and styles of the service widget may also be different. Even if service widgets have a same or similar function, because content targeted by the service widgets is different, sizes and styles of service widgets of a same type may also be different.

The following describes the method in this application with reference to different application scenarios based on the processing process shown in FIG. 4. An example in which the electronic device is a mobile phone is used. In another embodiment, the electronic device may alternatively be a tablet computer, a wearable device, or the like. Principles of implementation processes are the same. Details are not described herein again.

### Example 1

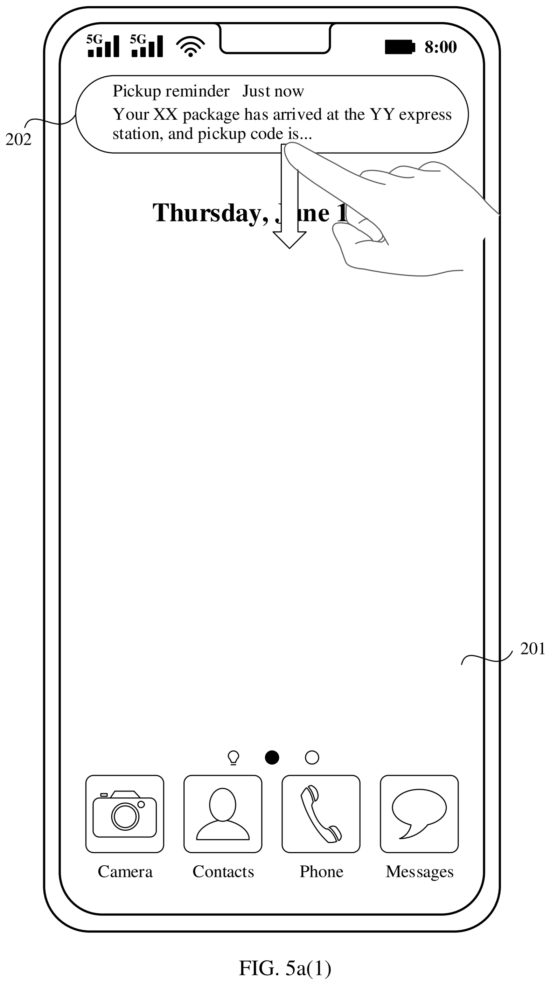

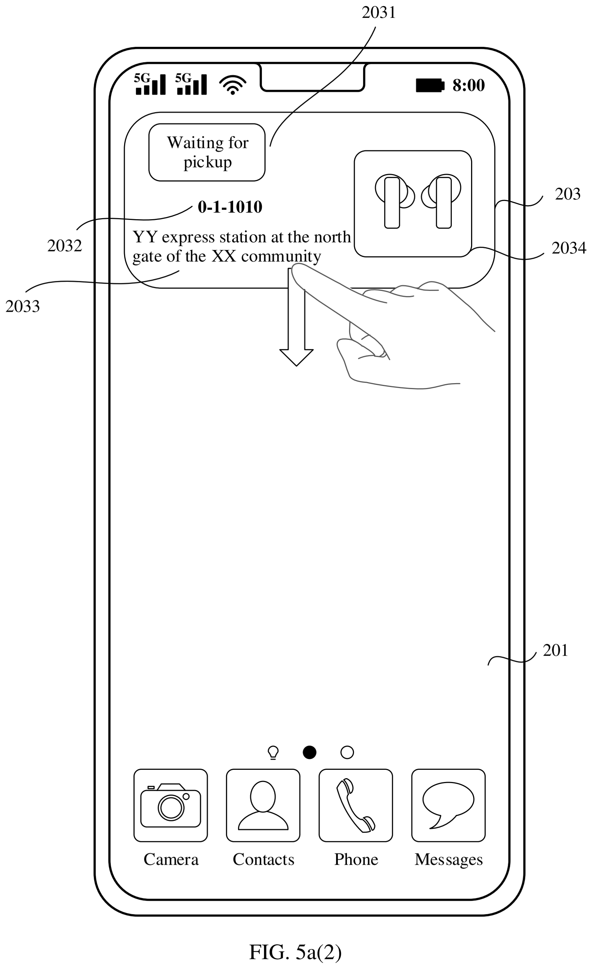

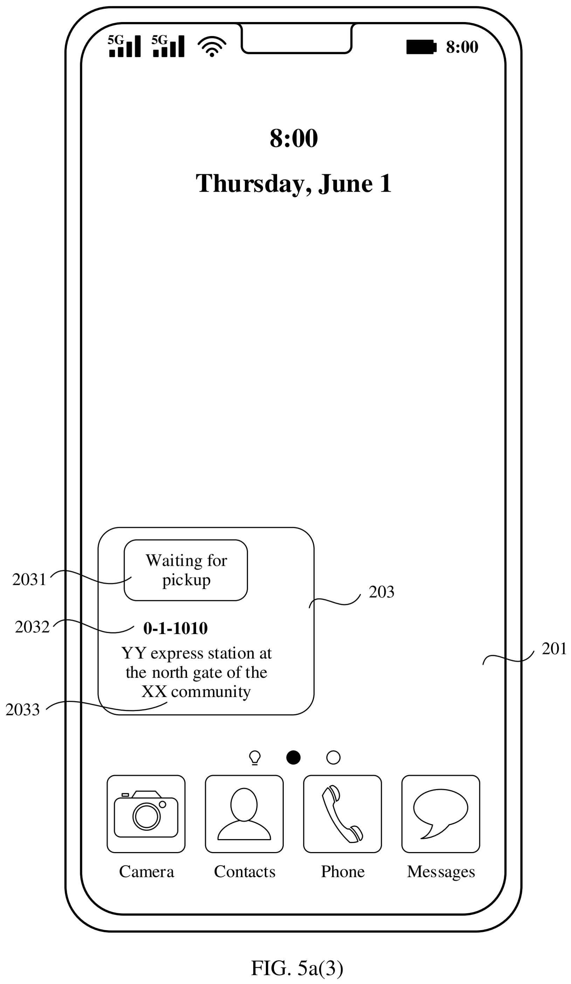

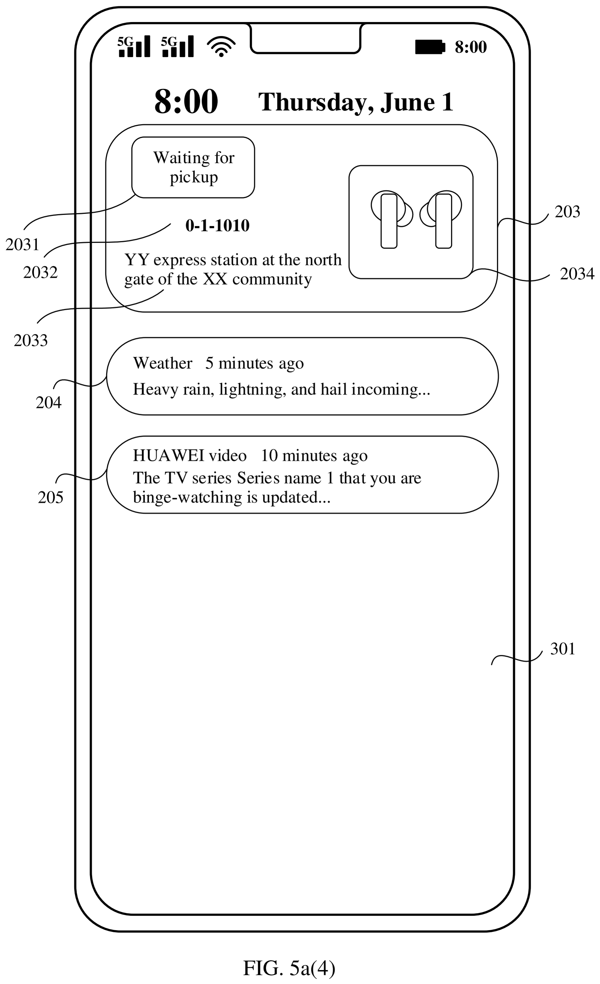

Refer to FIG. 5a(1) to FIG. 5e(4). The mobile phone may convert a notification message (for example, a notification message that cannot be processed in time) in which the user is interested into a service widget (for example, a to-do widget) that matches message content. In this example, the to-be-processed object shown in FIG. 4 may be a notification message.

In a possible implementation, refer to diagrams of an application scenario shown in FIG. 5a(1) to FIG. 5a(4). As shown in FIG. 5a(1), a display interface 201 of the mobile phone is a home screen interface, and the display interface 201 may include one or more controls. The controls include but are not limited to a power icon, a network icon, an application icon, and the like.

In addition, in a state shown in FIG. 5a(1), the mobile phone receives a notification message, and the mobile phone may display the notification message 202 in a pop-up manner. As shown in FIG. 5a(1), the notification message 202 is a package pickup reminder message. The user may perform a pull-down operation on the notification message 202 along an arrow direction, and the mobile phone may update, in response to the pull-down operation, the notification message 202 to a service widget 203 shown in FIG. 5a(2).

For example, the mobile phone may perform AI identification on message content of the notification message 202 in response to the pull-down operation (a preset input) on the notification message 202, to obtain structured service information. For example, the service information may include but is not limited to a pickup place, a pickup code, an item type of an item in a package, and a package name. Then, the mobile phone may refresh the notification message 202 to the service widget 203 shown in FIG. 5a(2) based on the identified service information.

As shown in FIG. 5a(2), the service widget 203 may include but is not limited to a control 2031, a control 2032, a control 2033, a control 2034, and the like. The control 2031 indicates information that the package is not picked up, for example, "Waiting for pickup". The control 2032 indicates the pickup code, for example, "0-1-1010". The control 2033 indicates the pickup place, for example, "YY express station at the north gate of the XX community". The control 2034 may be an image, to indicate the item type of the item in the package waiting for pickup. For example, the item type herein is an earphone.

As shown in FIG. 5a(2), the service widget 203 is a result obtained by replacing the displayed notification message 202. When the user does not perform the pull-down operation on the service widget 203 along the arrow direction, after the service widget 203 is displayed on the display interface 201 shown in FIG. 5a(2) for a period of time, for example, any duration within 1 second to 2 seconds, which may be specifically flexibly configured based on a requirement, the mobile phone no longer displays the service widget 203 on the display interface 201.

In addition, after the mobile phone generates the service widget 203 shown in FIG. 5a(2), the mobile phone may further consider the service widget 203 as an unread message and place the service widget 203 on a notification bar interface of the mobile phone. For example, the user performs an operation to start a display interface 301 shown in FIG. 5a(4). The display interface 301 is the notification bar interface. On the display interface 301, a notification message 204 and a notification message 205 are displayed, and the service widget 203 converted from the notification message 202 shown in FIG. 5a(1) is also displayed. In this way, after the mobile phone generates the service widget 203 shown in FIG. 5a(2), when the user needs to view the service widget 203 next time, the user needs to start the notification bar interface (for example, the display interface 301 shown in FIG. 5a(4)) of the mobile phone to browse the service widget 203.

In some embodiments, to facilitate the user to view the service widget 203, the user may continue to perform the pull-down operation on the service widget 203 shown in FIG. 5a(2) along the arrow direction. The mobile phone may refresh and display, in response to the pull-down operation, a display interface 201 (a home screen interface) shown in FIG. 5a(3), to display the service widget 203 in a blank area of the home screen interface (referred to as "pinned to a home screen"). In this way, the user may search for and browse structured service information presented by the service widget on the home screen interface at any time, to find a to-do list, for example, a list that the package needs to be picked up and that is indicated by the service widget 203.

In this embodiment, in comparison with the service widget 203 shown in FIG. 5a(2) and the service widget 203 shown in FIG. 5a(3), both a display size and display content of service widgets 203 change. In the service widget 203 shown in FIG. 5a(3), the control 2034 indicating the item type is not displayed, and a size of the widget is reduced. In other words, in this application, information such as the widget size, a widget style, and widget information of the generated service widget may be flexibly set based on a requirement like a size of an area available for displaying the service widget or a scenario.

In this embodiment, the user performs a pull-down operation on a currently displayed notification message, and the mobile phone may replace the unread notification message with a service widget in response to the user operation. Structured service information obtained by the mobile phone by performing AI identification (for example, semantic analysis) on the notification message may be displayed on the service widget. The mobile phone converts the notification message with poor readability into the service widget with a larger size and structured message content, so that the service widget has higher readability than the notification message, and is conducive to notifying the user of important information in the unread notification message.

In addition, in the conventional technology, if an unread notification message is displayed on a notification bar interface, the user is likely to forget to view message content. However, the service widget 203 generated in this application is similar to a to-do widget, and is pinned to the home screen interface for displaying, so that the user can be intuitively and in real time notified of the to-do list, to improve a reminder effect of the related to-do list.

In a possible implementation, when the AI module of the mobile phone converts the notification message 202 into the service widget 203, the AI module may generate a pickup event related to the service widget 203. The mobile phone may notify of an event (for example, the pickup event) corresponding to the service widget 203 shown in FIG. 5a(1) to FIG. 5a(4). For example, if the service widget 203 is a widget indicating the pickup, when a positioning location of the mobile phone is near the pickup place (for example, the YY express station at the north gate of the XX community), the mobile phone may notify the user to perform pickup. Alternatively, when the mobile phone determines that the package is not picked up over a specific period of time (for example, three days), the mobile phone may notify the user of the event related to the service widget 203.

It should be understood that, in another embodiment of generating the service widget, the AI module of the mobile phone may also generate the event related to the service widget.

A manner in which the mobile phone notifies of the event related to the service widget 203 (for example, notifies to perform pickup) may include but is not limited to at least one of the following: ringing reminder, vibration reminder, a notification message, service widget status update, and the like.

A widget status of the service widget may include but is not limited to at least one of the following: the widget information, the widget style, the widget size, a widget animation effect, and the like.

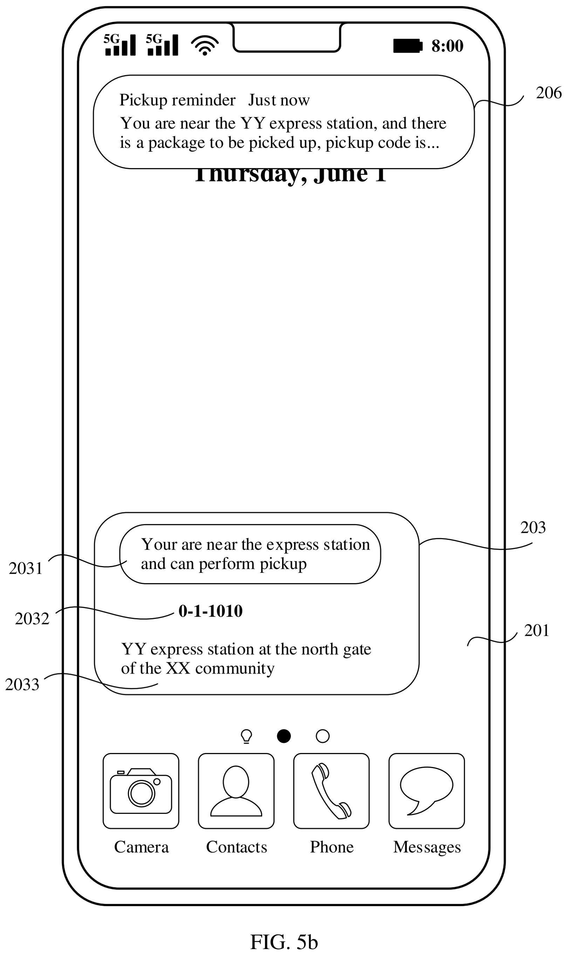

For example, as shown in FIG. 5b, the mobile phone may display a notification message 206 based on the service information corresponding to the service widget 203, and display content of the notification message 206 is "Pickup reminder. You are near the YY express station, and there is a package to be picked up, pickup code is...", to notify to perform pickup in a notification message manner. Alternatively, the notification message displayed by the mobile phone may be the notification message 202 shown in FIG. 5a(1), that is, the notification message 202 is displayed again for notifying. This is not limited herein. It should be understood that the notification message in this application may alternatively be displayed on a lock screen interface to notify the user that the user is near the pickup point and may perform pickup.

In addition, as shown in FIG. 5b, when the mobile phone determines that the positioning location is near the pickup place, in comparison with the service widget 203 in FIG. 5a(3), as shown in FIG. 5b, the mobile phone may update the display content of the control 2031 in the service widget 203 from "Waiting for pickup" to "Your are near the express station and can perform pickup", to notify, in a manner of updating the widget information, the user that the user is near the pickup place.

In addition, the mobile phone may further add an animation effect like jitter to the service widget 203 shown in FIG. 5b, to notify the user that the user is near the pickup place.

It should be understood that, in the foregoing embodiments, the service widget 203 for notifying of the pickup is used as an example for description. However, the method in embodiments of this application is also applicable to another type of service widget generated according to the method in embodiments of this application, for example, a video widget, a calendar event widget, or a to-do widget.

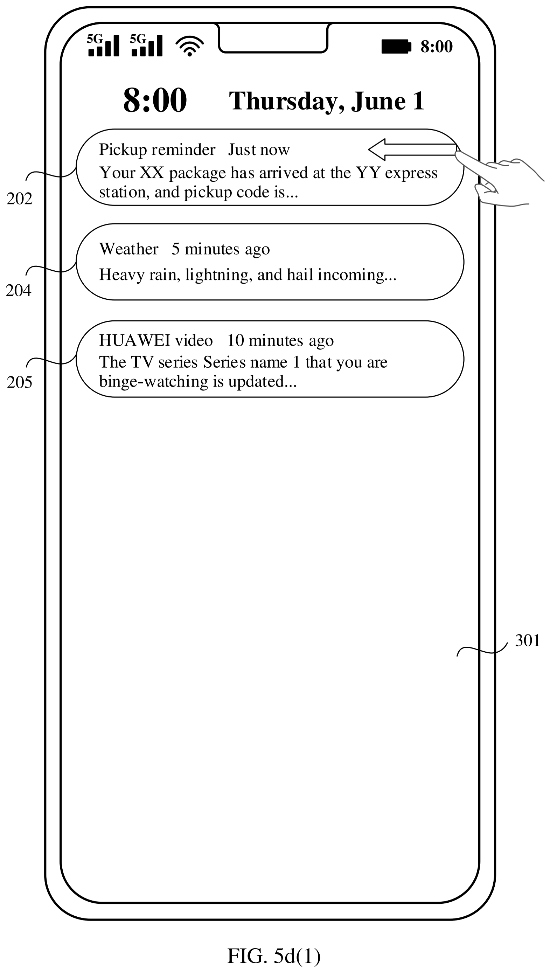

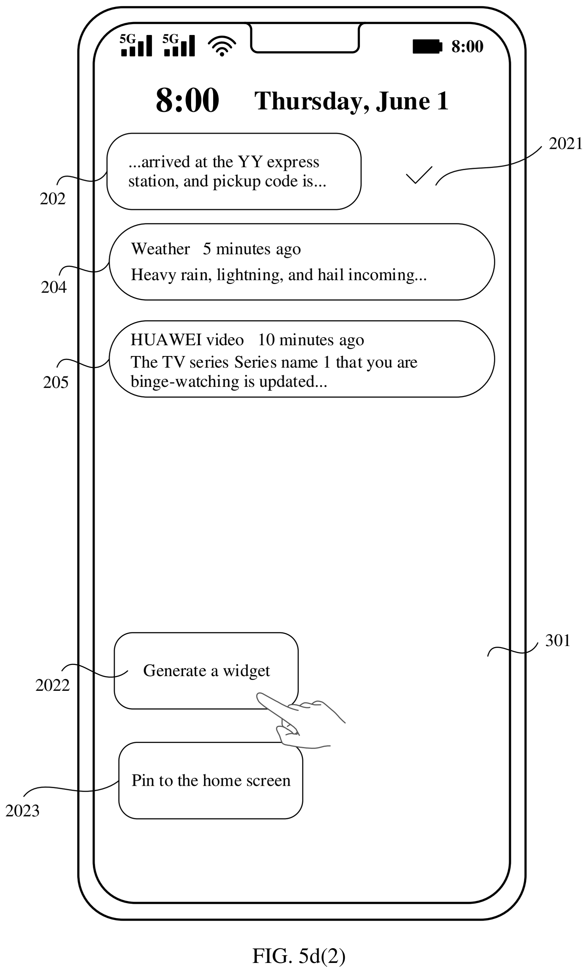

In a possible implementation, FIG. 5c(1) to FIG. 5c(3) and FIG. 5d(1) and FIG. 5d(2) are respectively diagrams of examples of two application scenarios.

Different from that in performing the pull-down operation on the currently displayed notification message shown in FIG. 5a(1) and FIG. 5a(2), to generate a corresponding service widget, in embodiments of FIG. 5c(1) to FIG. 5c(3) and FIG. 5d(1) and FIG. 5d(2), the user may alternatively select, from the notification bar interface, a notification message for which a service widget needs to be generated, to generate the corresponding service widget. In other words, an entry for generating the service widget for the notification message may be either the notification message pop-up interface described in embodiments of FIG. 5a(1) and FIG. 5a(2), or the notification bar interface of the notification message described in embodiments of FIG. 5c(1) to FIG. 5c(3) and FIG. 5d(1) and FIG. 5d(2). A principle and a process of generating the service widget in embodiments of FIG. 5c(1) to FIG. 5c(3) and FIG. 5d(1) and FIG. 5d(2), an implementation process of pinning the service widget to the home screen for display, and a process of changing a status of the service widget are the same as those in embodiments of FIG. 5a(1) to FIG. 5a(4). A difference lies in that preset inputs on the notification message and display manners of the service widget may be different.

Refer to FIG. 5c(1) to FIG. 5c(3). The following briefly describes a processing process in this application scenario with reference to FIG. 5c(1) to FIG. 5c(3). As shown in FIG. 5c(1), the user slides down from a top edge of a left half part of a display interface 201 along an arrow direction, to pull out and display a notification bar interface 301 shown in FIG. 5c(2).

It should be understood that an input operation performed by the user to display the notification bar interface is not limited to the pull-down operation performed from the top edge of the left half part of the display interface shown in FIG. 5c(1), and may alternatively be a pull-down operation performed from a top edge of a right half part of the display interface, or another input operation, to display the notification bar interface. This is not limited herein.

As shown in FIG. 5c(2), the notification message 202, the notification message 204, and the notification message 205 are displayed on the notification bar interface 301. The user touches and holds the notification message 202, and the mobile phone may generate, in response to the touch and hold operation (an example of the preset input shown in FIG. 4), the service widget 203 related to the notification message 202. As shown in FIG. 5c(3), the mobile phone may cancel display of the notification message 202 that is touched and held in the notification bar interface 301, and display the generated service widget 203 in a floating manner above the notification message on the notification bar interface 301.

In another embodiment, the user may alternatively perform a pull-down operation on the notification message 202 shown in FIG. 5c(2) in a manner of performing the pull-down operation on the notification message 202 shown in FIG. 5a(1). The mobile phone may present, in response to the user operation, a notification bar interface 301 shown in FIG. 5a(4). In the notification bar interface 301, the service widget 203, the notification message 204, and the notification message 205 are displayed in parallel at a same layer, and there is no case in which the service widget 203 shown in FIG. 5c(3) floats above another notification message.

Refer to FIG. 5d(1) and FIG. 5d(2). The following briefly describes a processing process in this application scenario with reference to FIG. 5d(1) and FIG. 5d(2). As shown in FIG. 5d(1), the user performs a left-slide operation on the notification message 202 from a right edge in the notification bar interface 301 along an arrow direction, to select a notification message of interest. The mobile phone may display, in response to the user operation, a notification bar interface 301 shown in FIG. 5d(2). In comparison with the notification message 202 in FIG. 5d(1), the mobile phone may shorten a control length of the notification message 202 shown in FIG. 5d(2), and reduce displayed message content. In addition, a control 2021 is displayed on a right side of the notification message 202, to indicate that the notification message 202 is in a selected state. In addition, as shown in FIG. 5d(2), the mobile phone may further display a control 2022 and a control 2023 on the notification bar interface 301 in response to the left-slide operation of the user. A text "Generate a widget" is displayed on the control 2022, and a text "Pin to the home screen" is displayed on the control 2023.

It should be understood that display locations of the control 2022 and the control 2023 are not limited in this application, and the control 2022 and the control 2023 may alternatively be displayed near the selected notification message 202, for example, displayed on a right side of the control 2021.

In some embodiments, when the user taps the control 2022 shown in FIG. 5d(2), the mobile phone may display, in response to the user operation, the notification bar interface 301 shown in FIG. 5c(3) or the notification bar interface 301 shown in FIG. 5a(4), to replace the notification message 202 in the notification bar interface 301 shown in FIG. 5d(2) with the service widget 203, and cancel display of the control 2021 and the control 2022. Optionally, the control 2023 shown in FIG. 5d(2) may also be displayed on the notification bar interface 301 shown in FIG. 5c(3) or the notification bar interface 301 shown in FIG. 5a(4), and the control 2023 is used to pin a generated single service widget to the home screen interface for display.

In this way, the mobile phone may replace a single notification message of interest selected by the user from a notification message list in the notification bar interface with a service widget. In addition, the mobile phone may further pin, based on a user operation, the generated service widget to the home screen interface for display.

In some embodiments, when the user directly taps the control 2023 shown in FIG. 5d(2) without tapping the control 2022 shown in FIG. 5d(2), the mobile phone may display, in response to the user operation, the display interface 201 shown in FIG. 5a(3), to generate the corresponding service widget 203 for the notification message 202 selected by the user from the notification list shown in FIG. 5d(2), and pin the service widget 203 to the home screen interface for display, without replacing the notification message 202 on the notification bar interface 301 shown in FIG. 5d(2) with the corresponding service widget 203. In this way, a user operation of converting a notification message into a service widget and pinning the service widget to a home screen for display can be reduced.

It should be understood that, when a notification message of interest is selected from the notification bar interface, to generate a service widget for the notification message, the preset input entered by the user is not limited to the foregoing examples of the touch and hold operation, the pull-down operation, and the slide operation (for example, the left-slide operation). A specific input manner may be flexibly configured based on a requirement.

In this embodiment, the user selects a notification message of interest (for example, that the user does not have time to view and process) from the notification bar interface. The mobile phone may generate, in response to the selection operation of the user, a service widget corresponding to the selected notification message, and replace the notification message with the service widget. In this way, when the user does not perform, for various reasons, an operation on a notification message displayed in real time to generate a corresponding service widget, the user may further select the notification message of interest on the notification bar interface to trigger the mobile phone to generate the corresponding service widget, thereby avoiding a case in which the user misses a time window in which the notification message is displayed and the service widget cannot be generated for the notification message, and providing more entries for the user to generate a service widget for a same notification message.

In a possible implementation, FIG. 5e(1) to FIG. 5e(4) are diagrams of an example of another application scenario.

Different from those in generating the service widget for the single notification message and pining the single service widget to the home screen in embodiments of FIG. 5a(1) to FIG. 5d(2), in an embodiment of FIG. 5e(1) to FIG. 5e(4), the user may select, on the notification bar interface, a plurality of notification messages for which service widgets need to be generated, so that the mobile phone may generate the corresponding service widgets in batches, and the mobile phone pins, based on an input of the user, the plurality of service widgets to the home screen in batches for display. A principle and a process of generating a single service widget in the embodiment of FIG. 5e(1) to FIG. 5e(4), an implementation process of pinning a single service widget to the home screen for display, and an implementation process of changing a status of the single service widget may be the same as corresponding processes described in FIG. 5a(1) to FIG. 5d(2). Details are not described herein again. The following mainly describes a process of processing the notification messages in batches and a process of pinning the service widgets to the home screen in batches for display in the embodiment of FIG. 5e(1) to FIG. 5e(4).

Refer to FIG. 5e(1) to FIG. 5e(4). The following briefly describes a processing process in this application scenario with reference to FIG. 5e(1) to FIG. 5e(4). As shown in FIG. 5e(1), the user performs, on the notification bar interface 301, the left-slide operation shown in FIG. 5d(1) on each of the plurality of notification messages in the notification message list from a right edge of the message along an arrow direction, to select a plurality of notification messages of interest, which are respectively the notification message 202, the notification message 204, and the notification message 205. Herein, a remaining notification message 207 is not selected. Refer to FIG. 5e(2). In response to the left-slide operation performed by the user on each notification message, the mobile phone may shorten a control length of the corresponding notification message, reduce displayed message content, and display, on a right side of the corresponding notification message, a control indicating that the notification message is in a selected state. Herein, a control 2021, a control 2041, and a control 2051 respectively indicating that the notification message 202, the notification message 204, and the notification message 205 are in the selected state are shown. In addition, different from that in the embodiment in FIG. 5d(1) and FIG. 5d(2), because the user selects the plurality of notification messages herein, as shown in FIG. 5e(2), the mobile phone may further display a control 208 and a control 209 on the notification bar interface 301 in response to the respective left-slide operations performed by the user on the plurality of notification messages. Optionally, a control 210 shown in FIG. 5e(3) may be further displayed. A text "Generate widgets in batches" is displayed on the control 208, and a text "Delete messages in batches" is displayed on the control 209.

In some embodiments, when the user taps the control 209, the mobile phone may delete the selected notification message 202, the selected notification message 204, and the selected notification message 205 from the notification message list on the notification bar interface 301 in response to the user operation.

In some embodiments, when the user taps the control 208 shown in FIG. 5e(2), the mobile phone may generate respective service widgets for the selected notification message 202, the selected notification message 204, and the selected notification message 205 in batches in response to the user operation, and replace the three notification messages displayed on the notification bar interface 301 with the respective service widgets, to display a notification bar interface 301 shown in FIG. 5e(3).

As shown in FIG. 5e(3), the mobile phone may replace the notification message 202 shown in FIG. 5e(2) with the service widget 203, and cancel display of the control 2021. In addition, the mobile phone may replace the notification message 204 shown in FIG. 5e(2) with a service widget 2042, and cancel display of the control 2041. The mobile phone may further replace the notification message 205 shown in FIG. 5e(2) with a service widget 403, and cancel display of the control 2051.

In embodiments shown in FIG. 5e(3), the service widget 203, the service widget 2042, the service widget 403, and the notification message 207 are displayed in parallel at a same layer. In some embodiments, the service widget 203, the service widget 2042, and the service widget 403 may alternatively float above a notification message (for example, the notification message 207) that is not converted into a service widget, to display the service widget and the unread notification message at different layers on the notification bar interface. A display manner of the service widget and the unread notification message that is not converted into the service widget on the notification bar interface is not limited in this application.

It can be learned from FIG. 5e(3) that the mobile phone performs AI identification on the notification message 204 shown in FIG. 5e(1) to determine service information, so as to display the generated service widget 2042. Widget information of the service widget 2042 is "Heavy rain in Beijing tomorrow. The road will be congested. Please arrange routes in advance", so that a notification message of a weather application is converted into a weather reminder widget with structured service information, to notify the user to arrange a trip for tomorrow in advance. In this way, a reminder effect of key content of the notification message is more obvious.

It can be learned from FIG. 5e(3) that the mobile phone performs AI identification on the notification message 205 shown in FIG. 5e(1) to determine service information, so as to display the generated service widget 403. Message content of the notification message 205 is "The TV series Series name 1 that you are binge-watching is updated to the 20^{th} episode", to notify the user of an update progress of the TV series that the user likes to watch. As shown in FIG. 5e(3), the service widget 403 that is generated by the mobile phone and that corresponds to the notification message 205 is a video widget. A control 4031, a control 4032, and a control 4033 are displayed on the service widget 403. The control 4031 is used to display a poster thumbnail of the TV series. The control 4032 is used to display a series name of the TV series that the user is binge-watching, which is "Series name 1" herein. The control 4033 is used to display a quantity of updated episodes of the TV series, which is "Updated to the 20^{th} episode" herein. In this way, the mobile phone converts the notification message 205 into a video widget with structured service information, so that the user can be effectively notified of some current key information of the TV series that the user likes to watch, for example, a quantity of updated episodes.

In addition, as shown in FIG. 5e(1), due to a length limitation of a control of a notification message, the notification message displayed by the mobile phone on the notification bar interface 301 cannot completely show message content of the notification message. The mobile phone can display the complete message content of the notification message only after the user selects the notification message. However, in this application, a notification message in which the user is interested is converted into a service widget. As shown in FIG. 5e(3), the service widget can be used to display main information of the corresponding notification message in a structured manner, so that when opening the notification bar interface 301 next time, the user can intuitively and quickly learn, through an expanded service widget, the main information of the notification message in which the user is interested.

Still refer to FIG. 5e(3). The user taps the control 210, and the mobile phone may pin, in batches in response to the user operation, service widgets, namely, the service widget 203, the service widget 2042, and the service widget 403, displayed on the notification bar interface 301, to the home screen interface for display, to display a display interface 201 (a home screen interface) shown in FIG. 5e(4). As shown in FIG. 5e(4), the service widget 203, the service widget 2042, and the service widget 403 are displayed on the display interface 201.

Optionally, the user may alternatively indicate, on the notification bar interface 301 shown in FIG. 5e(3), an operation of deleting service widgets in batches (for example, a button is provided on the notification bar interface 301). The mobile phone may delete all service widgets, namely, the service widget 203, the service widget 2042, and the service widget 403, on the notification bar interface 301 in batches in response to the operation. In this way, when the user does not need to use these service widgets, these service widgets may be deleted in batches.

In this embodiment, when the user selects a plurality of notification messages on the notification bar interface, the mobile phone may respond to the user operation, to convert, in batches, the plurality of selected notification messages into service widgets corresponding to the notification messages, and replace each notification message with a service widget for display, to improve efficiency of converting the notification messages into the service widgets, and provide a manner of processing the plurality of notification messages on the notification bar interface in batches. In addition, the user may further indicate an operation of pinning, in batches to the home screen, a plurality of service widgets displayed on the notification bar interface (for example, tapping the control 210 shown in FIG. 5e(3), but not limited thereto). The mobile phone may pin, to the home screen interface in response to the operation for display at one time, the plurality of service widgets displayed on the notification bar interface, to improve operation efficiency of displaying the plurality of service widgets on the home screen.

In some embodiments, after the user selects the plurality of notification messages by performing the left-slide operation shown in FIG. 5e(1), this application imposes no limitation on an operation that is triggered by the user and that indicates to generate service widgets in batches for the plurality of notification messages. The operation may be an operation of tapping the control 208 shown in FIG. 5e(2), or may be a pull-down operation or a touch and hold operation performed on any one of the notification message 202, the notification message 204, and the notification message 205 shown in FIG. 5e(2). The mobile phone may generate, in response to the operation of generating the service widgets in batches for the plurality of notification messages, the respective service widgets for the notification message 202, the notification message 204, and the notification message 205, and replace the notification message 202, the notification message 204, and the notification message 205 with the respective service widgets for display the service widgets.

In some embodiments, as shown in FIG. 5e(3), when a plurality of service widgets are displayed on the notification bar interface 301, the operation that is triggered by the user and that indicates to pin the service widgets to the home screen for display is not limited in this application, and the operation may be the operation of tapping the control 210 shown in FIG. 5e(3). In some embodiments, the user may also perform any operation, such as a left-slide operation, on any one of the plurality of service widgets shown in FIG. 5e(3), so that the mobile phone may pin, in response to the operation, the service widget on which the left-slide operation is triggered to the home screen for display. Alternatively, the mobile phone pins, in response to the operation, all the plurality of service widgets displayed on the notification bar interface 301 to the home screen for display. Certainly, if some service widgets have been pinned to the home screen for display, an operation of pinning the service widgets to the home screen for display is not required.

In a possible implementation, the mobile phone may adjust, based on a status change (for example, a change of time, a place, media information (for example, video update information), or whether an event ends) of an event related to the service widget generated in this application, a status of the generated and displayed service widget. For example, an event related to the service widget 203 shown in FIG. 5e(1) to FIG. 5e(4) may be a pickup event, or a to-do event; an event related to the service widget 403 shown in FIG. 5e(1) to FIG. 5e(4) is a video update event; and an event related to the service widget 2042 shown in FIG. 5e(1) to FIG. 5e(4) is a weather reminder event.

For example, for the service widget 203 shown in FIG. 5e(4), when the mobile phone detects that the pickup event corresponding to the service widget 203 has ended (for example, pickup has been completed), the mobile phone may cancel display of the service widget 203. For example, the mobile phone cancels display of the service widget 203 on the notification bar interface 301 shown in FIG. 5a(4), and cancels display of the service widget 203 pinned to the home screen shown in FIG. 5e(4). The mobile phone may monitor, by invoking an interface of a related shopping application, information about whether a corresponding package is picked up. A specific monitoring manner is not limited. In this way, the status of the service widget generated in this application can be consistent with the status of the event related to the service widget. In this example, the mobile phone can reduce unnecessary display of the service widget, to reduce occupation on display space of the home screen interface, and improve utilization of the display space.

For another example, for the service widget 403 shown in FIG. 5e(4), the mobile phone determines, by using the AI module, that the related event corresponding to the service widget 403 is an update event of the TV series of the "Series name 1". In this case, when the mobile phone detects, by using the AI module, a message (not limited to a notification message) about an episode update of the TV series of the "Series name 1", the mobile phone does not need to generate a video widget similar to the service widget 403 for the "Series name 1", but updates a quantity of episodes displayed by the control 4033 in the service widget 403 shown in FIG. 5e(4), so that the quantity of episodes displayed by the service widget 403 can be updated in real time with the episode update of the TV series of the "Series name 1".

For another example, for the service widget 2042 shown in FIG. 5e(4), the mobile phone determines, by using the AI module, that the related event corresponding to the service widget 2042 is a heavy rain reminder event on June 2, 2023. In this case, when the mobile phone monitors, by using the AI module, that system time is updated from June 1 to June 2, the mobile phone may update a title of the service widget 2042 shown in FIG. 5e(4) from "Heavy rain tomorrow in Beijing" to "Heavy rain today in Beijing", so that display content of the service widget 2042 can change with time. When the mobile phone detects that the time is updated to June 3, the mobile phone may cancel display of the service widget 2042. In this way, the widget status of the service widget 2042 generated in this application can be updated with information such as the time and a place.

In embodiments of this application, a widget status of the service widget generated by the mobile phone may change with a status change of the event related to the service widget, and/or change with time, a place (a positioning location), and the like, so that the status of the service widget can keep consistent with the status of the related event, thereby facilitating precise notifying of the related event based on the status change of the service widget.

In FIG. 5a(1) to FIG. 5e(4), same reference numerals indicate same or similar objects. Therefore, reference numerals in the figures are not described one by one. For reference numerals not mentioned in the figures, refer to the explanations and descriptions of the same reference numerals mentioned in FIG. 5a(1) to FIG. 5e(4). Details are not described herein again.

### Example 2

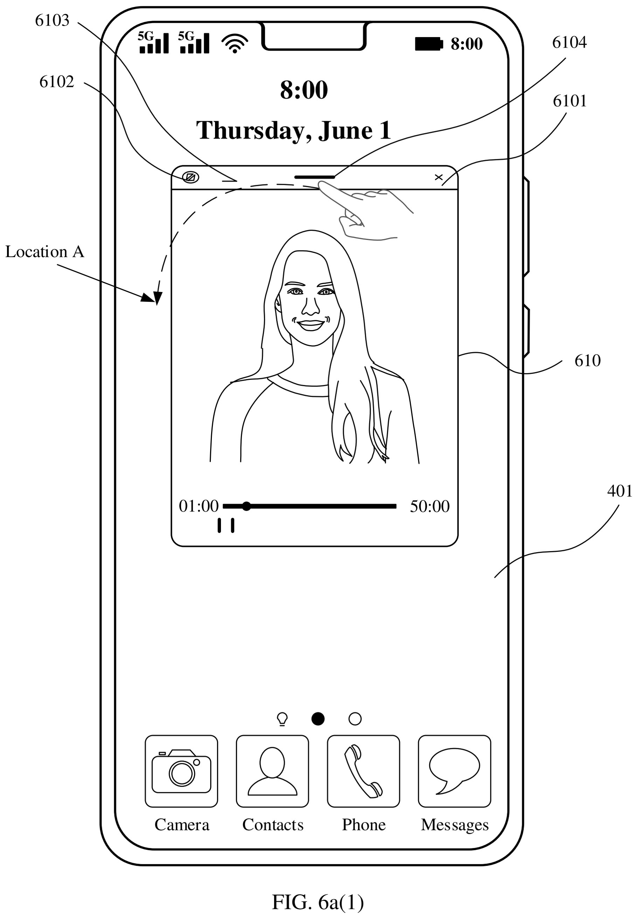

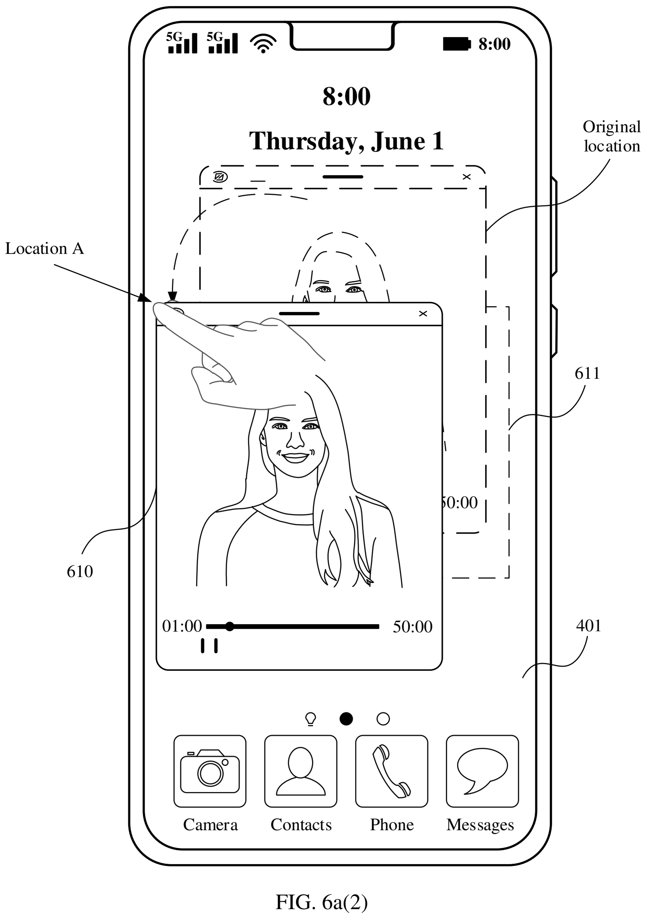

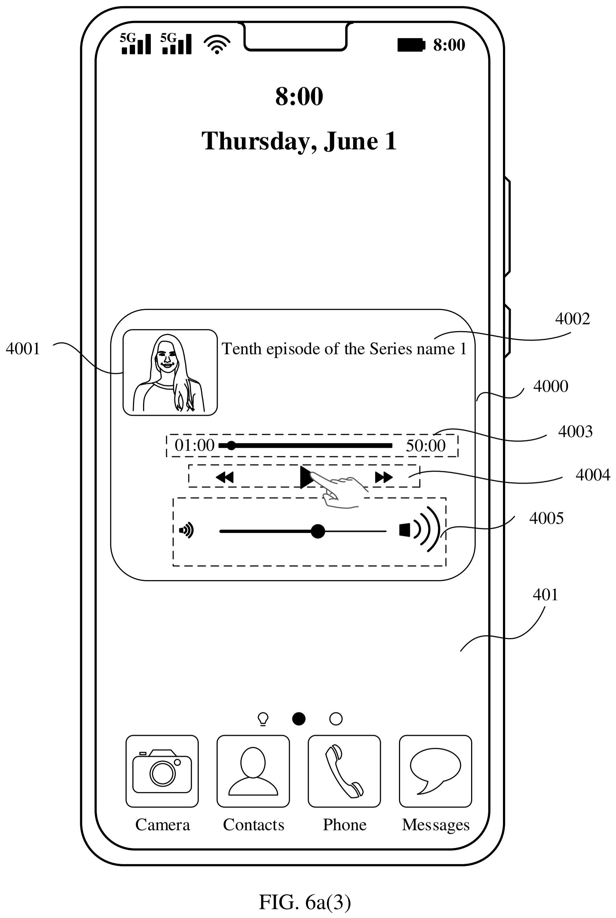

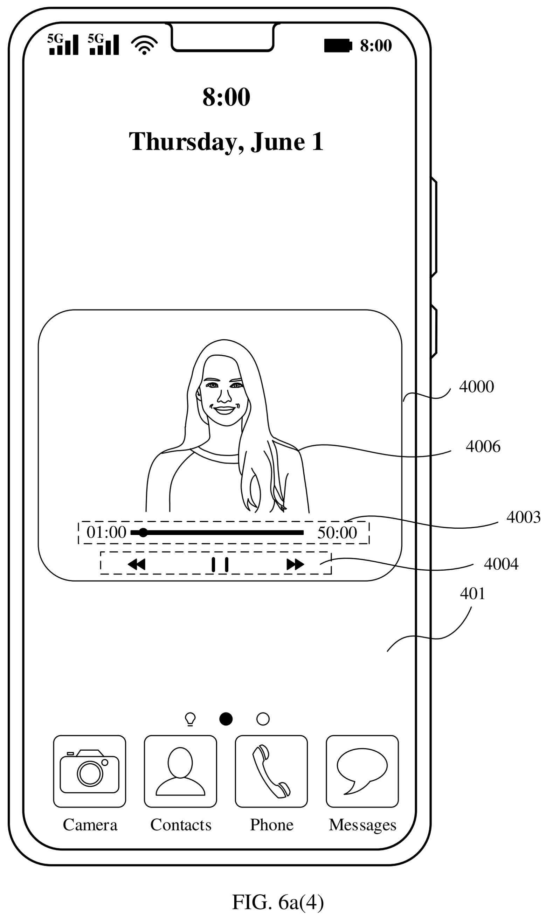

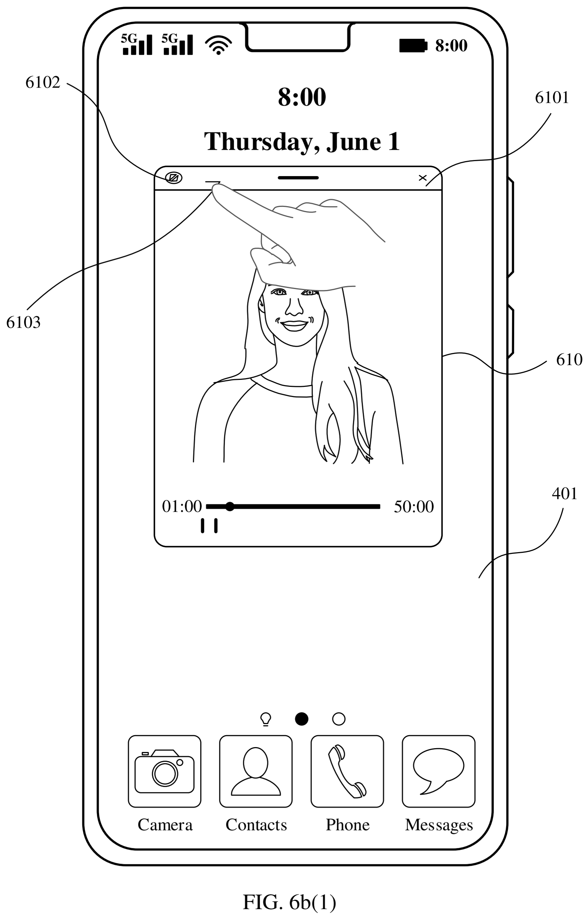

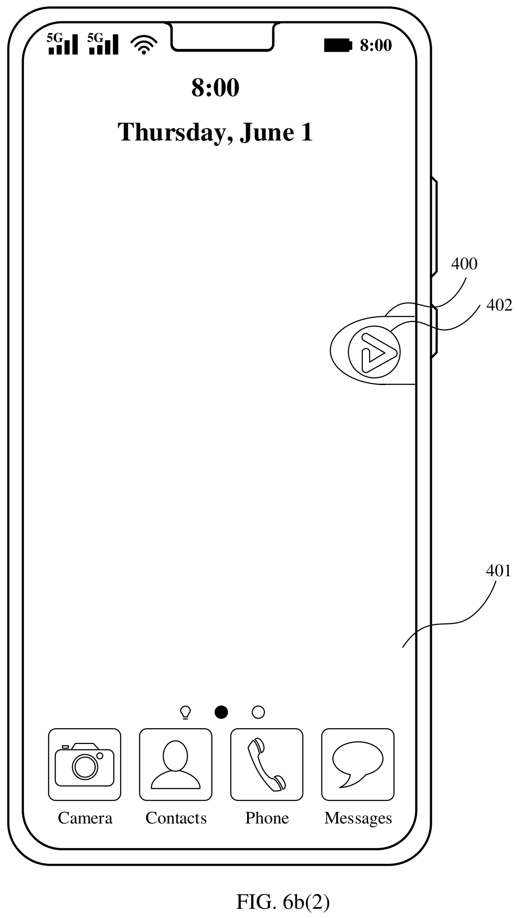

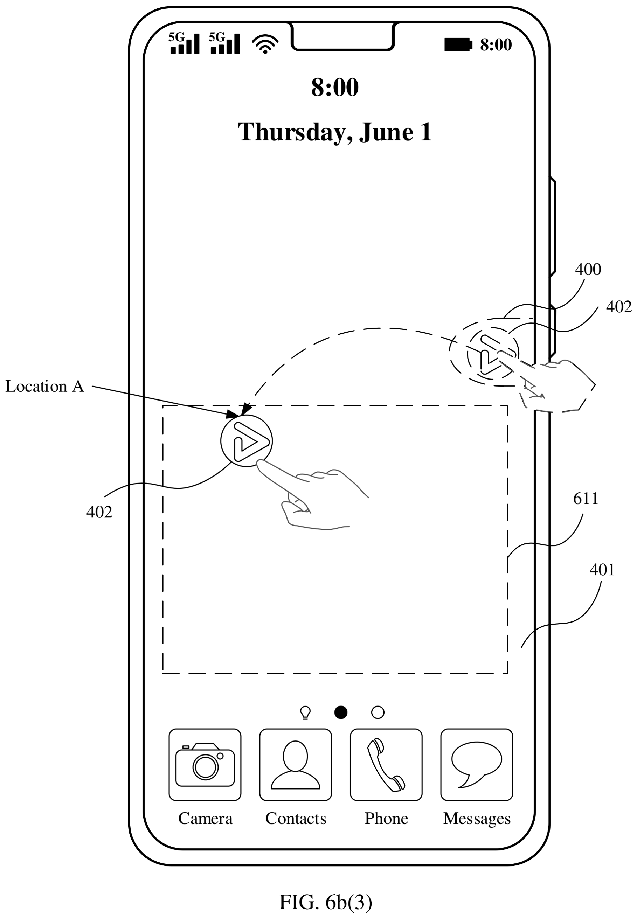

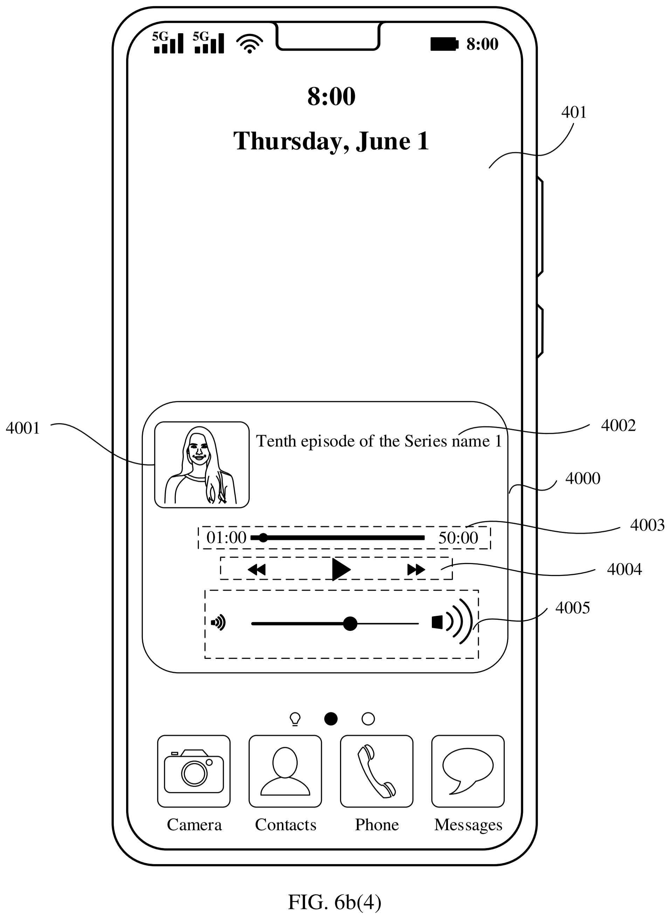

Refer to FIG. 6a(1) to FIG. 6d. The mobile phone may convert a movable control in which the user is interested into a service widget that matches the movable control. The movable control may be, for example, a floating window 610 shown in FIG. 6a(1), a floating bubble 402 shown in FIG. 6b(2), or a relay station control (which is a control 406 or a control 407 herein) shown in FIG. 6d(2).

In a possible implementation, refer to diagrams of an application scenario shown in FIG. 6a(1) to FIG. 6a(4). As shown in FIG. 6a(1), a display interface 401 of the mobile phone is a home screen interface, and the display interface 401 may include one or more controls. The controls include but are not limited to a power icon, a network icon, an application icon, and the like. In addition, the display interface 401 further includes the floating window 610. Display content of the floating window 610 is a video playing picture of a HUAWEI video application, and a video is being played on the floating window 610.

As shown in FIG. 6a(1), the floating window 610 may include but is not limited to a control 6101, a control 6102, a control 6103, and a control 6104. The control 6101 is used to close the floating window 610, the control 6102 is used to display the display content of the floating window 610 in full screen, the control 6103 is used to minimize the floating window 610, and the control 6104 is used to move the floating window 610.

As shown in FIG. 6a(1), the user touches and holds the control 6104, and drags the floating window 610 to a location A along a dashed arrow direction. The location A is a blank location on the home screen interface. As shown in FIG. 6a(2), the user drags, by touching and holding the control 6104, the floating window 610 from an original location (corresponding to a display location of the floating window 610 shown in FIG. 6a(1)) to the location A. The mobile phone may switch, in response to the drag operation, the floating window 610 from the original location to the location A shown in FIG. 6a(2). Optionally, when the user drags the floating window 610 to the location A, the user does not release the floating window 610, and the mobile phone may display, in response to the drag operation, a dashed box 611 on the display interface 401 based on the location A.

It should be understood that a dashed line of an original location of the floating window 610 and a diagram of the floating window shown in FIG. 6a(2) are merely used to help a reader to determine a location at which the floating window 610 is located before the floating window 610 is dragged by the user. In actual application, the mobile phone may not display the location at which the floating window 610 is located before the floating window 610 is dragged.

In some embodiments, when an area in which the location to which the floating window 610 is dragged by the user on the home screen interface is located is insufficient to place a video playing widget (for example, there is an application icon near the location A), the mobile phone may notify the user that the location to which the floating window 610 is currently dragged is unavailable.

In this embodiment, when the user drags the floating window 610 to the location A on the home screen interface and releases a finger, the mobile phone determines, in response to the user operation, service information related to the floating window 610, and generates a corresponding service widget 4000 based on the service information. As shown in FIG. 6a(3), the mobile phone may display, in response to the user operation, the generated service widget 4000 in an area in which the dashed box 611 shown in FIG. 6a(2) is located. Optionally, the mobile phone may minimize, in response to the user operation, the floating window 610, or close the floating window 610. This is not limited herein.

The floating window 610 is playing a first minute of a tenth episode of the TV series named "Series name 1". In this case, the service information determined by the mobile phone for the floating window 610 may include but is not limited to information such as a video application name being HUAWEI video, a name of a currently played video being "Series name 1", a video playing progress being the first minute of the tenth episode, and a video playing volume value.

The mobile phone may generate, based on the service information, the service widget 4000 shown in FIG. 6a(3) and display the service widget 4000. As shown in FIG. 6a(3), the service widget 4000 includes but is not limited to a control 4001, a control 4002, a control 4003, a control 4004, and a control 4005. The control 4001 is used to display a poster thumbnail of the TV series. The control 4002 is used to display a name (herein, "Series name 1") of the TV series that the user just plays in the floating window 610 and a currently played episode (herein, the tenth episode). The control 4003 is a video playing progress bar of the TV series, and a current playing progress is the first minute of the tenth episode. The control 4004 is used to start or pause playing of the TV series based on the current playing progress, and adjust to play to a previous episode or a next episode. The control 4005 is used to adjust a playing volume of the video.

In this way, the mobile phone may display, on the home screen interface based on a drag operation performed by the user on the floating window, a service widget that matches content of the floating window. Structured service information related to information in the floating window may be displayed on the service widget.

In some embodiments, for example, if the user taps a play start button on the control 4004 for the service widget 4000 shown in FIG. 6a(3), the mobile phone may play the video on the service widget 4000 based on the playing progress in response to the user operation, to refresh display content of the service widget 6000 to display content of the service widget 6000 shown in FIG. 6a(4).

As shown in FIG. 6a(4), the refreshed service widget 6000 displays the control 4003 and the control 4004, and also displays a video picture 4006. A video picture of the video that is played based on the video playing progress indicated in FIG. 6a(3) is displayed on the refreshed service widget 6000. In addition, the button on the control 4004 is refreshed from the triangle play start button shown in FIG. 6a(3) to a play pause button of double vertical bars shown in FIG. 6a(4).

It should be understood that, after the user taps the play start button on the control 4004 shown in FIG. 6a(3), the mobile phone may play the video based on the corresponding playing progress in response to the operation of the user on the service widget 6000. A play window for displaying a playing picture of the video is not limited in this application. The video may be played on the service widget 6000 shown in FIG. 6a(4), or the video may be played on the floating window 610, or the video of the HUAWEI video application at the playing progress may be played on a full-screen window or a split-screen window.

In this way, the service widget 4000 generated based on the floating window in this application may be an interactive service widget. In actual application, interaction content is not limited to starting or pausing play of the video, and may also be adjusting a currently played episode or the playing progress, or adjusting the playing volume, or the like. Specific interaction content may vary with service information provided by the service widget. This is not limited herein.

In this embodiment, the mobile phone may determine, based on a preset input (for example, a drag operation, which is not limited) of the user on the floating window, service information related to the floating window, and generate a service widget based on the service information, to convert the floating window into the service widget. Widget information of the service widget can match display content of the floating window, and related information of the floating window is displayed on the service widget in a structured service information manner. In this way, the user may convert the floating window into the service widget, to record, on the service widget, important content currently displayed on the floating window, so that the user is notified, based on the service widget, of some operations (for example, operations such as playing a video and viewing a note) recently performed by the user or some information viewed by the user.

In some embodiments, as shown in FIG. 6a(3) and FIG. 6a(4), the service widget generated in this application is interactive. In addition, the service widget generated for the floating window in this application may also change with a status change of a related event (for example, a media play and control event). For example, the service widget 6000 generated in embodiments of FIG. 6a(1) to FIG. 6a(4) is a video playing widget, and a related event of the service widget 6000 is a video playing event. Changes of statuses such as starting play of a video, pausing play of a video, adjusting a playing progress, adjusting a played episode, and adjusting a playing volume may cause a change of a status of the service widget 6000.

In embodiments of FIG. 6a(1) to FIG. 6a(4), an example in which the floating window is dragged on the home screen interface to generate the service widget is used for description. In another embodiment, the user may alternatively drag the floating window to an application interface (for example, a chat session interface) other than the home screen interface. In this case, the mobile phone may generate, in response to the drag operation, a service widget related to the floating window, and share the service widget to the application interface. For example, the mobile phone may share the service widget as a session message to the chat session interface. In this case, the service widget may not be the service widget 6000 that supports media play and control shown in FIG. 6a(1) to FIG. 6a(4), but is an information display widget, for example, similar to the service widget 403 shown in FIG. 5e(1) to FIG. 5e(4). Specific service information carried in the generated service widget is not limited in this application, and may be different based on different to-be-processed objects shown in FIG. 4.

Optionally, in some embodiments, when a related service widget is generated for a to-be-processed object shown in FIG. 4, service information may be determined with reference to related information of the to-be-processed object, and with reference to a user profile, scenario information, and the like, to generate the service widget based on the service information. The embodiments of FIG. 6a(1) to FIG. 6a(4) are used as examples for description. For example, the user profile includes the following information: for example, a user age, a user gender, and a type of a video that the user likes to watch. User habit may include information that the user recently frequently watches the TV series of the "Series name 1", and frequently watches a TV series of a "Series name 2". The scenario information may include information about several currently popular movies of the HUAWEI video application. In this case, the service widget generated by the mobile phone based on the to-be-processed object (the floating window herein, which is not limited), the user profile, the scenario information, and the like may include information about some movies and TV series related to the user profile, the foregoing "Series name 1", the foregoing "Series name 2", and the foregoing several popular movies. Correspondingly, a size and a style of the service widget may also be different from a size and a style of the service widget 6000 shown in FIG. 6a(3) or FIG. 6a(4).

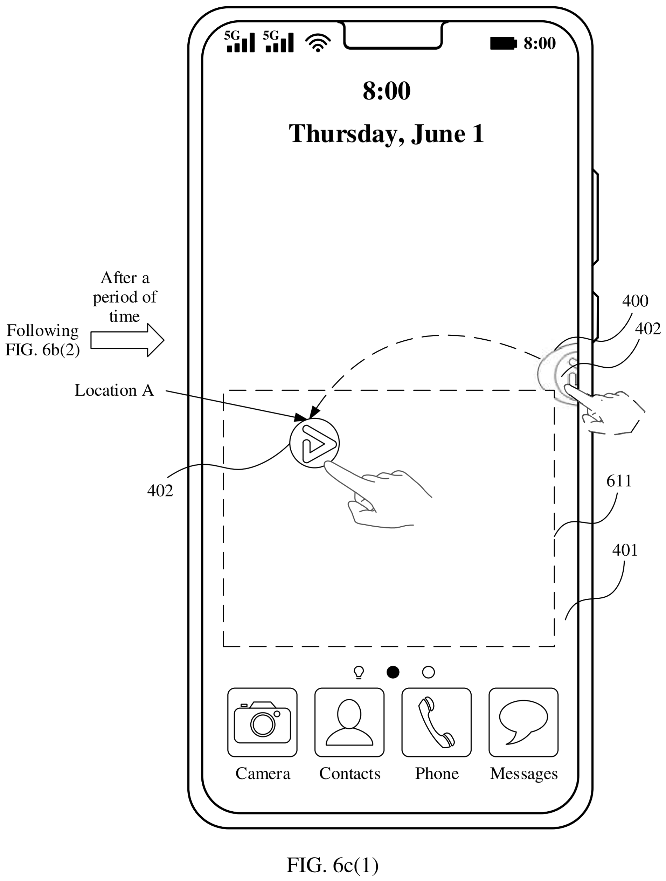

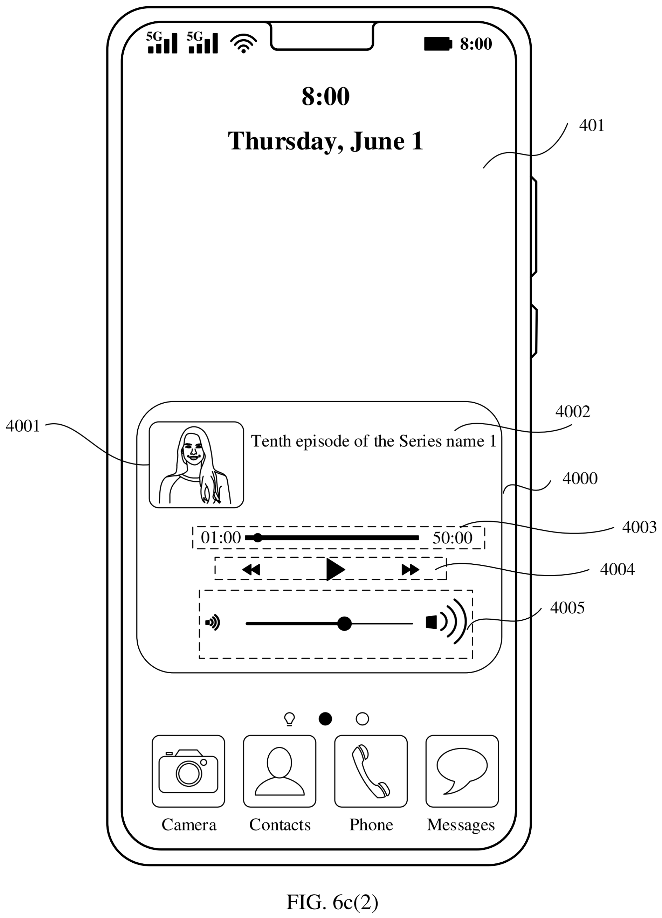

In a possible implementation, FIG. 6b and FIG. 6c(1) and FIG. 6c(2) are respectively diagrams of examples of other application scenarios.

Different from embodiments of FIG. 6a(1) to FIG. 6a(4) in which the mobile phone generates the service widget in response to the drag operation performed by the user on the floating window, in embodiments of FIG. 6b and FIG. 6c(1) and FIG. 6c(2), the user may perform a drag operation on a minimized floating window (which may be referred to as a floating bubble, for example, the floating bubble 402 shown in FIG. 6b and the floating bubble 404 shown in FIG. 6c(1) and FIG. 6c(2)), and the mobile phone may generate, in response to the drag operation, a service widget related to the floating bubble. Other processes are the same as the implementation processes of the related embodiments of FIG. 6a(1) to FIG. 6a(4). Details are not described herein again. For details, refer to the foregoing descriptions.

Refer to FIG. 6b. The following briefly describes a processing process in this application scenario with reference to FIG. 6b. As shown in FIG. 6b(1), a floating window 610 is displayed on the display interface 401 of the mobile phone, and a video is being played on the floating window 610. The user taps the control 6103, and the mobile phone may minimize the floating window 610 in response to the user operation, to display a display interface 401 shown in FIG. 6b(2). As shown in FIG. 6b(2), the floating window 610 is minimized to the floating bubble 402, and the floating bubble 402 is located on the control 400. As shown in FIG. 6b(3), the user drags the floating bubble 402 shown in FIG. 6b(2) to a location A in a blank area of the home screen interface along a dashed arrow direction. The mobile phone may display, in response to the drag operation, a dashed box 611 including the location A on the display interface 401, and cancel display of the control 400 and the floating bubble 402 on the control 400 (herein, the dashed line indicates that display is no longer performed). After the user drags the floating bubble 402 to the location A shown in FIG. 6b(3), the finger of the user leaves the location A, and as shown in FIG. 6b(4), the mobile phone may display, in response to the user operation, the service widget 4000 generated based on the floating bubble 402 at a location of the dashed box 611.

In some embodiments, FIG. 6c(1) and FIG. 6c(2) are diagrams of an example of another application scenario in which a floating bubble is dragged to generate a service widget.

As shown in FIG. 6c(1) and FIG. 6c(2), after FIG. 6b(1) and FIG. 6b(2), the floating window 610 is minimized to the floating bubble 402 on the control 400 shown in FIG. 6b(2). The control 400 may be displayed in a scaling manner on a side edge of the mobile phone. After the mobile phone displays the display interface 401 shown in FIG. 6b(2) for a period of time (for example, 2s, which is not specifically limited), the control 400 and the control 402 inside the control 400 may be switched from an extended state shown in FIG. 6b(2) to a contracted state shown in FIG. 6c(1). When the control 400 and the control 402 inside the control 400 are in the contracted state shown in FIG. 6c(1), as shown in FIG. 6c(1), the user may also drag the control 402 to the location A along the dashed arrow direction, and the mobile phone may display the dashed box 611 in response to the dragging operation. After the finger of the user leaves the location A, the mobile phone may display, in response to the user operation, the display interface 401 shown in FIG. 6c(2), to display, in the dashed box 611, the service widget 4000 generated for the floating bubble 402.

In embodiments of this application, when the user expects to generate a service widget for content of a floating window, the user may perform a drag operation (an example of the preset input shown in FIG. 4) on the floating window according to embodiments shown in FIG. 6a(1) to FIG. 6a(4), and may also perform a drag operation (an example of the preset input shown in FIG. 4) on a floating bubble obtained by minimizing the floating window, so that the mobile phone generates a corresponding service widget in response to the user operation. In this way, more input manners of generating the service widget for the content of the floating window are provided for the user, and the user may flexibly select an input manner based on a requirement, to trigger the mobile phone to invoke the AI module to identify service information for the floating window or the floating bubble, to generate the corresponding service widget based on the service information. Certainly, the preset input that is triggered by the floating window or the floating bubble and that indicates to perform AI identification is not limited to the foregoing dragging operation, and the dragging direction is not limited to the dashed arrow direction shown in FIG. 6b and FIG. 6c(1) and FIG. 6c(2), and may be any direction. This is not limited herein.

In a possible implementation, FIG. 6d is a diagram of an example of another application scenario.

Different from embodiments of FIG. 6a(1) to FIG. 6c(1) and FIG. 6c(2) in which the mobile phone generates a single service widget in response to a drag operation performed by the user on a single floating window or a single floating bubble, in embodiments of FIG. 6d, the user may perform a drag operation on a relay station control (for example, the control 406 and the control 407 shown in FIG. 6d), and the mobile phone may generate, in response to the drag operation, a service widget related to each relay station control for the relay station control, to implement batch generation of service widgets. Specific implementation details and other related processes are the same as the implementation processes of the related embodiments of FIG. 6a(1) to FIG. 6c(2). Details are not described herein again. For details, refer to the foregoing descriptions.

Refer to FIG. 6d. The following briefly describes a processing process in this application scenario with reference to FIG. 6d. As shown in FIG. 6d(1), the control 400 is displayed on the display interface 401 of the mobile phone, and the control 400 includes a floating bubble 404. Different from the floating bubble 402 in embodiments of FIG. 6b and FIG. 6c(1) and FIG. 6c(2), the floating bubble 404 indicates that there are floating windows of a plurality of applications in a minimized state, for example, a floating window of a Notepad application and a floating window of the HUAWEI video application. The user taps the floating bubble 404, and the mobile phone may display, in response to the user operation, the display interface 401 shown in FIG. 6d(2), to expand the control 400 and the floating bubble 404 inside the control 400 into a relay station window 405 shown in FIG. 6d(2). The relay station window 405 may include a control 406 and a control 407. The control 406 indicates a minimized floating window of the Notepad application, and the control 407 indicates a minimized floating window of the HUAWEI video application. The control 406 includes a close button 6101, and the close button 6101 is used to close the floating window of the Notepad application. After the user taps the close button 6101, the mobile phone may close the floating window of the Notepad application in response to the user operation, and cancel display of a text "Notepad" shown in the relay station window 405, a corresponding Notepad icon, and the control 406, so that only a control related to the HUAWEI video, for example, the control 407 is displayed on the relay station window 405. Similarly, the control 407 also includes a close button 6101, used to close the floating window of the HUAWEI video application, and a function of the close button 6101 is similar to that of the control 6101 shown in FIG. 6a(1) to FIG. 6a(4) and FIG. 6b. In addition, the relay station window 405 further includes a control 410. After the user taps the control 410, the mobile phone may restore, in response to the user operation, the relay station window 405 to the minimized control 400 shown in FIG. 6d(1).

Still refer to FIG. 6d(2). The user presses a related control (for example, the control 406 or the control 407) of any relay application in the relay station window 405, where the user presses the control 406 and drags the control 406 to a location B along the dashed arrow direction. The mobile phone may display a dashed box 612 and the dashed box 611 (the dashed box is optional) near the location B in response to the user operation, where a size of the dashed box 612 matches a size of a service widget generated by the mobile phone for the Notepad application, and a size of the dashed box 611 matches a size of a service widget generated by the mobile phone for the HUAWEI video application. FIG. 6d(3) shows an expanded view of the control 406 shown in FIG. 6d(2), and an expanded view of the control 407 shown in FIG. 6d(2) is similar to the control 610 shown in FIG. 6a(1) to FIG. 6a(4) and FIG. 6b. A difference lies only in that the control 6101 has a specific size difference. In addition, the mobile phone may further generate, in response to the operation of dragging the control 406 to the location B by the user, a service widget 409 related to the floating window corresponding to the control 406, and generate a service widget 4000 related to the floating window (for example, the floating window 610 shown in FIG. 6a(1) to FIG. 6a(4) and FIG. 6b) corresponding to the control 407. In addition, as shown in FIG. 6d(4), the mobile phone may display the service widget 409 in an area corresponding to the dashed box 612 shown in FIG. 6d(2), and display the service widget 4000 in an area corresponding to the dashed box 611 shown in FIG. 6d(2).

When the mobile phone generates service information based on the control 406 shown in FIG. 6d, and generates the service widget 409 based on the service information, the mobile phone may generate the service information based on display content when the floating window of the Notepad application is minimized, for example, display content shown in FIG. 6d(3), and optionally, with reference to the user profile, the user habit, and the like.

As shown in FIG. 6d(3), the Notepad application has two functions: recording a note and recording a to-do list. In addition, when the user minimizes the floating window of the Notepad application, an interface of the note function is displayed on the Notepad application. In this case, when invoking the AI module to generate service information, the mobile phone may identify, by using the AI module, that the user recently records a note, and read, from the Notepad application, at least one note that is recently browsed by the user at a high or highest frequency. Then, the AI module may generate the service information based on the at least one note. Therefore, the mobile phone may display the service widget 409 shown in FIG. 6d(4) based on the service information. The service widget 409 shows a title and a category of a note that is recently browsed by the user at the highest frequency, and an abstract (herein "I am born to be useful") of the note.

In another embodiment, the service widget generated based on the control 406 of the Notepad application may alternatively include information about one or more to-do lists. An implementation principle of generating the service widget is similar to a principle of generating related information including one or more notes. Details are not described herein again.

In addition, as shown in FIG. 6d(4), when the mobile phone generates the service widget 409 and the service widget 4000 in batches in response to the drag operation performed by the user on the control 406, and displays the service widget 409 and the service widget 4000 on the home screen interface (the display interface 401 herein), the mobile phone may further continue to display the control 400 and the floating bubble 404 inside the control 400. In another embodiment, the mobile phone may alternatively cancel display of the control 400 in response to the drag operation of the user, to close floating windows of corresponding applications for which service widgets are generated. Herein, the floating windows are the floating window of the HUAWEI video application and the floating window of the Notepad application.

In some embodiments, the user may drag, in the manner shown in FIG. 6d(2), a control of any application in the relay station window 405, to implement batch generation of service widgets of a plurality of applications having floating windows, and may also perform a similar drag operation on the control 400 or the floating bubble 404 in an extended state shown in FIG. 6d(1), or the control 400 or the floating bubble 404 in a contracted state, to generate corresponding service widgets for a plurality of corresponding applications in batches. An implementation principle is the same as that of the process described in FIG. 6d. Details are not described herein again.

In embodiments of this application, when the mobile phone has a plurality of applications having minimized floating windows, the user may perform a drag operation on a control (for example, any application-related control on the control 400, the control 404, and the control 405 shown in FIG. 6d, for example, the control 406) that indicates the minimized floating windows of the plurality of applications. However, the drag operation is not limited to thereto, and may be flexibly configured based on an application scenario. The mobile phone may generate, in batches in response to the drag operation, service widgets corresponding to the plurality of applications in a relay state for the plurality of applications. This implements a process of generating service widgets in batches and displaying the service widgets on the home screen in batches, improves service widget generation efficiency, and reduces an operation of requesting to generate a plurality of service widgets by the user.

In FIG. 6a(1) to FIG. 6d, same reference numerals indicate same or similar objects. Therefore, reference numerals in the figures are not described one by one. For reference numerals not mentioned in the figures, refer to the explanations and descriptions of the same reference numerals mentioned in FIG. 5a(1) to FIG. 6d. Details are not described herein again.

It should be understood that the scenario of generating the service widget for the relay station control is not limited to the relay station control in the scenario shown in FIG. 6d, for example, the control 406 or the control 407.

In some embodiments, a manner of generating the relay station control in this application may be further as follows: Touch and hold an object (a picture, a selected text, a file, or the like) until the object floats, and then drag the floating object to a relay station for temporary storage. In this case, the object temporarily stored in the relay station may also be the relay station control in this application. With reference to the method in this application, the user may drag the object temporarily stored in the relay station to the home screen interface, and the mobile phone may optionally display a dashed box (a location of a to-be-generated service widget) at a drag location on the home screen interface in response to the drag operation of the user, and generate the corresponding service widget for the object (an example of the movable control shown in FIG. 4). A principle of an implementation process is the same as a principle of generating a service widget for another type of movable control. Details are not described herein again.

### Example 3

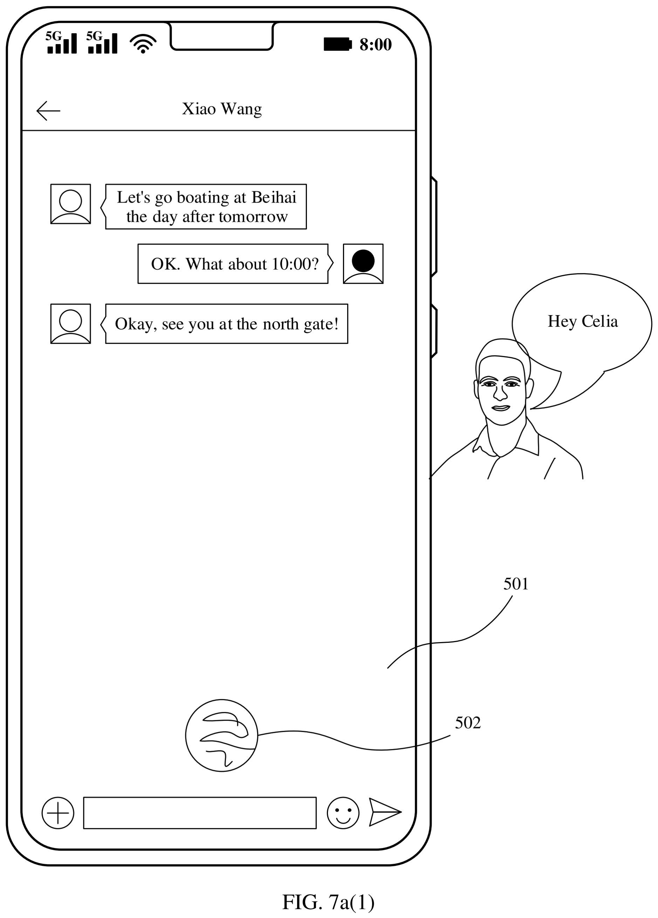

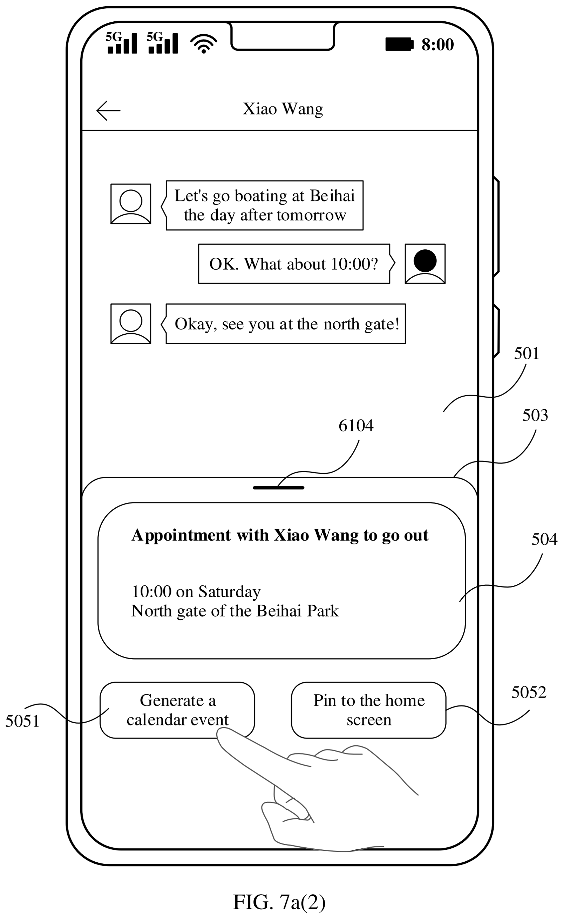

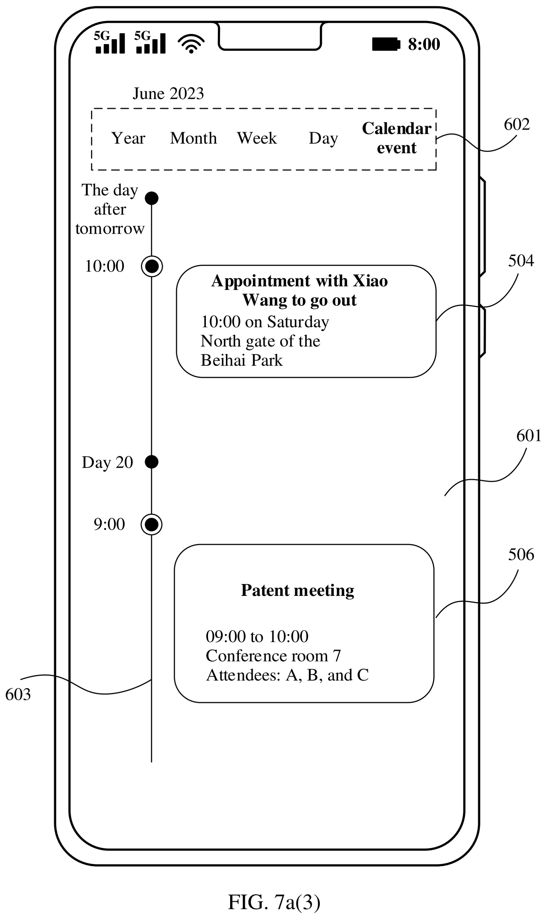

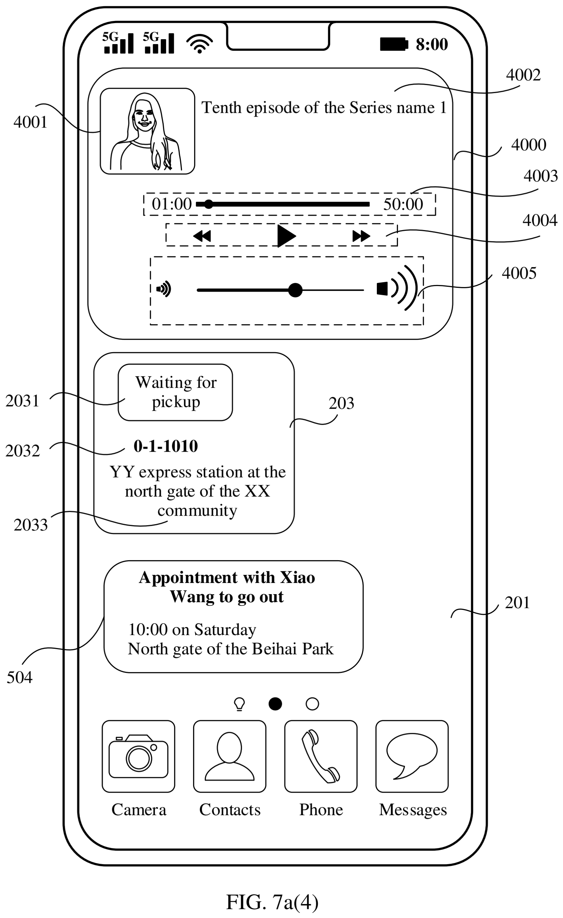

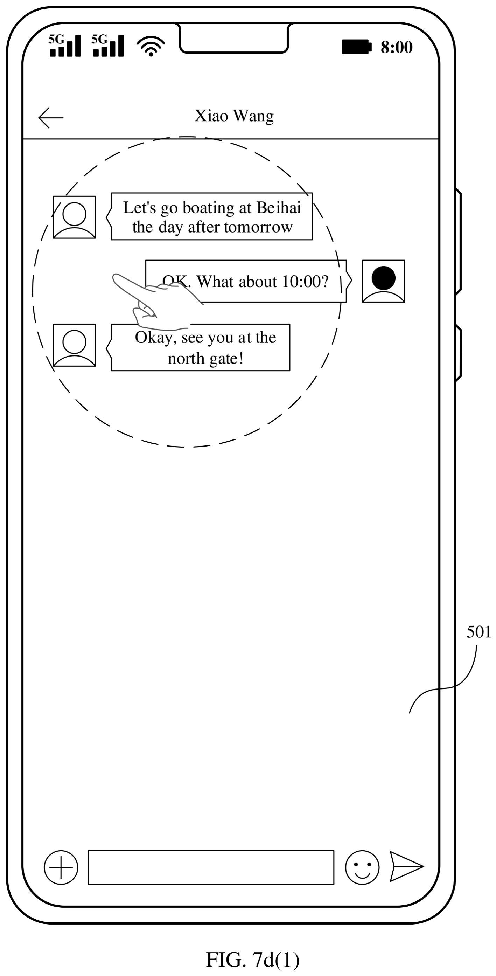

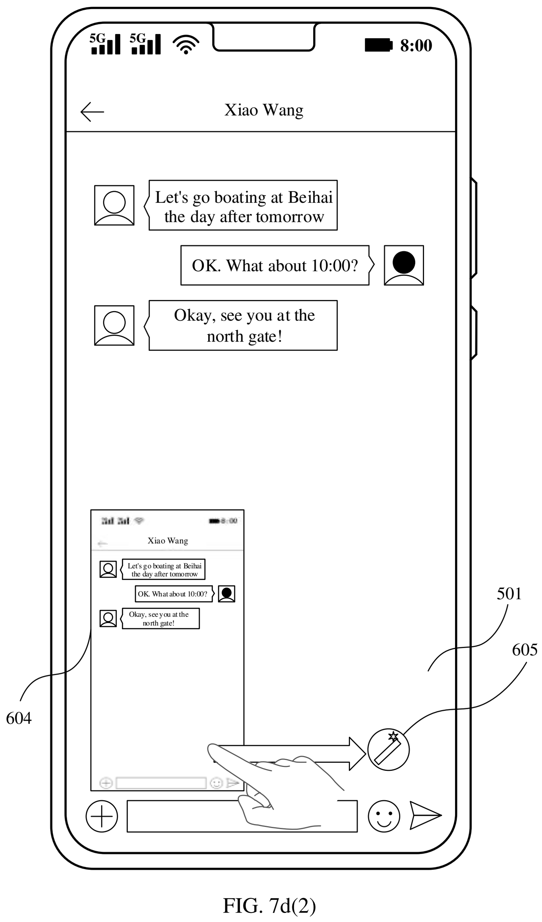

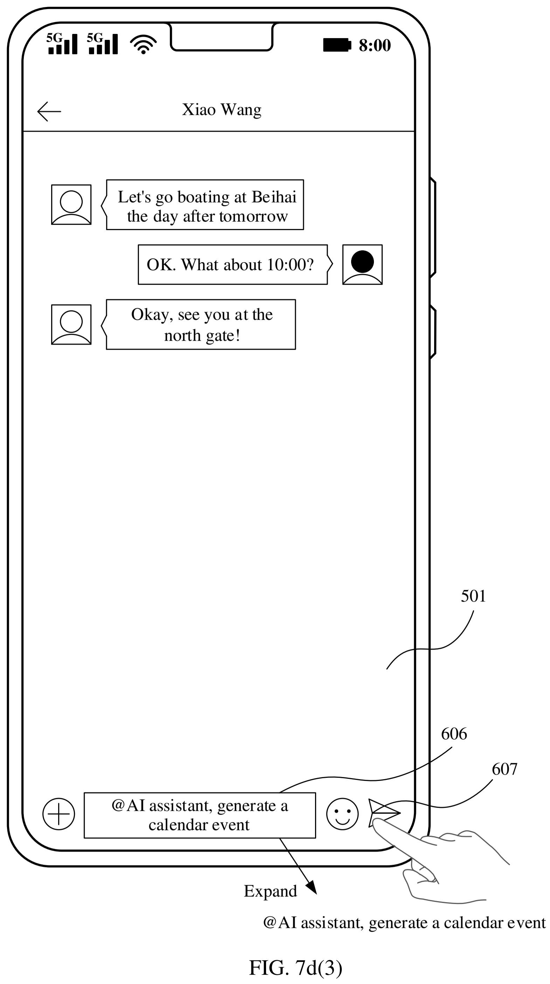

Refer to FIG. 7a(1) to FIG. 7d(3). With reference to FIG. 4, the mobile phone may generate a calendar event widget based on an interface context and/or a natural language that is entered by the user and that is used to converse with the AI module. The interface context may include but is not limited to: a continuous conversation, a text segment, an application interface, an image, a video, and the like.

In a possible implementation, refer to diagrams of an application scenario shown in FIG. 7a(1) to FIG. 7a(4). As shown in FIG. 7a(1), a display interface 501 of the mobile phone is a session interface of a communication application, and a chat dialog between the user and "Xiao Wang", for example, "Let's go boating at Beihai the day after tomorrow", "OK. What about 10:00?" and "Okay, see you at the north gate!", is displayed on the display interface 501. The user approaches the mobile phone and enters "Hey Celia" by voice. The mobile phone may wake up the AI module in response to the received voice input (a preset input shown in FIG. 4), and display a control 502 indicating the AI module. In another embodiment, the preset input for the user to wake up the AI module may alternatively be a gesture input, or the like. This is not limited herein. In some embodiments, after the AI module is woken up, the user may alternatively have an AI dialog with the AI module. For example, if the user enters "Generate a calendar event widget" by voice, the AI module of the mobile phone may generate, in response to the voice input, a calendar event widget related to the display interface 501 (an application interface).

Specifically, when the AI module generates the calendar event widget, the AI module of the mobile phone may perform AI identification on content in the display interface 501 shown in FIG. 7a(1), to recognize a user intention, so as to determine service information. The content identified by the AI module on the display interface 501 may be a text, a picture, or the like. This is not limited herein. For example, the service information may include but is not limited to: time: 10:00 on Saturday, a place: North gate of Beihai Park, and an event: playing with Xiao Wang. The AI module of the mobile phone may generate a service widget 504 (a calendar event widget) based on the service information, and display the display interface 501 shown in FIG. 7a(2). The display interface 501 may include a window 503. The window 503 may include a service widget 504, and optionally include a control 5051, and optionally include a control 5052 and a control 6104. A function of the control 6104 is similar to a function of the control 6104 described in embodiments of FIG. 6a(1) to FIG. 6a(4), and is used to move the window 503. Details are not described herein again.

As shown in FIG. 7a(2), structured service information is displayed on the service widget 504 generated by the mobile phone, and specifically includes the time, the place, and the event of the calendar event.

Then, the user taps the control 5051 shown in FIG. 7a(2). In response to the user operation, the mobile phone may start a calendar event interface of a Calendar application, add the calendar event having the information about the time, the place, and the event to the Calendar application, and display, on the calendar event interface, the service widget 504 corresponding to the added calendar event, as shown in FIG. 7a(3). The calendar event interface is a display interface 601 shown in FIG. 7a(3). The display interface 601 may include but is not limited to a control 602, a control 603, a service widget 504, a service widget 506, and the like.

The control 602 indicates that a display mode of the Calendar application is a calendar event mode in a plurality of modes of a yearly mode, a monthly mode, a weekly mode, a daily mode, and a calendar event mode, to display calendar event information. The control 603 indicates a time axis of the calendar event information. The service widget 504 is located near a time point "10:00" on the control 603, to indicate that the time of the calendar event corresponding to the service widget 504 is 10:00 the day after tomorrow. In this example, today is June 1, 2023, Thursday, and the time agreed by the user and the friend Xiao Wang is 10:00 on Saturday. Therefore, the calendar event added by the mobile phone to the Calendar application is a calendar event at 10:00 the day after tomorrow. In addition, a calendar event at 9:00 on June 20, 2023 is previously added to the Calendar application. For calendar event information of the calendar event, refer to service information displayed on the service widget 506. Details are not described herein again.

In this way, in embodiments of this application, the generated calendar event widget may be displayed in a manner in which the time axis is associated with a service widget on the display interface 601 of the Calendar application, so that the user can clearly learn of a calendar event arrangement of the user based on the service widget on the display interface 601.

In some embodiments, when the mobile phone displays the display interface 501 shown in FIG. 7a(2), the user may alternatively trigger, in another operation manner, the mobile phone to create a corresponding calendar event in the Calendar application based on the service widget 504, for example, perform an operation like touching and holding the service widget 504. This is not limited herein.

In some embodiments, when the mobile phone displays the display interface 501 shown in FIG. 7a(2), the user may further tap the control 5052 (or perform another operation, which is not limited herein), to request to pin the service widget 504 to the home screen interface for display. The mobile phone may display, in response to the user operation, the display interface 201 (a home screen interface) shown in FIG. 7a(4), to display the service widget 504 generated this time on the home screen interface. Herein, the display interface 201 further includes another service widget 4000 and a service widget 203 that have been generated and pinned to a home screen for display by using the method in this application. For a specific generation manner of the service widget 4000 and the service widget 203 and an operation process of pinning the service widget 4000 and the service widget 203 to the home screen, refer to the descriptions in the foregoing embodiments. Details are not described herein again.

In comparison with the service widget 504 shown in FIG. 7a(2) and a service widget 504 shown in FIG. 7a(4), the service widget 504 and the service widget 504 may have a specific difference in a widget size and widget layout. In other words, this application does not limit the service widget 504 shown in FIG. 7a(2) generated by previewing, the service widget 504 shown in FIG. 7a(4) pinned to the home screen, and the service widget 504 shown in FIG. 7a(3) added to the application to being completely identical, and there may be a difference in any one of a widget style, a widget size, widget information, and the like.

In embodiments of this application, an input for triggering, by the user, the AI module of the mobile phone on the application interface may be used, so that the AI module performs AI identification on interface content of the application interface, to determine service information, and generate a service widget based on the service information. For example, the service widget is a calendar event widget, and a specific widget type is not limited herein. The widget type may be different based on differences in display content of the application interface. For example, with reference to FIG. 4, a to-be-processed object corresponding to embodiments of FIG. 7a(1) to FIG. 7a(4) is an application interface.

In a possible implementation, when the mobile phone generates a service widget, for example, the calendar event widget in embodiments of FIG. 7a(1) to FIG. 7a(4), the service widget may specifically be the service widget 504, the service widget 506, or the like. The mobile phone may determine the service information by referring to information about the to-be-processed object (for example, the application interface in embodiments of FIG. 7a(1) to FIG. 7a(4)) shown in FIG. 4 and with reference to information such as a user profile, a user habit, and a real-time scenario, to generate the service widget based on the service information, so that widget information of the service widget can be related to at least one of the to-be-processed object, the user profile, the user habit, and the real-time scenario.

For example, when the mobile phone generates the service widget 506 shown in FIG. 7a(3), for example, the AI module of the mobile phone performs AI identification on a corresponding application interface, and determines that a conference place described in interface content of the application interface is a conference room 1. However, if the AI module invokes an interface of a conference system and determines that the conference room 1 has been reserved, the AI module may intelligently adjust the recommended conference place, for example, adjust the conference location to a conference room 7, and display, in a recommended service widget (for example, a service widget displayed in the window 503 shown in FIG. 7a(1) to FIG. 7a(4)), that the conference place is the conference room 7. In this way, the user may flexibly determine whether to use the conference room intelligently recommended by the AI module to create a calendar event, and whether to create a service widget of the corresponding calendar event in the Calendar application or a Home screen application.

In a possible implementation, the mobile phone may adjust a status of the service widget based on a status change (for example, a change of time or a place) of an event related to the service widget generated in this application (for example, an event of the calendar event related to the service widget 504 shown in FIG. 7a(1) to FIG. 7a(4)).

A widget status of the service widget may include but is not limited to at least one of the following: widget information, a widget style, a widget size, a widget animation effect, and the like.

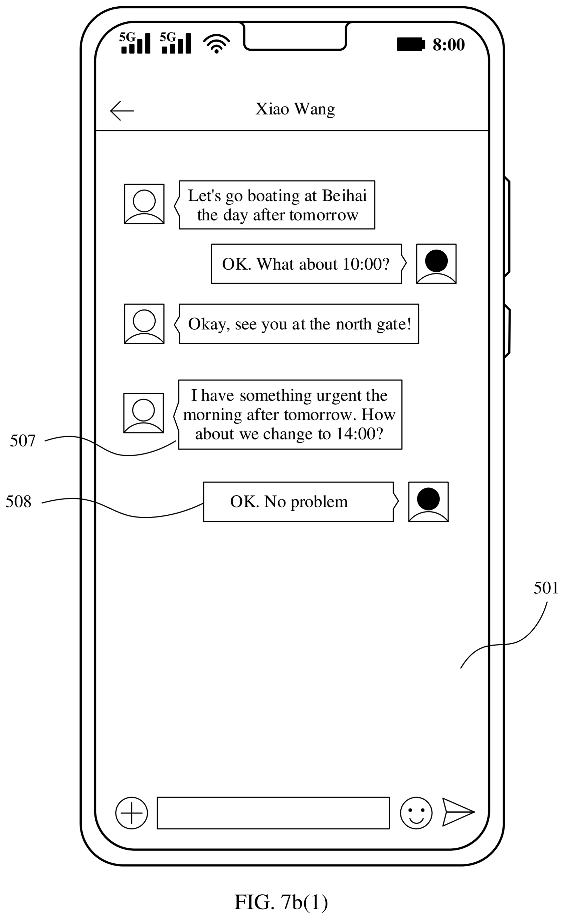

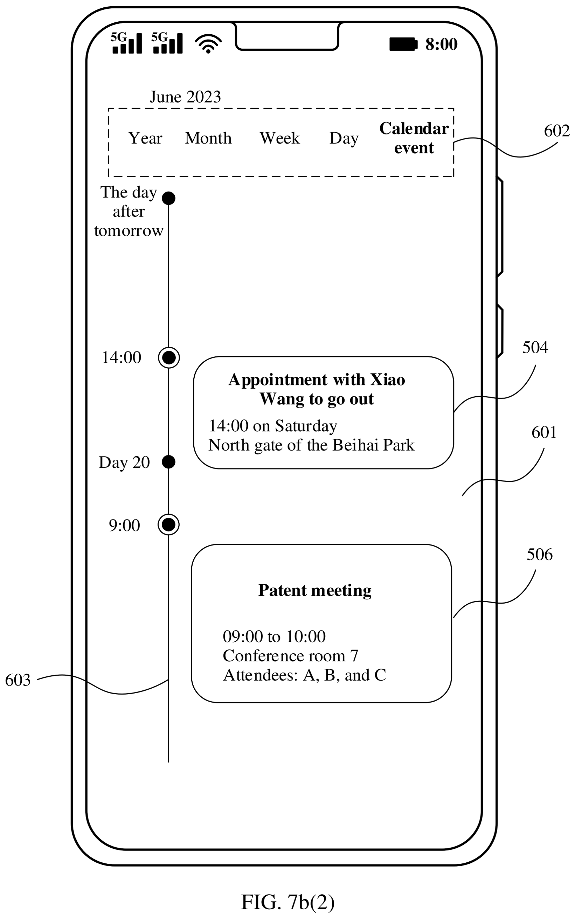

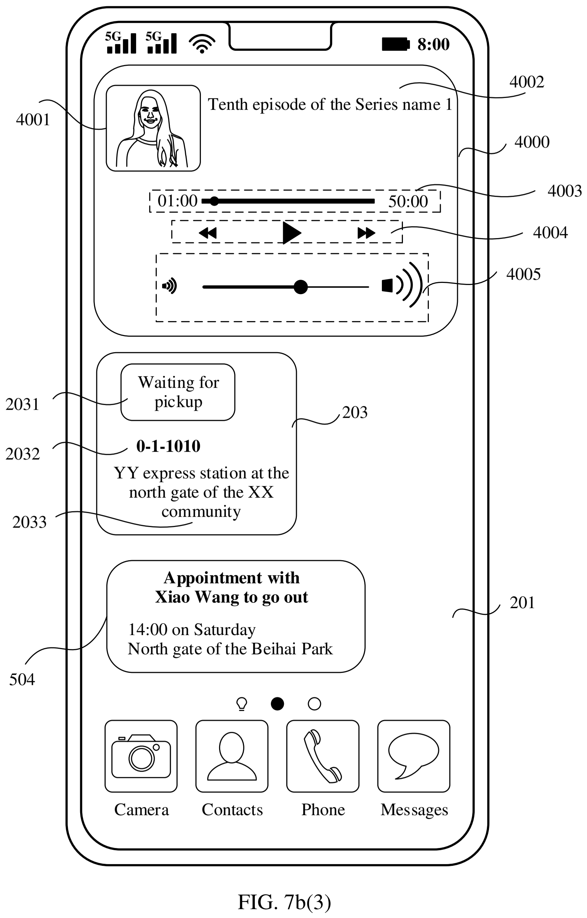

In some embodiments, FIG. 7b(1) to FIG. 7b(3) are diagrams of an example of an application scenario.

In comparison with the display interface 501 shown in FIG. 7a(1), as shown in FIG. 7b(1), a session message is updated in a display interface 501 of the mobile phone, and the display interface 501 shown in FIG. 7b(1) further includes a session message 507 and a session message 508. Message content of the session message 507 is "I have something urgent the morning after tomorrow. How about we change to 14:00?", and message content of the session message 508 is "OK. No problem". In this case, update of session messages of the display interface 501 of the mobile phone may wake up the AI module again (or the AI module may be woken up by the user through the target operation, which is not limited). In this way, the AI module may perform AI identification on interface content of the display interface 501, to obtain an identification result (for example, a semantic meaning of a session), so that a service widget related to the identification result can be located in generated service widgets based on the identification result. Herein, the service widget is the service widget 504 shown in FIG. 7a(3) or FIG. 7a(4). Then, the AI module may change time information in the generated service widget 504 from "10:00" to "14:00". In this way, as shown in FIG. 7b(2), when the user starts the calendar event interface (herein, the display interface 601) of the Calendar application again, in comparison with the service widget 504 in FIG. 7a(3), time in the service widget 504 shown in FIG. 7b(2) has been updated to "14:00". Similarly, as shown in FIG. 7b(3), when the user starts the display interface 201 shown in FIG. 7b(3) again, in comparison with the service widget 504 in FIG. 7a(4), the time in the service widget 504 shown in FIG. 7b(3) has been updated to "14:00".

In this way, after the user modifies the corresponding calendar event through the application interface (herein, the display interface 501) for generating the service widget 504, the AI module of the mobile phone may perform AI identification on interface information of the application interface, to locate, when it is determined that a calendar event changes, a service widget related to the calendar event (herein, the service widget 504), and refresh widget information of the service widget based on information about the modified calendar event, for example, refresh information such as time and a place of the calendar event. In this way, when a calendar event for which a corresponding service widget has been generated changes, the mobile phone does not need to generate a new calendar event and a new service widget based on changed information, but only needs to refresh a widget status of the existing service widget related to the calendar event. This reduces signaling overheads of the mobile phone, and ensures that a status of a service widget is always consistent with a status of an event (herein, an event of the calendar event) related to the service widget.

In a possible implementation, the mobile phone may further notify of, based on service information (for example, widget information) of a generated service widget, optionally with reference to the user profile, optionally with reference to the real-time scenario (for example, navigation duration), and the like, an event corresponding to the service widget, for example, the event of the calendar event corresponding to the service widget 504 shown in FIG. 7b(1) to FIG. 7b(3).

A manner in which the mobile phone notifies of the calendar event corresponding to the service widget may include but is not limited to at least one of the following: ringing reminder, vibration reminder, a notification message, service widget status update, and the like.

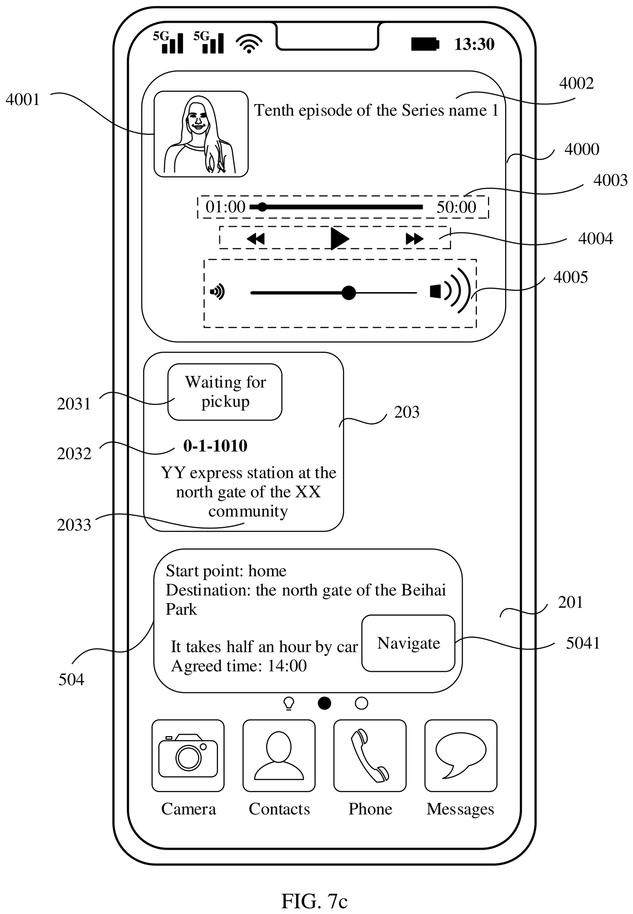

In some embodiments, FIG. 7c is a diagram of an example of this application scenario.

Refer to FIG. 7b(3) or FIG. 7b(4). The time of the calendar event corresponding to the service widget 504 is 14:00 on Saturday, and the mobile phone may determine, by using the AI module, time for notifying of the calendar event, for example, 13:30 on Saturday. A process of determining the reminder time is described in detail below.

As shown in FIG. 7c, when system time of the mobile phone is 13:30 on Saturday, the mobile phone may refresh the widget information of the service widget 504 from the service widget 504 shown in FIG. 7b(3) to a service widget 504 shown in FIG. 7c.

Refer to FIG. 7c. The service widget 504 shown in FIG. 7c is a navigation widget about the foregoing calendar event, and the service widget 504 may include information such as a navigation start point, a navigation destination, navigation duration, and scheduled time of the calendar event. In addition, the service widget 504 further includes a navigation button 5041. After the user taps the navigation button 5041 on the service widget 504, the mobile phone may switch, in response to the user operation, the display interface of the mobile phone from the display interface 201 to a navigation interface of a Map application of the mobile phone from the start point to the destination, so that the user navigates a trip of the calendar event.

In this embodiment, the mobile phone may determine, by using the AI module, reminder time (herein, 13:30) for notifying of the calendar event of the generated service widget, and when the system time of the mobile phone reaches the reminder time, refresh the calendar event information displayed on the service widget 504 to navigation information of the calendar event, to notify of the calendar event related to the service widget 504 in a manner of updating a status of the service widget 504.

In some embodiments, when the mobile phone determines, by using the AI module, reminder time (herein, 13:30 on Saturday) for notifying of the calendar event related to the service widget 504 shown in FIG. 7b(1) to FIG. 7b(3), the AI module may flexibly determine the reminder time with reference to information such as the time (14:00) of the calendar event corresponding to the service widget 504, the user profile (for example, statistical or collected user model data includes information that the user leaves half an hour in advance), and the real-time scenario (for example, navigation time is half an hour). The reminder time of the calendar event may be the same as or earlier than the calendar event time corresponding to the calendar event.

In addition, in embodiments of this application, the mobile phone may notify of, based on service information of a generated service widget and optionally with reference to information such as the user profile and the real-time scenario, an event (herein, the calendar event) related to the service widget.

In a possible implementation, FIG. 7d(1) to FIG. 7d(3) are diagrams of an example of another application scenario.

Different from that in embodiments of FIG. 7a(1) to FIG. 7a(4) in which the user wakes up the AI module of the mobile phone in a voice input manner, to generate the corresponding service widget 504 for the display interface 501, FIG. 7d(1) to FIG. 7d(3) show a plurality of other input manners in which the user may wake up the AI module, to trigger the AI module to perform AI identification on a corresponding to-be-processed object, to determine service information, and generate a service widget based on the service information. A specific process of generating the service widget in embodiments of FIG. 7d(1) to FIG. 7d(3) is the same as that described in FIG. 7a(1) to FIG. 7a(4), and only a difference lies in an input manner of waking up the AI module. Optionally, there may be a difference in a to-be-processed object of the AI module. Same parts are not described herein again.

Refer to FIG. 7d(1) to FIG. 7d(3). The following briefly describes a processing process in this application scenario with reference to FIG. 7d(1) to FIG. 7d(3).

In some embodiments, as shown in FIG. 7d(1), the user may touch and hold a blank location (for example, a location at which no session message is displayed) near the session message on the display interface 501 of the mobile phone. The mobile phone may wake up the AI module in response to the touch and hold operation of the user. The AI module may perform semantic recognition on the session message in a nearby area (for example, a dashed circle shown in FIG. 7d(1)) of the touch and hold location of the user, to generate the service widget 504, so as to display the display interface 501 shown in FIG. 7a(2). In this example, the touch and hold operation is a preset input shown in FIG. 4, and three session messages in the dashed circle are a continuous conversation shown in FIG. 4.

In some embodiments, the location at which the user touches and holds to wake up the AI module in the display interface 501 shown in FIG. 7d(1) is not limited to the blank location, and the user may alternatively touch and hold at least one session message. In this case, the AI module may use a plurality of consecutive session messages around the touch and hold location as a to-be-processed object to identify service information, so as to generate a service widget.

In some embodiments, as shown in FIG. 7d(2), the user may perform a screenshot operation on the display interface 501, and the mobile phone may display, in response to the screenshot operation, a thumbnail 604 of a screenshot image and an AI button 605 in the display interface 501. Then, the user may drag the thumbnail 604 to the AI button 605 along an arrow direction, and the mobile phone may perform AI identification, in response to the user operation, on the screenshot image corresponding to the thumbnail 604, to generate the service widget 504, so as to display the display interface 501 shown in FIG. 7a(2). In this example, the operation of dragging the thumbnail 504 to the AI button 605 may be used as a preset input shown in FIG. 4, and the screenshot image (an image) corresponding to the thumbnail 604 is a to-be-processed object shown in FIG. 4.

In some embodiments, as shown in FIG. 7d(3), the user may enter a text "@AI assistant, generate a calendar event" in a text box 606 displayed on the display interface 501, and then the user taps a control 607 displayed on the display interface 501, to send a message including the text. In this case, the mobile phone may identify the message in response to an operation of tapping the control 607 by the user. The mobile phone may wake up the AI module by identifying "@AI assistant". Then, the AI module may perform AI identification, based on the instruction "generate a calendar event" in the message, on interface content of the display interface 501 shown in FIG. 7d(3), to generate the calendar event widget 504, so as to display the display interface 501 shown in FIG. 7a(2). In this example, operations of entering " @AI assistant" in the text box 606, entering a type (herein, the calendar event) of the service widget, and tapping the control 407 are jointly used as a preset input shown in FIG. 4. The display interface 501 and the natural language "generate a calendar event" are jointly used as an example of the to-be-processed object shown in FIG. 4.

In some embodiments, the mobile phone may alternatively identify different special symbols entered by the user, to generate different types of service widgets by using the AI module. For example, an "@" symbol indicates to generate a calendar event widget, a "&" symbol indicates to generate a to-do widget, and a "#" symbol indicates to generate a video widget.

In this embodiment, the mobile phone may provide more triggering manners for the user to generate the service widget on the session interface, so that the user can flexibly select, based on a requirement, an input indicating to generate the service widget.

In FIG. 7a(1) to FIG. 7d(3), same reference numerals indicate same or similar objects. Therefore, reference numerals in the figures are not described one by one. For reference numerals not mentioned in the figures, refer to the explanations and descriptions of the same reference numerals mentioned in FIG. 5a(1) to FIG. 7d(3). Details are not described herein again.

### Example 4

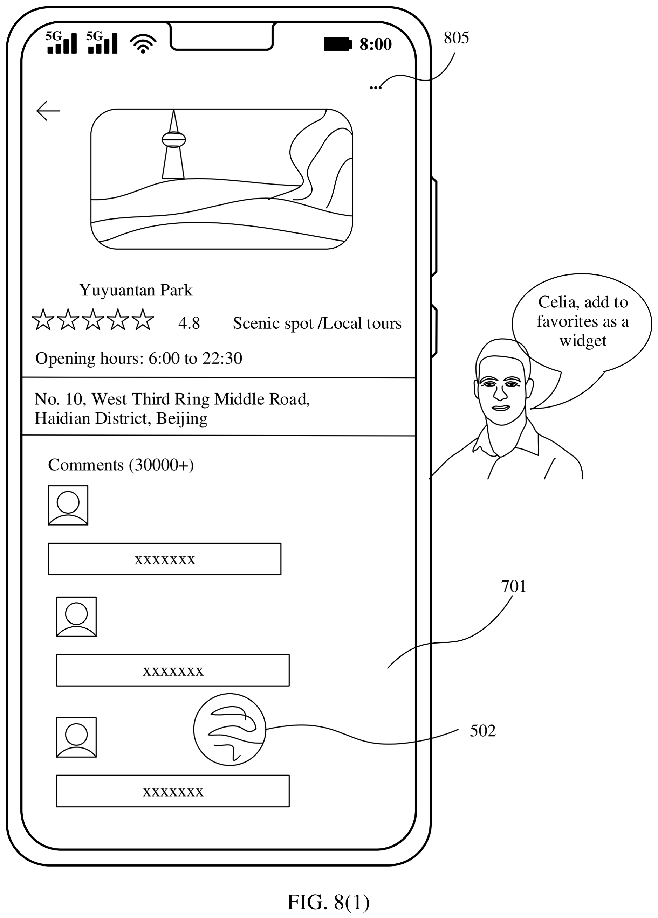

Refer to FIG. 8(1) to FIG. 10(3). With reference to FIG. 4, the mobile phone may generate a to-do service widget based on an interface context and/or a natural language that is entered by the user and that is used to converse with the AI module. The interface context may include but is not limited to: a continuous conversation, a text segment, an application interface, an image, a video, and the like.

Structured service information obtained by the AI module by performing AI identification on a to-be-processed object (for example, the interface context and/or the natural language) may be displayed on the to-do service widget. Related service information can be added to favorites by displaying the to-do service widget on the mobile phone. In addition, the mobile phone directly displays the service information on the service widget, eliminating a need for the user to search favorites of an application or related application information for the service information. The user only needs to browse the to-do widget to quickly locate content previously added to favorites.

In a possible implementation, the to-do service widget may be a place widget. FIG. 8(1) to FIG. 8(4) are diagrams of an example of an application scenario.

As shown in FIG. 8(1), some introduction information of a place "Yuyuantan Park" and user evaluation information are displayed on a display interface 701 of the mobile phone. For example, if the user is interested in the place "Yuyuantan Park" and wants to visit the park in the future, the user may add the park to favorites, to subsequently browse some information of the park. In the conventional technology, the user can only tap a control 805 on the display interface 701 to find an entry of a favorites function provided by the application program, to add the park to favorites. However, there is a large amount of information in a favorites list. Each time the user views a favorite place, the user needs to search the favorites list for a link of a place that needs to be browsed one by one, and then access the link to browse content that is about the place and that is originally added to favorites. However, in actual application, after adding a place to favorites, a user usually seldom browses, through a favorites folder or a favorites list, content previously added to favorites.

Therefore, in the method in this application, a place widget may be generated for a place in which the user is interested, so that the user can search for content that has been added to favorites. In an embodiment, as shown in FIG. 8(1), the user enters "Celia, add to favorites as a widget" through a voice, and the mobile phone may wake up the AI module of the mobile phone in response to the voice input of the user (an example of the AI dialog shown in FIG. 4), and display a control 502 indicating the AI module. In addition, the AI module may receive a request for generating a widget on the display interface 701.

It should be understood that the user may indicate, in a natural language, the AI module to generate a service widget for a corresponding application interface (the display interface 701 herein), and may indicate, through a touch input or the like, the AI module to generate the service widget for the corresponding application interface (the display interface 701 herein). This is not limited herein. In addition, an instruction entered by the user may also include information indicating to generate a place widget.

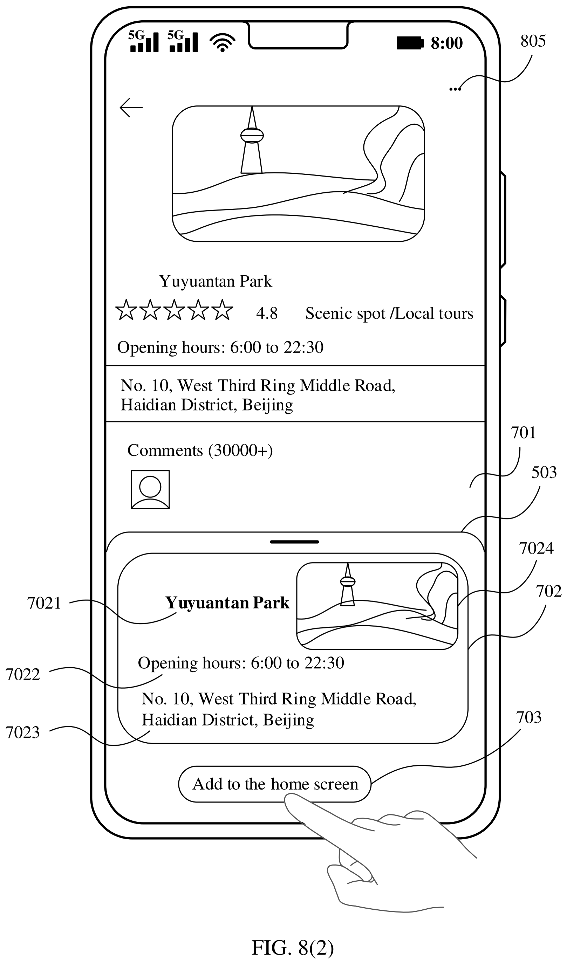

As shown in FIG. 8(2), the mobile phone may generate, in response to the voice input of the user in FIG. 8(1), a service widget 702 by using the AI module, and preview and display the generated service widget 702 in a window 503. In addition, the window 503 further includes a control 703, to pin the service widget 702 to a home screen interface for display.

The AI module may perform, in response to a voice input of the user, AI identification on the display interface 701 shown in FIG. 8(1) (an example of an application interface that is used as a to-be-processed object and that is shown in FIG. 4), to determine service information. The determined service information herein includes: a place name " Yuyuantan Park", business hours of the place are "6:00 to 22:30", and an address of the place is "No. 10, West Third Ring Middle Road, Haidian District, Beijing", a picture of the place, and the like.

Certainly, the service information identified by the AI module may not be limited thereto, and may further include a summary of information about a hot comment of a user on the place. In addition, when identifying the service information, the AI module may refer to the display interface 701, and may refer to information such as a user profile. This is not limited herein. In addition, an example in which the favorite place is a park is used herein for description. However, a type of the favorite place is not limited in this application, and the favorite place may be a place of any type, for example, a restaurant, a clothing store, a nail art store, a school, or a building. In addition, based on a difference between places, service information that is identified by the AI module and that is of the places may also be different. This is not limited in this application. For example, when the place is a restaurant, the identified service information may include a location of the restaurant and business hours of the restaurant, and include information such as a popular dish of the restaurant.

As shown in FIG. 8(2), the AI module may generate the service widget 702 based on the service information generated for the display interface 701 shown in FIG. 8(1), and display the service widget 702 on the window 503. As shown in FIG. 8(2), a service widget 702 may include but is not limited to: a control 7021 indicating a place name, a picture 7024 indicating an iconic scenic spot of the place, a control 7022 indicating opening hours of the place, a control 7023 indicating an address of the place, and the like.

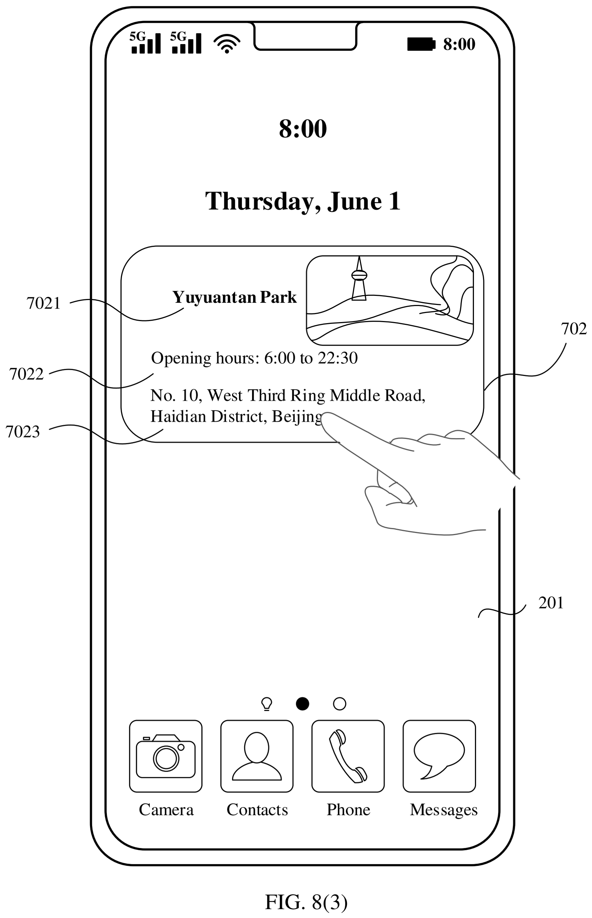

Then, the user taps the control 703 shown in FIG. 8(2), and the mobile phone may display the service widget 702 on the display interface 201 in response to the user operation, as shown in FIG. 8(3), where the display interface 201 is a home screen interface.

It should be understood that there may be a difference, in any information such as a widget style, a layout of widget information, a widget size, and a detailed degree and a rich degree of the widget information, between the previewed service widget 702 in FIG. 8(2) and the service widget 702 pinned to the home screen for display. The mobile phone may flexibly set, based on information such as a size of display space used to display the service widget 702 on the home screen interface, the service widget 702 pinned to the home screen interface. This is not limited in this application.

Optionally, the service widget generated in this application may be an interactive service widget. In embodiments of FIG. 8(1) to FIG. 8(4), the service widget 702 may perform navigation of the place through interaction.

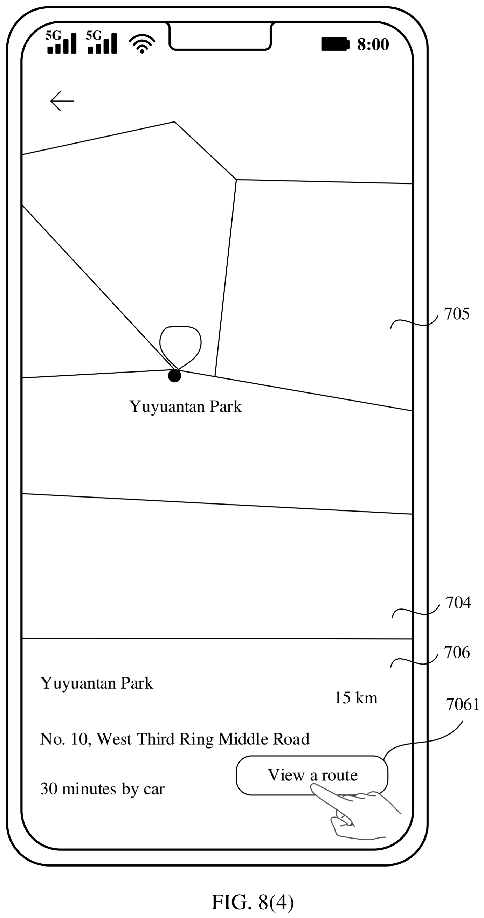

For example, as shown in FIG. 8(3), the user taps the control 7023 on the service widget 702, and the mobile phone may perform navigation on the favorite place "Yuyuantan Park" in response to the user operation. For example, in response to the user operation, the mobile phone may display a display interface 706 shown in FIG. 8(4). The display interface 706 may include but is not limited to a map preview control 705 and a control 706. A map preview picture near the Yuyuantan Park is displayed on the map preview control 705. Information such as a distance from a current location of the mobile phone to the park (herein, 15 km), navigation duration (herein, 30 minutes), and a control 7061 are displayed on the control 706. A text "View a route" is displayed on the control 7061.

For example, if the user taps the control 7061 shown in FIG. 8(4), the mobile phone may start the installed Map application, and display map information of the navigation route from the current location of the mobile phone to an address of the Yuyuantan Park, so that the user navigates to the park.

In another embodiment, after the user taps the control 7023 shown in FIG. 8(3), the mobile phone may also directly start the installed Map application in response to the user operation, and display map information of a navigation route from a current location of the mobile phone to an address of the Yuyuantan Park, so that the user navigates to the park.

This application aims to express that the generated place widget (for example, the service widget 702 shown in FIG. 8(1) to FIG. 8(4)) can be used for navigation. A specific manner and a specific process of implementing navigation are not limited, and may be flexibly set based on an actual application scenario and a function supported by the Map application.

In embodiments of this application, regardless of whether an application installed on the mobile phone supports a function of providing a service widget, in this application, a service widget (for example, the place widget herein) may be generated in response to a user operation based on an application interface of the application, to implement adding related information (herein, related information of the place) in the application to favorites.

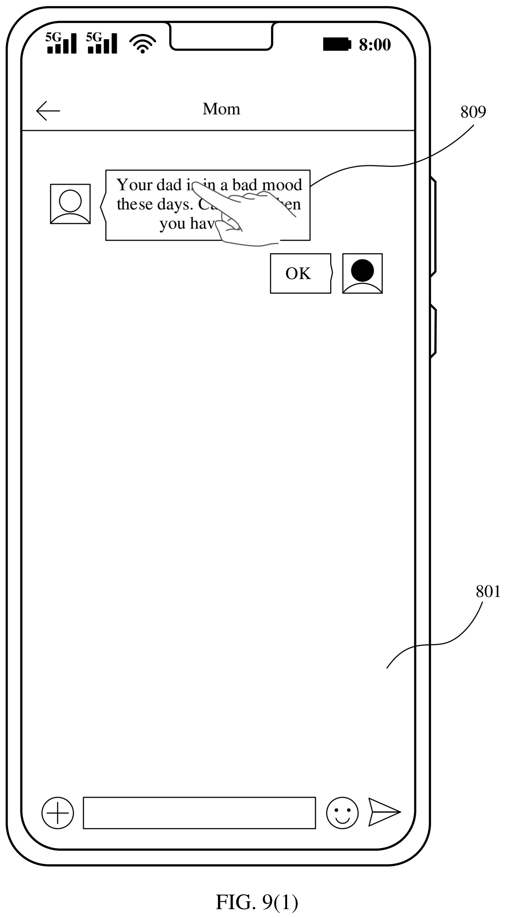

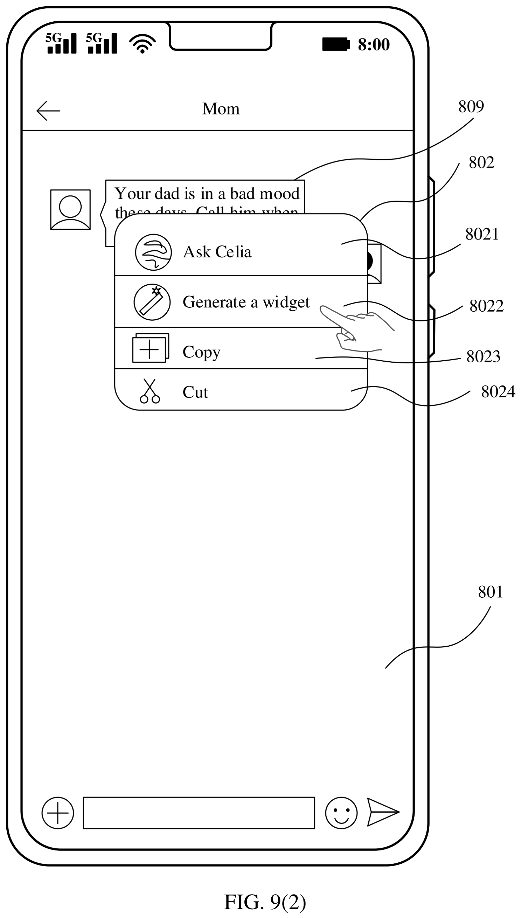

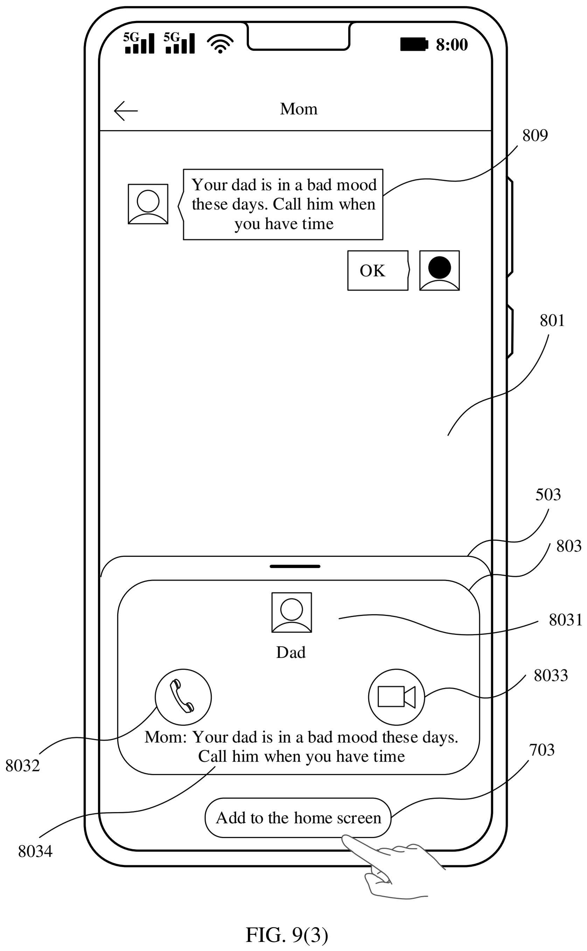

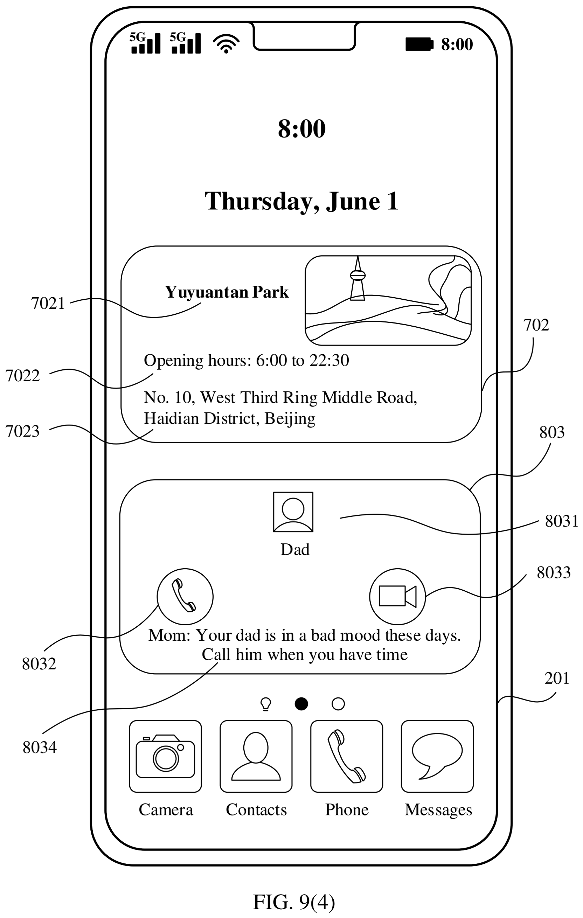

In a possible implementation, the to-do service widget may alternatively be a contact widget. FIG. 9 is a diagram of an example of an application scenario.

As shown in FIG. 9(1), a display interface 801 of the mobile phone is a session interface of the user, the session interface includes a session message 809, and message content of the session message 809 is "Your Dad is in a bad mood these days. Call him when you have time". The user performs a touch and hold operation on the session message 809. The mobile phone may display, in response to the user operation, a display interface 801 shown in FIG. 9(2). As shown in FIG. 9(2), the mobile phone may display a control 802 near the session message 809. The control 802 may include but is not limited to the following options: an option 8021, an option 8022, an option 8023, and an option 8024.

The option 8021 is used to wake up the AI module to perform an AI dialog with the AI module. The option 8022 is used to generate a service widget for the session message 809. The option 8023 is used to copy a text of the session message 809. The option 8024 is used to cut the text of the session message 809.

Then, as shown in FIG. 9(2), the user taps the option 8022. As shown in FIG. 8(3), the mobile phone may generate, in response to the user operation, a service widget 803 by using the AI module. Then, the mobile phone may display the window 503 on the display interface 801 shown in FIG. 9(2), preview and display the generated service widget 803 on the window 503, and display the control 703 on the window 503.

The AI module may perform AI identification, in response to a voice input of the user, on the session message 809 shown in FIG. 9(2), to determine that the semantics is "to make a call to Dad", and may determine service information based on the semantics, to generate the service widget 803 shown in FIG. 9(3).

As shown in FIG. 9(3), because the semantics identified by the AI module is a to-do list for making the call to Dad, to make the service widget 803 generated in this embodiment interactive, a contact widget may be generated as the service widget 803. The service widget 803 may include a control 8031, a control 8032, a control 8033, and a control 8034.

The control 8031 is related information of a contact profile picture of Dad of the mobile phone user; and the control 8034 is a text of message content referenced for generating the service widget 803 (or may be a summary or semantics of the message content or the like).

The control 8032 may be used to invoke a phone interface (or may be a voice call interface) to initiate a phone call request to "Dad". The control 8033 may be used to invoke a video call interface to initiate a video call request to "Dad".

Then, the user taps the control 703 shown in FIG. 9(3), and the mobile phone may display the service widget 803 on a display interface 201 in response to the user operation, as shown in FIG. 9(4), where the display interface 201 is a home screen interface.

It should be understood that there may be a difference, in any information such as a widget style, a layout of widget information, a widget size, and a detailed degree and a rich degree of the widget information, between the previewed service widget 803 in FIG. 9(3) and the service widget 803 pinned to the home screen for display. The mobile phone may flexibly set, based on information such as a size of display space used to display the service widget 803 on the home screen interface, the service widget 803 pinned to the home screen interface. This is not limited in this application.

In this embodiment, the service widget 803 generated by the mobile phone is an interactive service widget. For example, the user taps the control 8032 shown in FIG. 9(3) or FIG. 9(4), and the mobile phone may invoke a phone interface (or may be a voice call interface) in response to the user operation, to initiate a phone call request to "Dad", so as to implement a voice call between the user and "Dad". Alternatively, the user may tap the control 8033 shown in FIG. 9(3) or FIG. 9(4), and the mobile phone may invoke a video call interface in response to the user operation, to initiate a video call request to "Dad".

The preset input shown in FIG. 4 and related to embodiments of FIG. 9 may include the touch and hold operation on the session message 809 shown in FIG. 9(1) and the tap operation on the option 8022 shown in FIG. 9(2), and the to-be-processed object shown in FIG. 4 and related to embodiments of FIG. 9 may include message content of the session message 809.

In this way, in embodiments of this application, the mobile phone may perform AI identification on the session message based on a target input of the user indicating to perform AI identification on the session message, to generate a contact widget. In this way, a to-do list of related content of the session message can be added to favorites by generating a contact widget, to prevent the user from forgetting the to-do list (herein, the to-do list is a call to Dad). In addition, the contact widget is interactive. The user may directly make a call or a video call for the to-do list (herein, the to-do list is the call to the father) through the contact widget, so that an operation of searching for a corresponding contact from a Call application to make a call or a video call by the user can be reduced.

In some embodiments, when the user taps the control 8034 shown in FIG. 9(3) or FIG. 9(4), the mobile phone may further switch, in response to the user operation, a display interface of the mobile phone to the display interface 801 shown in FIG. 9(1), and locate and display a location of the session message 809 on the display interface 801.

In this way, after the service widget is generated based on the to-be-processed object in this application, the user may further perform a specific operation on the service widget, to locate a display location of the to-be-processed object on which the service widget is generated, so that the service widget generated in this application is traceable.

It should be understood that, in embodiments of this application, all generated service widgets may be traceable. An implementation principle of the service widgets is similar to that of the related method in embodiments of FIG. 9. Details are not described herein again. In addition, the foregoing specific operation used for source tracing is not limited to an operation on a service widget, for example, tapping a control (for example, the control 8034 shown in FIG. 9(4)) on the service widget, and may be another touch input, an AI dialog input, and/or the like.

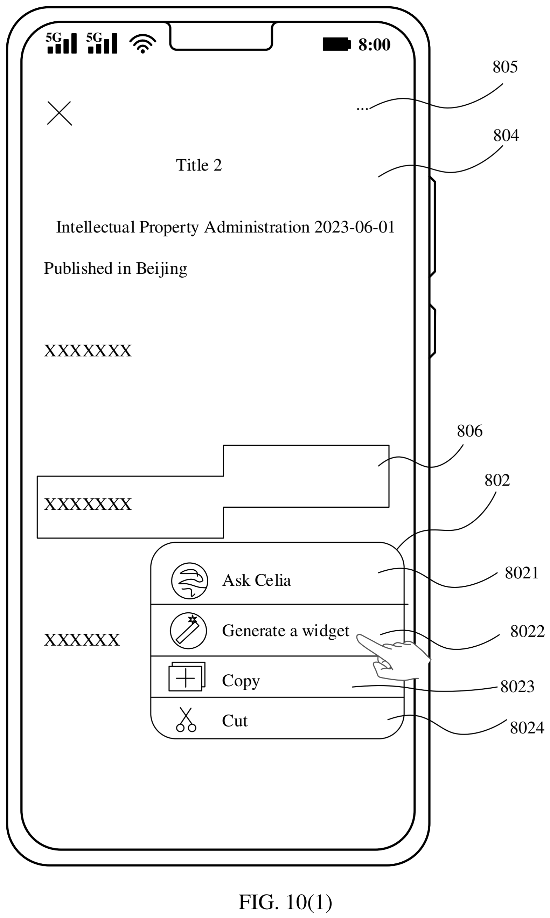

In a possible implementation, the to-do service widget may be an excerpt widget. FIG. 10(1) to FIG. 10(3) are diagrams of an example of an application scenario.

As shown in FIG. 10(1), an article with a title "Title 2" is displayed on a display interface 804 of the mobile phone. The display interface 804 may include one or more controls, and the control may include a control 805. Refer to the descriptions of the control 805 in embodiments of FIG. 9, when the user is interested in the article displayed on the display interface 804 and expects to add the article to favorites, in the conventional technology, the user may tap the control 805 to add a link of the article to favorites. However, after the article is added to favorites, it is difficult for the user to intuitively view the article on a mobile phone interface, and the user basically does not view the article after the article is added to favorites, which makes availability of an existing favorite function extremely poor. In addition, the existing favorite function does not support adding a part of content (such as a text or a picture) of the article to favorites.

However, in embodiments of this application, the user may select a text in the article displayed on the display interface 804 shown in FIG. 10(1). The selected text is represented by a mark 806 herein. A display manner of the selected text is not limited in this application.

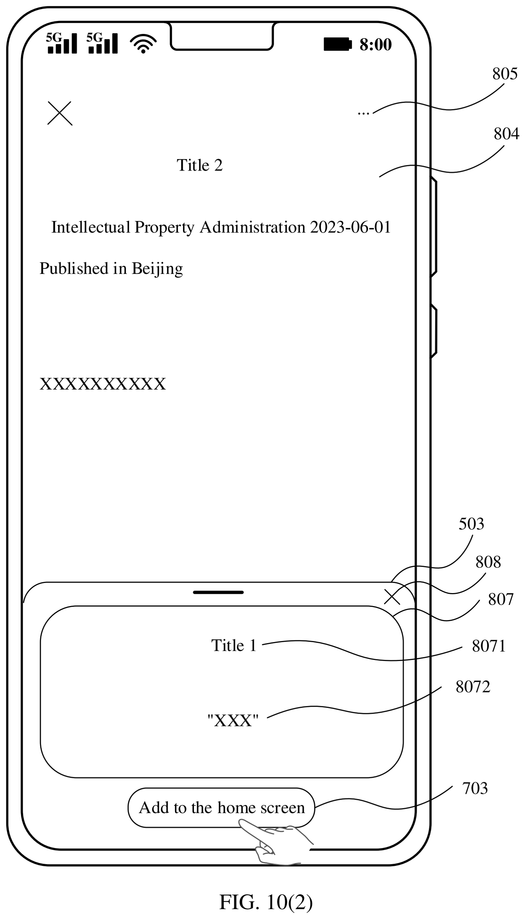

In response to the user operation, the mobile phone may display the control 802 near the text (for specific descriptions, refer to embodiments of FIG. 9, and details are not described herein again). Then, the user taps the control 8022 on the control 802. As shown in FIG. 10(2), the mobile phone may perform AI identification, in response to the user operation, on the text indicated by the mark 806, to generate a service widget 807, and display the service widget 807 on the window 503. In addition, the window 503 further includes but is not limited to a control 808, the control 703, and the like.

The service widget 807 may include but is not limited to a control 8071 and a control 8072. The control 8071 indicates the title of the article in which the selected text is located, namely, "Title 1" herein. The control 8072 indicates the text selected by the user in FIG. 10(1).

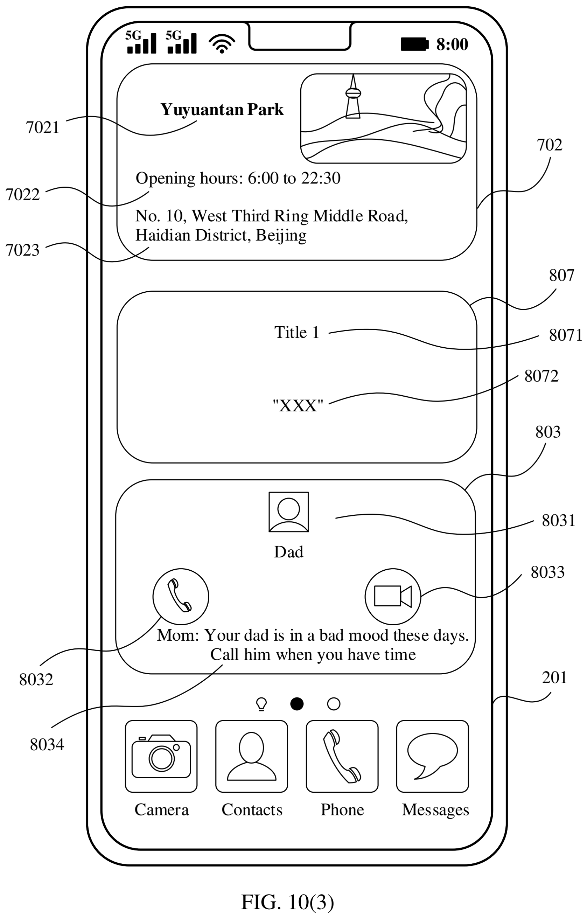

Then, the user taps the control 703 shown in FIG. 10(2). The mobile phone may display, in response to the user operation, a display interface 201 (a home screen interface) shown in FIG. 10(3). The display interface 201 may include the service widget 807 pinned to the home screen for display. In addition, the display interface 201 may further include the service widget 702 generated in embodiments of FIG. 8(1) to FIG. 8(4) and the service widget 803 generated in embodiments of FIG. 9. In this way, a plurality of service widgets generated according to the method in this application can be displayed on the home screen interface.

In some embodiments, after the window 503 is displayed for preset duration, if no operation performed by the user on the window 503 is received, the mobile phone may cancel display of the window 503, so that the generated service widget 807 is only temporarily displayed, and the service widget is not generated in a corresponding application to which the corresponding to-be-processed object belongs, and the service widget is not displayed on the home screen interface. The solution of this embodiment is also applicable to the service widget generated in other embodiments of this application. The principles are similar. Details are not described one by one.

In some embodiments, when the user temporarily does not need to add the foregoing text to favorites, the user may tap the control 808, for the mobile phone to close the window 503 and no longer display the service widget 807, so that the foregoing text is not added to favorites in a manner of using an excerpt widget. The solution of this embodiment is also applicable to the service widget generated in other embodiments of this application. The principles are similar. Details are not described one by one.

In embodiments of this application, when the user is interested in one or more objects in any application, the object may be the text described in embodiments of FIG. 10(1) to FIG. 10(3), or may be a picture, a video, an icon, or the like. This is not limited herein. The user may trigger a target input indicating to perform AI identification, so that the mobile phone may generate, for the object by using the AI module, a specific type of service widget (for example, an excerpt widget, a picture widget, or a video widget) that matches the object, to achieve an objective of adding the object to favorites. For example, the mobile phone adds a video selected by the user to favorites to generate a video widget, and the video widget may be used to play the video added by the user to favorites. In this application, the object in which the user is interested is added to favorites in a manner of a service widget, so that the user can browse content that is added to favorites again.

Optionally, the mobile phone may further locate, through a specific operation of the user, the display interface to a display interface when the user adds the object (for example, the video) to favorites, for example, a play interface of the video (for example, a play interface of the video in a corresponding video application), to implement a source tracing function of the service widget in this application.

In FIG. 8(1) to FIG. 10(3), same reference numerals indicate same or similar objects. Therefore, reference numerals in the figures are not described one by one. For reference numerals not mentioned in the figures, refer to the explanations and descriptions of the same reference numerals mentioned in FIG. 5a(1) to FIG. 10(3). Details are not described herein again.

### Example 5

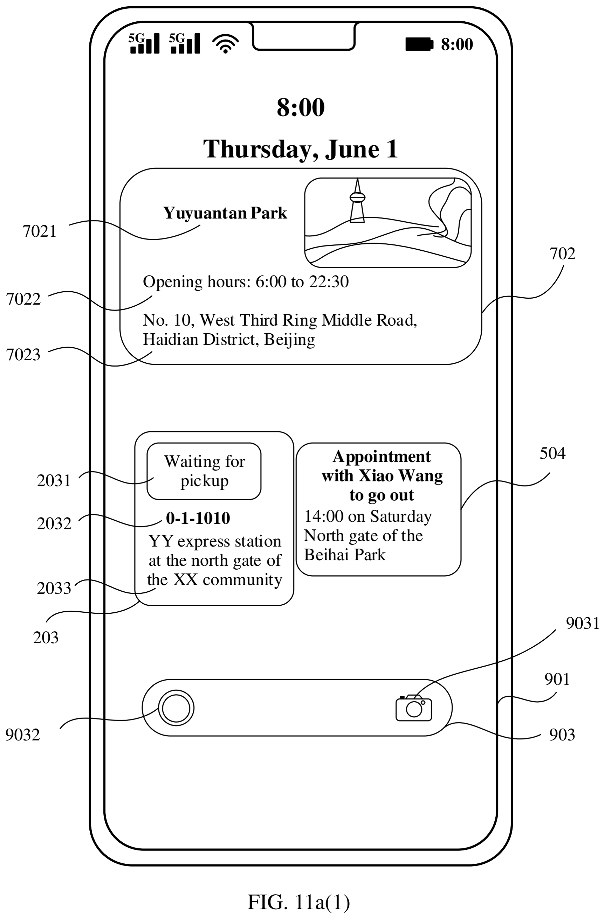

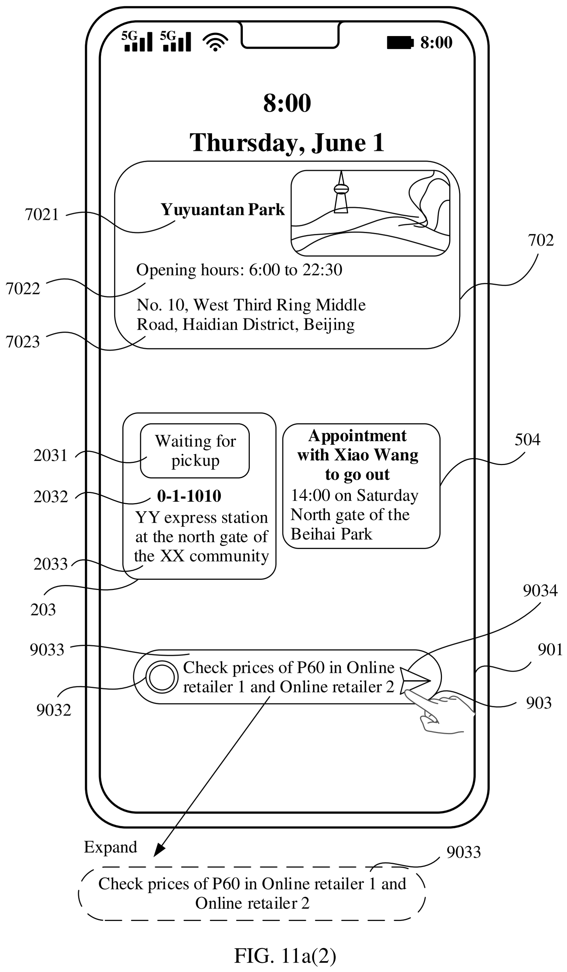

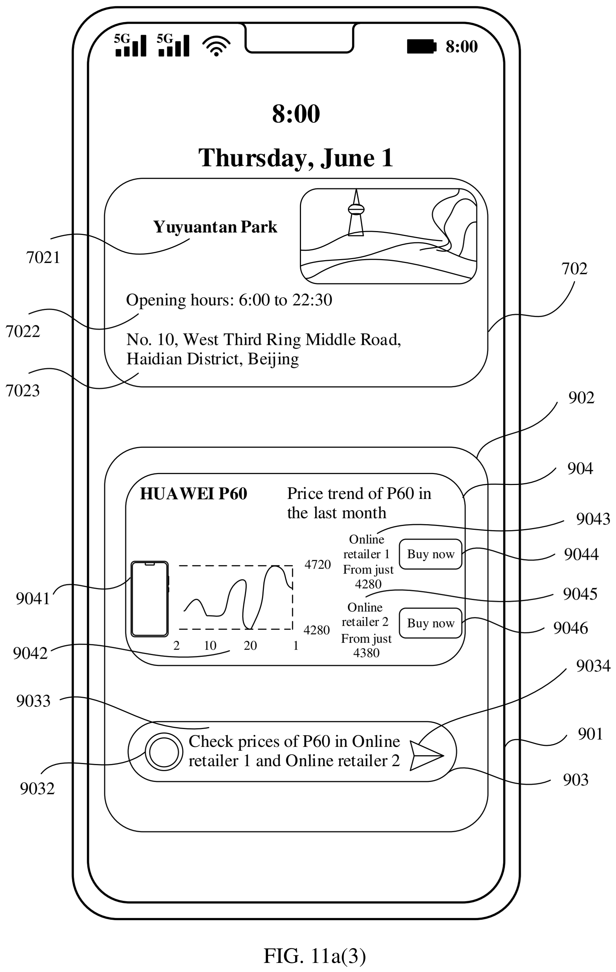

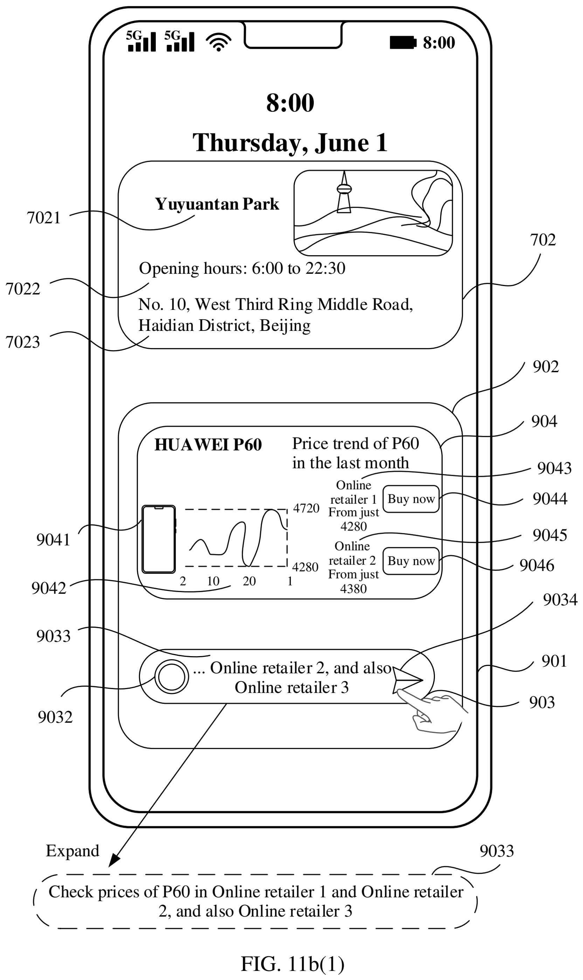

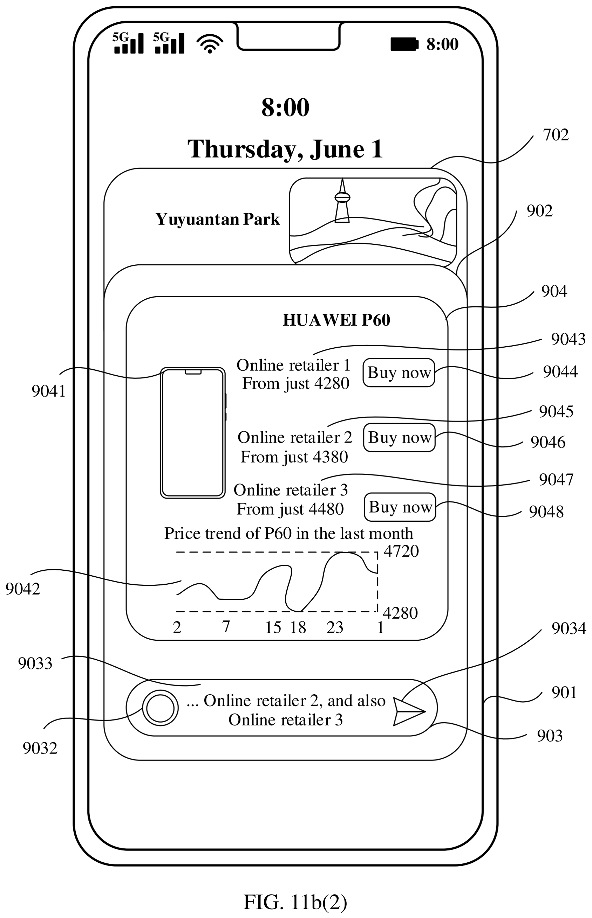

Refer to FIG. 11a and FIG. 11b(1) and FIG. 11b(2). With reference to FIG. 4, the mobile phone may generate service information based on a natural language (a text, a voice, or the like) related to AI, and generate a comparison widget based on the service information. The comparison widget may include service information related to a plurality of search results (for example, comparison information of the search results), where the plurality of search results are respective search results of a plurality of applications for a same object.

In a possible implementation, FIG. 11a is a diagram of an example of an application scenario.

As shown in FIG. 11a(1), a display interface 901 of the mobile phone includes a plurality of controls, and the display interface 901 is a home screen interface. The plurality of controls may include but are not limited to: a service widget 702, a service widget 203, a service widget 504, and a control 903. The control 903 is configured to interact with the AI module. The control 903 may include but is not limited to a control 9031, a control 9032, and the like.

For example, the user may enter a text in a blank area of the control 903 to interact with the AI module. For another example, the user may alternatively tap the control 9032 on the control 903 to interact with the AI module in a voice input manner. For another example, the user may alternatively tap the control 9031 on the control 903 to interact with the AI module in an image shooting manner. For example, the user taps the control 9031, and the mobile phone may start a Camera application to take a photo, and provide a photographed picture or video to the AI module for AI identification.

As shown in FIG. 11a(2), the user enters a text 9033 on the control 903. It can be learned from the expanded text 9033 that the user enters a text "Check prices of P60 in Online retailer 1 and Online retailer 2". The user enters a large amount of text content, and a length of the text content exceeds a maximum length of a text that can be displayed on the control 903. Therefore, only a part of the entered text, for example, "Check prices of P60 in Online retailer 1 and Online retailer 2", may be displayed on the control 903 shown in FIG. 11a(2). In comparison with FIG. 11a(1), after the user enters the text on the control 903, the mobile phone may switch the control 9031 displayed on the control 903 to a control 9034 shown in FIG. 11a(2).

Then, the user taps the control 9034 shown in FIG. 11a(2), and the mobile phone may invoke the AI module in response to the user operation, to perform AI identification on the entered text 9033, to determine a user intention. The user intention herein is: searching for respective price information of the same object "HUAWEI mobile phone P60" in an application 1 corresponding to Online retailer 1 and an application 2 corresponding to Online retailer 2.

A price filtering condition (for example, a last month, a lowest price, a highest price, and a current price) used when the respective price information of the HUAWEI mobile phone P60 is searched for in Online retailer 1 and Online retailer 2 is not limited in this application, and may be flexibly determined based on a user profile, a real-time scenario, or the like. For example, in another embodiment, the mobile phone may search only for current respective price information of the HUAWEI mobile phone P60 sold in the application 1 and the application 2.

For example, in embodiments of FIG. 11a, the AI module may search for, based on the user intention, price information of the HUAWEI mobile phone P60 in the application 1 in the last month, a lowest price in the last month, a highest price in the last month, the current price, and the like.

In addition, the AI module may search for, based on the user intention, price information of the HUAWEI mobile phone P60 in the application 2 in the last month, a lowest price in the last month, a highest price in the last month, the current price, and the like.

Then, the AI module may generate a service widget 904 (a comparison widget) based on service information such as information that is about a price change trend of the HUAWEI mobile phone P60 in the last month and that is generated based on respective price search results of the same object in the two applications, the lowest price (herein, CNY 4280) of the mobile phone in Online retailer 1, the lowest price (herein, CNY 4380) of the mobile phone in Online retailer 2, and the like.

As shown in FIG. 11a(3), the mobile phone may display a control 902 and the generated service widget 904 on the control 902 in response to an operation of tapping, by the user, the control 9034 shown in FIG. 11a(2), to indicate that the service widget 904 is associated with the control 902. As shown in FIG. 11a(3), the service widget 904 may include but is not limited to: a picture 9041 indicating a product image of the HUAWEI mobile phone P60, a control 9042, a control 9043, a control 9044, a control 9045, a control 9046, and the like.

The control 9042 is a price change curve diagram that is of prices of the mobile phone sold in the two online retailer platforms and that is generated based on information about price change trends of the HUAWEI mobile phone P60 in the last month generated by the AI module.

The control 9043 indicates the lowest price of the mobile phone sold in Online retailer 1 in the last month, and the control 9044 is used to start and display an application interface of the application 1 corresponding to Online retailer 1. The application interface may be a commodity details interface of the HUAWEI P60 in the application 1. This is not limited herein.

The control 9045 indicates the lowest price of the mobile phone sold in Online retailer 2 in the last month, and the control 9046 is used to start and display an application interface of the application 2 corresponding to Online retailer 2. The application interface may be a commodity details interface of the HUAWEI P60 in the application 2. This is not limited herein.

In this way, in this application, a search object and a plurality of to-be-searched applications may be determined based on a natural language that is entered by the user and that indicates to perform AI identification, and then a comparison widget of information about the search object is generated based on search results of the search object in the plurality of applications. In this way, search results of a same object in a plurality of applications can be requested, and a comparison widget related to the search results of the plurality of applications can be generated by using the AI module.

The natural language is a text in embodiments of FIG. 11a, and in another embodiment, may also be a voice, a picture, or any two or a combination of the text, the voice, and the picture. For example, if the search object is a picture (for example, a picture of HUAWEI P60) and a voice (for example, searching for the respective prices in Online retailer 1 and Online retailer 2), the mobile phone in this application may also display the service widget 904 shown in FIG. 11a(3).

In a possible implementation, FIG. 11b(1) and FIG. 11b(2) are diagrams of an example of an application scenario.

After the mobile phone displays the application scenario shown in FIG. 11a to generate the service widget 904, as shown in FIG. 11b(1), the user continues to add an entered text "and also Online retailer 3" on the control 903, so that the text entered by the user is updated to "Check prices of P60 in Online retailer 1 and Online retailer 2, and also Online retailer 3". For details, refer to an expanded text 9033 shown in FIG. 11b(1).

Then, the user taps the control 9034 shown in FIG. 11b(1), and the mobile phone may invoke the AI module in response to the user operation, to perform AI identification on the updated entered text 9033 (or the newly added entered text), to determine a user intention, namely, searching for respective price information of the same object "HUAWEI mobile phone P60" in the application 1 corresponding to Online retailer 1, the application 2 corresponding to Online retailer 2, and an application 3 corresponding to Online retailer 3.

In response to the user operation in FIG. 11b(1), the mobile phone searches for price information of the HUAWEI mobile phone P60 in the application 3 corresponding to Online retailer 3 in the last month, a lowest price in the last month, a highest price in the last month, a current price, and the like, to obtain a price search result.

Then, the mobile phone may generate a service widget 904 (a comparison widget) shown in FIG. 11b(2) based on service information such as the lowest price (herein, CNY 4480) of the mobile phone in Online retailer 3, the lowest price (herein, CNY 4280) of the mobile phone in Online retailer 1, the lowest price (herein, CNY 4380) of the mobile phone in Online retailer 2, and information that is about a price change trend of the HUAWEI mobile phone P60 in the last month (which may be different from the price change trend in the two online retailer platforms generated in embodiments of FIG. 11a) and that is generated based on the read price search results of the HUAWEI mobile phone P60 in Online retailer 1 and Online retailer 2 found by the AI module in the process of FIG. 11a and the price search result found in the application 3 corresponding to Online retailer 3 this time.

The lowest price of the HUAWEI P60 mobile phone in Online retailer 1 and Online retailer 2 in the service information generated in embodiments of FIG. 11b may not need to be regenerated herein, and cached information about the respective lowest prices of the HUAWEI P60 mobile phone in Online retailer 1 and Online retailer 2 obtained in embodiments of FIG. 11a may be directly read.

As shown in FIG. 11b(2), in response to the operation of tapping, by the user, the control 9034 shown in FIG. 11b(1), the mobile phone may display the generated service widget 904 on the control 902. In comparison with the service widget 904 shown in FIG. 11b(1), the service widget 904 shown in FIG. 11b(2) newly includes a control 9047 and a control 9048. In addition, the price change curve diagram shown on the control 9042 is a price change curve diagram that is of prices of the mobile phone sold in the three online retailer platforms and that is generated through the AI module based on information about price change trends of the HUAWEI mobile phone P60 sold in the three online retailer platforms in the last month. The control 9042 shown in FIG. 11a and FIG. 11b(1) only expresses a curve diagram of a price change of the HUAWEI P60 sold in Online retailer 1 and Online retailer 2 in the last month.

As shown in FIG. 11b(2), the control 9047 indicates the lowest price of the mobile phone sold in Online retailer 3 in the last month, and the control 9048 is used to start and display an application interface of the application 3 corresponding to Online retailer 3. The application interface may be a commodity details interface of the HUAWEI P60 in the application 3. This is not limited herein.

In addition, the service widget 904 shown in FIG. 11b(1) and the service widget 904 shown in FIG. 11b(2) may have differences in information such as a widget style, a widget size, and widget information.

Optionally, a size of the service widget 904 shown in FIG. 11b(2) is larger than a size of the service widget 904 shown in FIG. 11b(1), so that a height of the control 902 shown in FIG. 11b(2) is also increased, and the control 904 may be displayed above the service widget 702, to highlight information about a comparison widget (the service widget 904 herein) to which the user currently pays attention.

In this way, after the mobile phone generates the comparison widget based on the natural language entered by the user by using the AI module, when the user additionally enters a request for searching for a search object related to the comparison widget in another application, the mobile phone may update the generated comparison widget based on a related search result obtained by continuing to search for the search object in the another application by using the AI module and the search result of the search object in the newly added another application, so that the comparison widget can match a comparison request of the user.

In some embodiments, regardless of the service widget 904 generated in embodiments of FIG. 11a or FIG. 11b(1) or FIG. 11b(2), the mobile phone may provide, on the control 902, a control used to pin the service widget 904 to the home screen for display, for the user to quickly display the generated service widget 904 on the home screen by operating the control, to facilitate the user to subsequently browse comparison content of the comparison widget.

It should be understood that a type of the search object in a scenario of generating the comparison widget is not limited to an electronic product (for example, the foregoing HUAWEI mobile phone P60), and may alternatively be an object like an air ticket or a hotel. The object may be flexibly set based on a user requirement. This is not limited in this application.

In FIG. 11a to FIG. 11b(2), same reference numerals indicate same or similar objects. Therefore, reference numerals in the figures are not described one by one. For reference numerals not mentioned in the figures, refer to the explanations and descriptions of the same reference numerals mentioned in FIG. 5a(1) to FIG. 11b(2). Details are not described herein again.

### Example 6

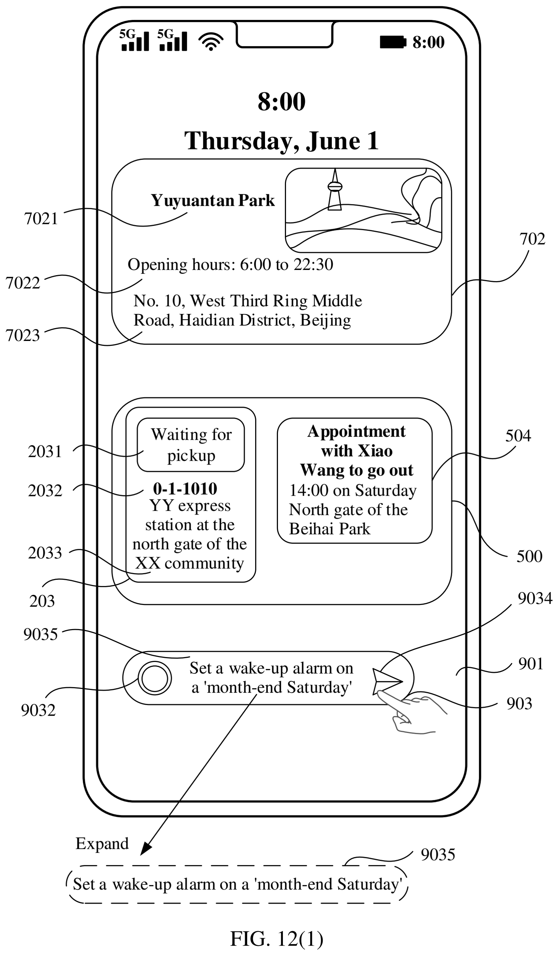

Refer to FIG. 12(1) to FIG. 12(3). With reference to FIG. 4, the mobile phone may generate service information based on a natural language (a text, a voice, or the like) related to AI, and generate a service widget for a personalized setting based on the service information. The personalized setting may be a setting option that is not provided with a setting operation interface (or a setting operation entry) in an application setting or a mobile phone system setting. In this case, the user may enter, in a natural language, a personalized setting requirement for an application or a mobile phone system to the mobile phone in a manner of a user-defined rule, so that the mobile phone may generate, by using the AI module based on the natural language, a service widget that is for a personalized setting and that meets the user-defined rule, and apply the personalized setting to the corresponding application setting, or apply the personalized setting to the system setting of the mobile phone.

In embodiments of FIG. 12(1) to FIG. 12(3), a process of performing personalized setting on a Clock application based on a natural language of the user and generating a service widget related to the personalized setting in this application is described by using an example in which the user requests to set a personalized alarm.

In a possible implementation, FIG. 12(1) to FIG. 12(3) are diagrams of an example of an application scenario.

As shown in FIG. 12(1), a display interface 901 of the mobile phone includes a plurality of controls. The plurality of controls may include but are not limited to a service widget 702, a service widget 203 and a service widget 504 that are located on a control 500, and a control 903 (for a specific function, refer to related descriptions in FIG. 11a).

As shown in FIG. 12(1), the user enters a text 9035 on the control 903. With reference to the expanded text 9035, the entered text is "Set a wake-up alarm on a 'month-end Saturday'". Then, the user taps a control 9034. In response to the user operation, the mobile phone may invoke the AI module to perform AI identification on the entered text 9035, to determine a user intention. The user intention herein is to add an alarm to the Clock application. Alarm time of the newly added alarm is the same as alarm time for waking up in the morning on a workday (for example, 7:30), and an alarm date of the newly added alarm is the last Saturday of each month starting from today.

Then, the AI module may identify, based on the user intention, a date (for example, June 24, 2023, July 29, 2023, and August 26, 2023) of a last Saturday of each month after June 1, 2023, and determine that alarm time to be set for these dates is 7:30.

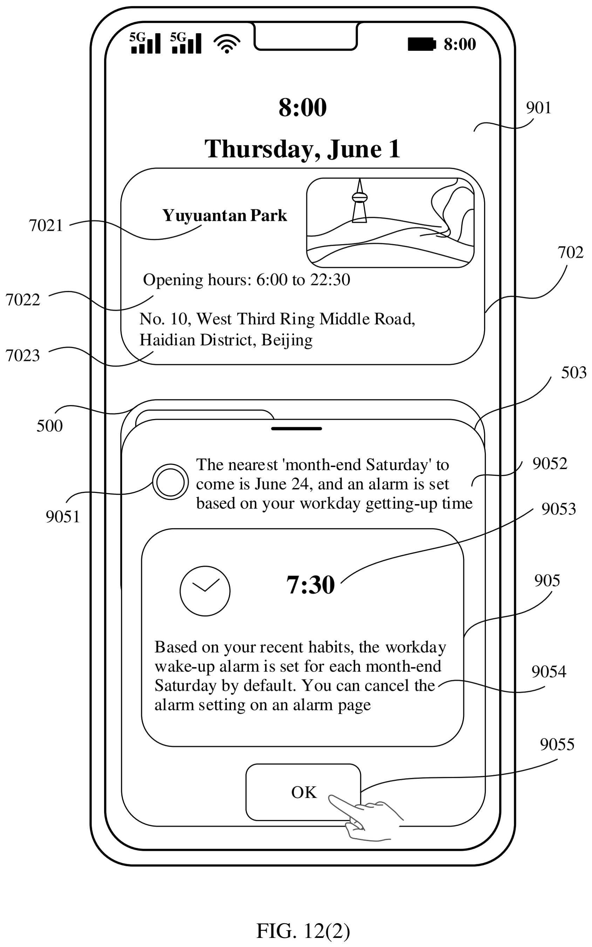

Then, the AI module may generate a service widget 905 based on information such as the identified alarm date and the alarm time, and a window 503 is displayed on a display interface 901 shown in FIG. 12(2). The window 503 may include but is not limited to a control 9051, a control 9052, a service widget 905, and a control 9055.

The control 9051 indicates that display information on the window 503 is content obtained through AI identification.

A text "The nearest 'month-end Saturday' to come is June 24, and an alarm is set based on your workday getting-up time" is displayed on the control 9052.

The control 905 may include but is not limited to a text 9053 and a text 9054.

The text 9053 indicates that to-be-set alarm time is 7:30. Text content of the text 9054 is "Based on your recent habits, the workday wake-up alarm is set for each month-end Saturday by default. You can cancel the alarm setting on an alarm page".

Then, the user taps the control 9055, and the AI module of the mobile phone may invoke the Clock application in response to the user operation, to set an alarm at 7:30 for each identified last Saturday of each month, and cancel display of the window 503.

In addition, the mobile phone may display an application interface 906 of the Clock application in response to the operation of tapping, by the user, the control 9055 shown in FIG. 12(2), or the user independently starts the Clock application to start an application interface of the Clock application. The application interface 906 may include a plurality of controls. The plurality of controls may include but are not limited to: a clock control 9061, a control 908, a control 907, a control 909, a control 910, and the like.

The clock control 9061 is a dynamic electronic clock indicating current time.

The control 910 is used to add an alarm.

The control 908, the control 907, and the control 909 all indicate an alarm that is in a started state, and functions of the control 908, the control 907, and the control 909 are similar. The control 908 is used as an example for description. The control 908 may include a control 9081, a control 9082, a control 9083, and the like. The control 9081 indicates that the alarm time is 7:30, the control 9082 indicates that the alarm date is 9082, and the control 9083 indicates that the alarm is in a started state.

Functions of a control 9071 on the control 907 and a control 9091 on the control 909 are similar to that of the control 9081 on the control 908.

Functions of a control 9072 on the control 907 and a control 9092 on the control 909 are similar to that of the control 9082 on the control 908.

Functions of a control 9073 on the control 907 and a control 9093 on the control 909 are similar to that of the control 9083 on the control 908.

The working day alarm indicated by the control 908 is a new alarm that is set in the Clock application before the user enters the text 9035 in FIG. 12(1).

As described above, the AI module identifies that the last Saturday of June 2023 is June 24. Therefore, the AI module of the mobile phone newly sets, for the Clock application, an alarm that is at 7:30 on June 24 and that is indicated by the control 907.

In addition, the AI module identifies that the last Saturday of July 2023 is July 29. Therefore, the AI module of the mobile phone newly sets, for the Clock application, an alarm that is at 7:30 on July 29 and that is indicated by the control 909.

It is considered that display space of the application interface 906 of the Clock application is insufficient to accommodate display of a control of the wake-up alarm on each month-end Saturday after June 1, 2023. The mobile phone may display only controls (for example, the control 907 and the control 909) of morning wake-up alarms on two nearest month-end Saturdays to come. A quantity of alarm controls (for example, the control 907 and the control 909) that are displayed by the mobile phone on the application interface of the Clock application and that meet the personalized setting of the user is not limited in this application, and controls of morning wake-up alarms on more than two nearest month-end Saturdays to come may alternatively be displayed in a folded manner.

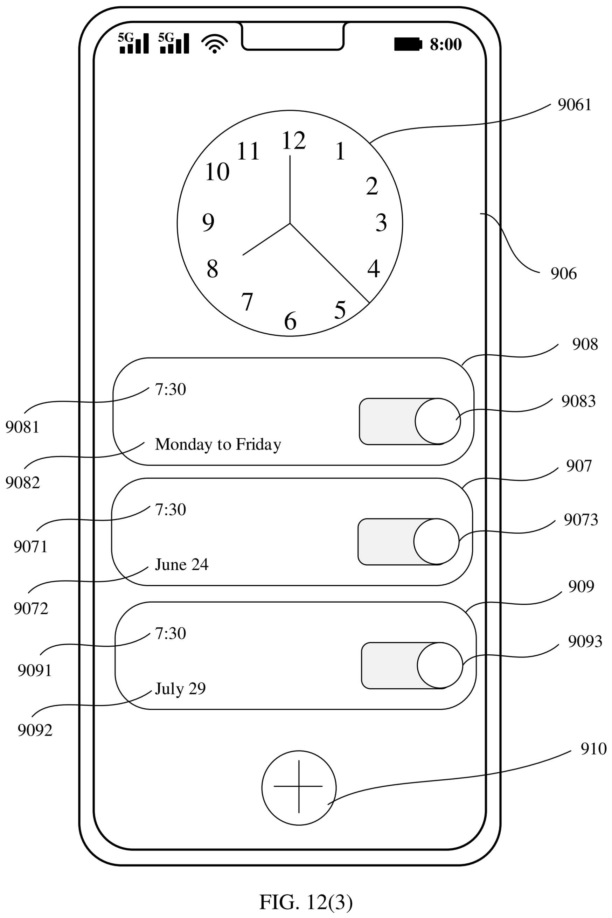

Optionally, in some embodiments, after the mobile phone sets the personalized alarm for the Clock application in response to the operation of setting the personalized alarm by the user, the mobile phone may further provide an entry for disabling the personalized alarm on an interface like a setting interface of the Clock application or a system setting interface of the mobile phone, for example, a switch option similar to the control 9073 shown in FIG. 12(3). The switch option may control enabling and disabling of the wake-up alarm on the month-end Saturday to come. In this way, when the user does not need the personalized alarm (the alarm at 7:30 on the month-end Saturday to come) that is set this time, the personalized alarm may be disabled through the foregoing switch option on the corresponding interface. The mobile phone may disable, in response to the operation performed by the user on the switch option, all personalized alarms at 7:30 on all month-end Saturdays in the Clock application, so that the control 907 and the control 909 shown in FIG. 12(3) are no longer displayed on the application interface 906.

Optionally, in FIG. 12(2), the mobile phone may also display the control 5052 shown in FIG. 7a(2) on the window 503, to provide a function of pinning the service widget 905 to the home screen interface for keeping display. It should be understood that, when the user triggers, on the display interface 901 shown in FIG. 12(2), an operation of pinning the service widget 905 to the home screen, the mobile phone may further enable, in response to the user operation, the corresponding personalized alarm to function (or take effect) in the clock setting of the Clock application, to add a wake-up alarm on each month-end Saturday.

In the foregoing embodiments of FIG. 12, a specific process of performing personalized alarm setting on the Clock application based on a natural language of the user is described by using an example in which a personalized alarm is set.

Similarly, an application that supports personalized setting is not limited to the Clock application, and may alternatively be a Call application (for example, a Phone application or a Video call application). For example, the user enters "Consecutively tap the screen of the mobile phone three times to make an emergency call" in a natural language, where the user pre-sets an emergency contact (for example, an emergency number 110, or an emergency contact of a family) in the Call application of the mobile phone. After receiving the input of the natural language, the mobile phone may perform the following personalized call setting on the Call application: Performing three consecutive tap operations on the screen of the mobile phone may trigger a call to the emergency contact. In addition, the mobile phone may further generate a service widget for the personalized call setting in response to the input of the natural language. A specific implementation process is similar to that in embodiments of FIG. 12(1) to FIG. 12(3). Details are not described herein again.

In another embodiment, the personalized setting and the method for generating the service widget of the personalized setting that are supported in this application may be further applied to a process of processing a personalized setting of a system of the mobile phone.

For example, in an incoming call setting of the system of the mobile phone, there are only options for setting ringing and vibration. However, in a scenario in which it is inconvenient to answer a call, for example, in a meeting, the user expects to flip the mobile phone downward to trigger to temporarily adjust the incoming call reminder setting to screen flashing, to avoid disturbing the meeting because an incoming call reminder of the mobile phone is ringing or vibration. When the user flips the mobile phone upward, the incoming call reminder is restored to an original setting (for example, ringing or vibration). Flipping the mobile phone downward means that the screen of the mobile phone is flipped from an upward state to a downward state, and flipping the mobile phone upward means that the screen of the mobile phone is flipped from the downward state to the upward state.

In an embodiment, the user enters "When the screen is flipped downward, enable incoming call flash reminder" in a natural language. In this case, after receiving the input of the natural language, the mobile phone may perform the following personalized setting on the system of the mobile phone by using the AI module: The operation of flipping the screen of the mobile phone downward may trigger the incoming call to be notified of in a screen flash manner. In addition, the mobile phone may further generate a service widget for the personalized setting of the system of the mobile phone in response to the input of the natural language. A specific implementation process is similar to that in embodiments of FIG. 12(1) to FIG. 12(3). Details are not described herein again.

In FIG. 12(1) to FIG. 12(3), reference numerals that are the same as those in any one of FIG. 5a(1) to FIG. 11b(2) represent same or similar objects. Therefore, reference numerals in the drawings are not described one by one, and mutual reference may be made. Details are not described herein again.

It may be understood that, to implement the foregoing functions, the electronic device includes corresponding hardware and/or software modules for performing the functions. With reference to algorithm steps in the examples described with reference to embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application with reference to embodiments, but it should not be considered that the implementation goes beyond the scope of this application.

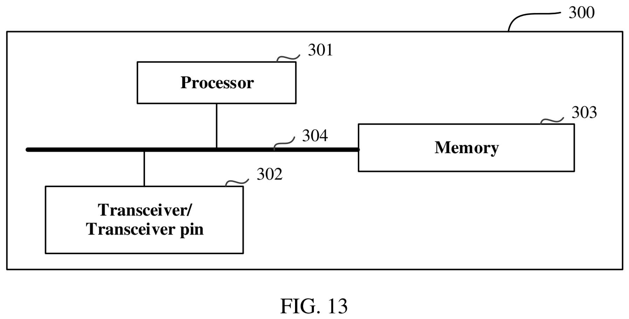

In an example, FIG. 13 is a block diagram of an apparatus 300 according to an embodiment of this application. The apparatus 300 may include a processor 301, optionally include a transceiver/transceiver pin 302, and optionally further include a memory 303.

Components of the apparatus 300 are coupled together through a bus 304. In addition to a data bus, the bus 304 includes a power bus, a control bus, and a status signal bus. However, for clarity of description, various buses are referred to as the bus 304 in the figure.

Optionally, the memory 303 may be configured to store instructions in the foregoing method embodiments. The processor 301 may be configured to: execute the instructions in the memory 303, control a receive pin to receive a signal, and control a transmit pin to send a signal.

The apparatus 300 may be the electronic device or a chip of the electronic device in the foregoing method embodiments.

All related content of the steps in the foregoing method embodiments may be cited in function descriptions of the corresponding functional modules. Details are not described herein again.

Embodiments further provide a computer storage medium. The computer storage medium stores computer instructions. When the computer instructions are executed on an electronic device, the electronic device is enabled to perform the foregoing related method steps to implement the processing method in the foregoing embodiments.

Embodiments further provide a computer program product. When the computer program product runs on a computer, the computer is enabled to perform the foregoing related steps to implement the processing method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the processing method in the foregoing method embodiments.

The electronic device, the computer storage medium, the computer program product, or the chip provided in embodiments is configured to perform the corresponding method provided above. Therefore, for beneficial effect that can be achieved, refer to beneficial effect of the corresponding method provided above. Details are not described herein again.

Based on the descriptions of the implementations, a person skilled in the art may understand that for the purpose of convenient and brief description, division into the functional modules is merely used as an example for description. In actual application, the functions may be allocated to different functional modules for completion based on a requirement. In other words, an inner structure of an apparatus is divided into different functional modules, to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division. In actual implementation, there may be another division manner. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

Any content of embodiments of this application and any content of a same embodiment may be freely combined. Any combination of the foregoing content falls within the scope of this application.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in embodiments of this application. The storage medium includes any medium that can store program code, such as a USB flash drive, a removable hard disk, a read-only memory (read-only memory, ROM), a random access memory (random access memory, RAM), a magnetic disk, or a compact disc.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

Method or algorithm steps described in combination with the content disclosed in embodiments of this application may be implemented by hardware, or may be implemented by a processor by executing software instructions. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a network device. Certainly, the processor and the storage medium may alternatively exist in a network device as discrete components.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that facilitates transmission of a computer program from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

## Claims

1. A processing method, applied to an electronic device, wherein the method comprises:
in response to a received first user operation on a first control, generating a first service widget based on the first control, wherein the first control is a movable control, and the first service widget comprises first widget information related to control content of the first control; and
displaying the first service widget.

2. The method according to claim 1, wherein displaying the first service widget comprises:
refreshing the displayed first control to the first service widget.

3. The method according to claim 1 or 2, wherein the method further comprises:
displaying the first service widget on a home screen interface in response to a received second user operation on the first service widget.

4. The method according to any one of claims 1 to 3, wherein the first widget information is further related to at least one of a user profile and a user habit.

5. The method according to any one of claims 1 to 4, wherein a control type of the first control comprises one of the following:
a notification message, a floating control, and a relay station control.

6. The method according to claim 5, wherein the control type of the first control is the notification message, and the first user operation comprises at least one of the following: a pull-down operation, a touch and hold operation, and a slide operation.

7. The method according to claim 6, wherein displaying the first service widget comprises:
displaying the first service widget in a floating manner above a second control, wherein a control type of the second control is the same as the control type of the first control.

8. The method according to claim 5, wherein the control type of the first control is the floating control or the relay station control, the first user operation comprises an operation of dragging the first control to a first location on the home screen interface, and the method further comprises:
displaying a first area on the home screen interface in response to the first user operation, wherein the first area is an area in which the first service widget is to be displayed, and the first area comprises the first location; and
displaying the first service widget comprises:
displaying the first service widget in the first area, and canceling display of the first area.

9. The method according to any one of claims 1 to 8, wherein after displaying the first service widget, the method further comprises:
switching a display interface to a first interface in response to a received third user operation, wherein
the first interface is an application interface in which the first user operation performed on the first control is received.

10. The method according to any one of claims 1 to 9, wherein the method further comprises:
in response to a received fourth user operation, separately generating respective second service widgets based on a plurality of third controls, wherein the fourth user operation comprises an operation performed on the plurality of third controls of a same control type, at least one of the third controls is a movable control, and each second service widget comprises second widget information related to control content of a corresponding third control; and
displaying the plurality of second service widgets.

11. The method according to any one of claims 1 to 10, wherein the method further comprises:
in response to a received fifth user operation on the display interface, generating a third service widget based on a context of the display interface, wherein the third service widget comprises third widget information related to the context; and
displaying the third service widget.

12. The method according to claim 11, wherein the context of the display interface comprises at least one of the following:
a session message, a selected text segment indicated by the fifth user operation, an application interface, an image, a video, and the like.

13. The method according to claim 11 or 12, wherein the third widget information is further related to at least one of the user profile and the user habit.

14. The method according to any one of claims 1 to 13, wherein the method further comprises:
generating a fourth service widget in response to a received first user input, wherein the first user input comprises information indicating to search for a same object in a plurality of first applications, the fourth service widget comprises fourth widget information related to a plurality of first search results, and the plurality of first search results are respective search results of the plurality of first applications for the same object; and
displaying the fourth service widget.

15. The method according to claim 14, wherein after displaying the fourth service widget, the method further comprises:
in response to a received second user input, refreshing the fourth widget information displayed on the fourth service widget, wherein
the second user input comprises information indicating to search for the same object in the plurality of first applications and a second application, the refreshed fourth widget information further comprises information related to a second search result, and the second search result is a search result of the second application for the same object.

16. The method according to any one of claims 1 to 15, wherein the method further comprises:
generating a fifth service widget in response to a received third user input, wherein the third user input comprises information indicating to perform a first setting on a third application or a system, and the fifth service widget comprises fifth widget information related to the first setting; and
displaying the fifth service widget.

17. The method according to claim 16, wherein after displaying the fifth service widget, the method further comprises:
configuring the first setting for the third application or the system.

18. A processing apparatus, wherein the apparatus comprises:
a first generation module, configured to: in response to a received first user operation on a first control, generate a first service widget based on the first control, wherein the first control is a movable control, and the first service widget comprises first widget information related to control content of the first control; and
a first display module, configured to display the first service widget.

19. An electronic device, comprising a memory and a processor, wherein the memory is coupled to the processor, the memory stores program instructions, and when the program instructions are executed by the processor, the electronic device is enabled to perform the processing method according to any one of claims 1 to 17.

20. A computer-readable storage medium, comprising a computer program, wherein when the computer program is run on an electronic device, the electronic device is enabled to perform the processing method according to any one of claims 1 to 17.

21. A computer program product comprising instructions, wherein when the computer program product runs on a computer, the computer is enabled to perform the processing method according to any one of claims 1 to 17.

22. A chip, comprising one or more interface circuits and one or more processors, wherein the interface circuit is configured to: receive a signal from a memory of an electronic device, and send the signal to the processor; the signal comprises computer instructions stored in the memory; and when the processor executes the computer instructions, the electronic device is enabled to perform the processing method according to any one of claims 1 to 17.
